# EUROPEAN PATENT APPLICATION

(11) **EP 4 287 712 A1**
(43) Date of publication of application: **06.12.2023**
(21) Application number: 22752202.6
(22) Date of filing: 30.01.2022
(51) Int. Cl.: H04W 48/08, H04W 36/08

(54) **NETWORK SLICE-BASED COMMUNICATION METHOD AND APPARATUS**

(30) Priority: 09.02.2021 CN 202110176172
(71) Applicant: Huawei Technologies Co., Ltd., Shenzhen, Guangdong 518129 (CN)
(72) Inventor: WANG, Yaxin, Shenzhen, Guangdong 518129 (CN); LI, Yan, Shenzhen, Guangdong 518129 (CN); ZHU, Fangyuan, Shenzhen, Guangdong 518129 (CN)
(74) Representative: Epping - Hermann - Fischer
(86) International application number: PCT/CN2022/075211
(87) International publication number: WO 2022/171041

(57) **Abstract**

This application provides a network slice-based communication method and an apparatus, to improve a success rate of accessing a network slice by a terminal, thereby improving service performance and user experience. In the method, a network device receives, via a first access network device in a first network, information about a network slice that a terminal requests to access, determines a network slice that the terminal is allowed to access and a registration area, and sends information about the registration area to the terminal. The information about the network slice that the terminal requests to access includes identification information of a first network slice not supported by a first tracking area and includes identification information of a second network slice; a second tracking area in the first network supports the first network slice, and the network slice that the terminal is allowed to access includes the second network slice; and the registration area excludes a tracking area that supports the first network slice and the second network slice, or excludes a tracking area of an access network device that supports the first network slice and the second network slice.

## Description

This application claims priority to Chinese Patent Application No. 202110176172.4, filed with the China National Intellectual Property Administration on February 09, 2021 and entitled "NETWORK SLICE-BASED COMMUNICATION METHOD AND APPARATUS", which is incorporated herein by reference in its entirety.

### TECHNICAL FIELD

This application relates to the communications field, and in particular, to a network slice-based communication method and an apparatus.

### BACKGROUND

A network slicing technology provides mutually isolated network environments for different application scenarios in a manner of virtualizing independent logical networks on a same network infrastructure, so that network functions and features of the different application scenarios can be customized based on respective requirements, and quality of service (QoS) requirements of different services can be effectively ensured. Generally, a network slice is identified by single network slice selection assistance information (S-NSSAI), and network slice selection assistance information (NSSAI) is a set of S-NSSAI.

A capability of a radio access network (RAN) to support a network slice is divided by using a tracking area (TA) as a granularity. One TA may support one or more network slices, and cells in a same TA may support a same network slice.

When network slices are deployed, a network slice may be selected in a registration procedure. For example, a core network sends allowed NSSAI to a terminal based on NSSAI requested by the terminal, subscription data of the terminal, a network slice supported by a TA in which the terminal is currently located, and the like. The allowed NSSAI is NSSAI that can be accessed by the terminal.

However, in actual application, the following scenario may exist: In a registration procedure, because a TA in which a terminal is currently located does not support a network slice that the terminal intends to access, the terminal does not access the network slice in this registration procedure. Subsequently, even if the terminal moves to a TA that supports the network slice, the terminal may still be unable to normally access the network slice.

### SUMMARY

This application provides a network slice-based communication method and an apparatus, to improve a success rate of accessing a network slice by a terminal, thereby improving service performance and user experience.

To achieve the foregoing objectives, the following technical solutions are used in this application: According to a first aspect, a network slice-based communication method is provided. The method may be performed by a network device, or may be performed by a component of a network device, for example, a processor, a chip, or a chip system of the network device. In this application, an example in which the network device performs the method is used for description.

The method includes: The network device receives, via a first access network device in a first network, information about a network slice that a terminal requests to access, determines a network slice that the terminal is allowed to access and a registration area, and sends information about the registration area to the terminal. The information about the network slice that the terminal requests to access includes identification information of a first network slice not supported by a first tracking area and includes identification information of a second network slice; a second tracking area in the first network supports the first network slice, and the network slice that the terminal is allowed to access includes the second network slice; and the registration area excludes a tracking area that supports the first network slice and the second network slice, or excludes a tracking area of an access network device that supports the first network slice and the second network slice. Based on this solution, when determining the registration area, the network device excludes the tracking area that supports the first network slice and the second network slice, or excludes the tracking area of the access network device that supports the first network slice and the second network slice. Therefore, when the terminal moves within the excluded tracking area, because the registration area of the terminal does not include the tracking area, and the tracking area supports the first network slice, the terminal may re-initiate a registration procedure to request to access the first network slice, to increase a success rate of accessing the first network slice, thereby improving service performance and user experience.

In some possible designs, the method further includes: The network device determines a network slice that the terminal is rejected to access, where the network slice that the terminal is rejected to access includes the first network slice.

Based on this possible design, when determining the registration area, the network device may exclude a tracking area that supports the network slice that the terminal is rejected to access, or exclude a tracking area of an access network device that supports the network slice that the terminal is rejected to access.

According to a second aspect, a network slice-based communication method is provided. The method may be performed by a network device, or may be performed by a component of a network device, for example, a processor, a chip, or a chip system of the network device. In this application, an example in which the network device performs the method is used for description. The method includes: The network device determines a network slice that a terminal is allowed to access and a network slice that the terminal is rejected to access, determines a registration area of the terminal based on the network slice that the terminal is allowed to access and the network slice that the terminal is rejected to access, and sends information about the registration area to the terminal. Based on this solution, the network device may determine the registration area of the terminal based on the network slice that the terminal is allowed to access and the network slice that the terminal is rejected to access, to consider that tracking area supporting the network slice that the terminal is rejected to access is excluded from the registration area. For example, the registration area excludes a tracking area that supports the network slice that the terminal is rejected to access, or a tracking area of an access network device that supports the network slice that the terminal is rejected to access. Therefore, when the terminal moves within the excluded tracking area, because the registration area of the terminal does not include the tracking area, and the tracking area supports the first network slice, the terminal may re-initiate a registration procedure to request to access the first network slice, to increase a success rate of accessing the first network slice, thereby improving service performance and user experience.

In some possible designs, the method further includes: The network device receives, via a first access network device in a first network, information about a network slice that a terminal requests to access. The information about the network slice that the terminal requests to access includes identification information of a first network slice not supported by a first tracking area and includes identification information of a second network slice supported by the first tracking area, and the first tracking area is a tracking area of the first access network device. The network slice that the terminal is allowed to access includes the second network slice, and the network slice that the terminal is rejected to access includes the first network slice; and the registration area excludes a tracking area that supports the first network slice and the second network slice, or the registration area excludes a tracking area of an access network device that supports the first network slice and the second network slice.

With reference to the first aspect or the second aspect, in some possible designs, the first network slice is a network slice that the terminal is allowed to access in the first network.

With reference to the first aspect or the second aspect, in some possible designs, the method further includes: The network device determines a network slice supported by the tracking area of the first access network device.

According to a third aspect, a network slice-based communication method is provided. The method may be performed by a network device, or may be performed by a component of a network device, for example, a processor, a chip, or a chip system of the network device. In this application, an example in which the network device performs the method is used for description. The method includes: The network device determines a first network slice, where the first network slice does not belong to a network slice that a terminal is allowed to access in a first cell, and a registration area of the terminal includes the first cell and a second cell; and the network device determines, when the terminal is handed over from the first cell to the second cell, that the first network slice is available in the second cell, and notifies the terminal that the first network slice is available in the second cell.

In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the second cell, because of initiating no registration procedure in the second cell, the terminal still cannot access the first network slice in the second cell. Based on this solution, when the terminal is handed over from the first cell to the second cell, and it is determined that the first network slice is available in the second cell, the network device notifies the terminal that the first network slice is available in the second cell, so that when still intending to access the first network slice, the terminal may initiate a registration procedure to request to access the first network slice, thereby improving a success rate of accessing the first network slice, and further improving service performance and user experience.

In some possible designs, when the second cell belongs to the second access network device, a target access network device is the second access network device; or when the second cell belongs to the first access network device, a target access network device is the first access network device. The first cell belongs to the first access network device. Therefore, it may be understood that the second cell belongs to the second access network device (that is, the first cell and the second cell belong to different access network devices) to correspond to an inter-eNodeB handover scenario; or the second cell belongs to the first access network device (that is, the first cell and the second cell belong to a same access network device) to correspond to an intra-eNodeB handover scenario. This is also applicable to a design in another aspect of this application, and details are not described below again. Based on this possible design, in either the intra-eNodeB handover scenario or the inter-eNodeB handover scenario, a success rate of accessing the first network slice can be improved.

In some possible designs, when the network device is a mobility management device, that the network device determines that the first network slice is available in the second cell includes: The network device queries a context of the target access network device, where the context of the target access network device indicates that a tracking area of the target access network device supports the first network slice, where the second cell is a cell in the tracking area of the target access network device. Based on this possible design, the network device may determine, through the locally stored context of the target access network device, that the first network slice is available in the second cell, and does not need to interact with another device, thereby reducing signaling overheads.

In some possible designs, when the network device is a mobility management device, that the network device determines that the first network slice is available in the second cell includes: The network device sends identification information of the first network slice to the target access network device, and learns, from the target access network device, that the first network slice can access the terminal in the second cell.

In some possible designs, when the network device is a mobility management device, and the second cell belongs to the second access network device, that the network device determines that the first network slice is available in the second cell includes: The network device determines, when receiving a path switch request message from the second access network device, that the first network slice is available in the second cell; or the network device determines, when receiving a handover required message from the first access network device, that the first network slice is available in the second cell, where the handover required message includes an identifier of the second access network device.

Based on this possible design, the network device may confirm, to a target network device, whether the terminal can access the first network slice supported by the tracking area of the target access network device, to prevent the network device from notifying, when the target access network device supports the first network slice but the terminal cannot access the first network slice in the second cell, the terminal that the first network slice is available in the second cell, thereby improving a success rate of accessing the first network slice by the terminal in the second cell.

In some possible designs, when the network device is a mobility management device, the method further includes: The network device stores the identification information of the first network slice; the network device receives indication information from the terminal after the network device notifies the terminal that the first network slice is available in the second cell; and the network device deletes the identification information of the first network slice based on the indication information.

In some possible designs, when the network device is a mobility management device, the indication information indicates that the terminal no longer requests to access the first network slice.

Based on the foregoing two possible designs, when the indication information indicates that the terminal no longer requests to access the first network slice, the network device deletes the identification information of the first network slice. When subsequently serving the terminal, the network device may no longer notify the terminal of a cell that can access the first network slice, thereby reducing signaling overheads and reducing resource waste.

In some possible designs, when the second cell belongs to the second access network device, the network device is the second access network device; or when the second cell belongs to the first access network device, the network device is the first access network device. Based on this possible design, in either the intra-eNodeB handover scenario or the inter-eNodeB handover scenario, a success rate of accessing the first network slice can be improved.

In some possible designs, when the second cell belongs to the first access network device, that the network device determines the first network slice includes: The network device sends, to a mobility management device, information about a network slice that the terminal requests to access, where the information about the network slice that the terminal requests to access includes identification information of the first network slice; and the network device learns, from the mobility management device, that the first network slice does not belong to a network slice that the terminal is allowed to access in the first cell. In other words, the network device may learn, from the mobility management device in the registration procedure, that the first network slice does not belong to the network slice that the terminal is allowed to access in the first cell. This is also applicable to a design in another aspect of this application, and details are not described below again.

In some possible designs, when the second cell belongs to the second access network device, that the network device determines the first network slice includes: When the terminal is handed over from the first access network device to the second access network device, the network device learns, from the mobility management device, that the first network slice does not belong to the network slice that the terminal is allowed to access in the first cell. In other words, in the inter-eNodeB handover scenario, the network device may learn, from the mobility management device, that the first network slice does not belong to the network slice that the terminal is allowed to access in the first cell. This is also applicable to a design in another aspect of this application, and details are not described below again.

In some possible designs, that the network device determines that the first network slice is available in the second cell includes: The network device determines that the first network slice can access the terminal in the second cell.

According to a fourth aspect, a network slice-based communication method is provided. The method may be performed by a network device, or may be performed by a component of a network device, for example, a processor, a chip, or a chip system of the network device. In this application, an example in which the network device performs the method is used for description. The method includes: The network device determines a first network slice, where the first network slice does not belong to a network slice that a terminal is allowed to access in a first cell, and a registration area of the terminal includes the first cell and a second cell; and the network device determines, when the terminal is handed over from the first cell to the second cell, that the first network slice is available in the third cell, and notifies the terminal that the first network slice is available in the third cell, where physical coverage of the third cell partially or completely overlaps physical coverage of the second cell.

In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the third cell whose physical coverage is the same as that of the second cell, because of initiating no registration procedure again in the second cell, the terminal still cannot access the first network slice in a location of the second cell. Based on this solution, when the terminal is handed over from the first cell to the second cell, and it is determined that the first network slice is available in the third cell, the terminal is notified that the first network slice is available in the third cell, so that when still intending to access the first network slice, the terminal may access the first network slice in the third cell, thereby improving a success rate of accessing the first network slice, and further improving service performance and user experience. In some possible designs, when the second cell belongs to the second access network device, a target access network device is the second access network device; or when the second cell belongs to the first access network device, a target access network device is the first access network device. Based on this possible design, in either the intra-eNodeB handover scenario or the inter-eNodeB handover scenario, a success rate of accessing the first network slice can be improved.

In some possible designs, when the network device is a mobility management device, that the network device determines that the first network slice is available in the third cell includes: The network device queries a context of the target access network device, where the context of the target access network device indicates that a tracking area in which the third cell is located supports the first network slice but a tracking area in which the second cell is located does not support the first network slice, where the second cell and the third cell are cells of the target access network device. Based on this possible design, the network device may determine, through the locally stored context of the target access network device, that the first network slice is available in the third cell, and does not need to interact with another device, thereby reducing signaling overheads. In some possible designs, when the network device is a mobility management device, that the network device determines that the first network slice is available in the third cell includes: The network device sends identification information of the first network slice to the target access network device, and learns, from the target access network device, that the first network slice can access the terminal in the third cell.

Based on this possible design, the network device may confirm, to a target network device, whether the terminal can access the first network slice supported by the tracking area of the target access network device, to prevent the network device from notifying, when the target access network device supports the first network slice but the terminal cannot access the first network slice in the third cell, the terminal that the first network slice is available in the third cell, thereby improving a success rate of accessing the first network slice by the terminal in the third cell.

With reference to the third aspect or the fourth aspect, in some possible designs, when the network device is a mobility management device, that the network device determines the first network slice includes: The network device receives, via the first cell, information about a network slice that the terminal requests to access, where the information about the network slice that the terminal requests to access includes identification information of the first network slice; and the network device determines a network slice that the terminal is allowed to access, and learns that the first network slice does not belong to the network slice that the terminal is allowed to access in the first cell.

With reference to the third aspect or the fourth aspect, in some possible designs, the first network slice is included in a network slice configured by the terminal for a first network. In other words, the network device may perform the foregoing method for the first network slice that does not belong to the network slice that the terminal is allowed to access in the first cell but is included in the network slice configured by the terminal for the first network. That is to say, regardless of whether the network slice that the terminal requests to access carries the identifier of the first network slice, because the first network slice is included in the network slice configured by the terminal for the first network, the terminal may subsequently intend to access the first network slice. In this case, when intending to access the first network slice, the terminal may access the first network slice in the second cell or the third cell, thereby improving a success rate of accessing the first network slice. This is also applicable to a design in another aspect of this application, and details are not described below again.

With reference to the third aspect or the fourth aspect, in some possible designs, the first network slice is included in a network slice that the terminal requests to access in the first cell.

With reference to the third aspect or the fourth aspect, in some possible designs, the first cell belongs to a first access network device, and the second cell belongs to a second access network device; or the first cell and the second cell belong to a first access network device.

According to a fifth aspect, a network slice-based communication method is provided. The method may be performed by a network device, or may be performed by a component of a network device, for example, a processor, a chip, or a chip system of the network device. In this application, an example in which the network device performs the method is used for description. The method includes: The network device determines a first network slice, where the first network slice does not belong to a network slice that a terminal is allowed to access in a first cell, and a registration area of the terminal includes the first cell and a second cell; and the network device determines that the first network slice is available in the second cell, notifies the terminal that the first network slice is available in the second cell; and sends a cell identifier of the second cell to the terminal. In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the second cell, because of initiating no registration procedure in the second cell, the terminal still cannot access the first network slice in the second cell. Based on this solution, when determining that the first network slice is available in the second cell, the network device notifies the terminal that the first network slice is available in the second cell, and sends the cell identifier of the second cell, so that when still intending to access the first network slice, the terminal may access the second cell, and initiate a registration procedure to request to access the first network slice, thereby improving a success rate of accessing the first network slice, and further improving service performance and user experience.

In some possible designs, that the network device determines that the first network slice is available in the second cell includes: The network device receives the cell identifier of the second cell from a first access network device, where the second cell is a neighboring cell of the first cell, and the network device determines that the first network slice can access the terminal in the second cell.

In some possible designs, that the network device determines that the first network slice is available in the second cell includes: The network device receives signal quality information of a neighboring cell of the first cell from a first access network device, where the neighboring cell of the first cell includes the second cell; and the network device determines, based on the signal quality information of the second cell, that the first network slice can access the terminal in the second cell.

In some possible designs, the method further includes: The network device stores the identification information of the first network slice; the network device receives indication information from the terminal after the network device notifies the terminal that the first network slice is available in the second cell, and deletes the identification information of the first network slice based on the indication information.

In some possible designs, the indication information indicates that the terminal no longer requests to access the first network slice.

Based on the foregoing two possible designs, when the indication information indicates that the terminal no longer requests to access the first network slice, the network device deletes the identification information of the first network slice. When subsequently serving the terminal, the network device may no longer notify the terminal of a cell that can access the first network slice, thereby reducing signaling overheads and reducing resource waste.

According to a sixth aspect, a network slice-based communication method is provided. The method may be performed by a network device, or may be performed by a component of a network device, for example, a processor, a chip, or a chip system of the network device. In this application, an example in which the network device performs the method is used for description. The method includes: The network device determines a first network slice, where the first network slice does not belong to a network slice that a terminal is allowed to access in a first cell, and a registration area of the terminal includes the first cell and a second cell; and the network device determines that the first network slice is available in the third cell, notifies the terminal that the first network slice is available in the third cell, and sends a cell identifier of the third cell to the terminal, where physical coverage of the third cell partially or completely overlaps physical coverage of the second cell.

In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the third cell whose physical coverage is the same as that of the second cell, because of initiating no registration procedure again in the second cell, the terminal still cannot access the first network slice in a location of the second cell. Based on this solution, when the neighboring cell of the first cell accessed by the terminal includes the second cell, and the third cell whose physical coverage is the same as that of the second cell exists, when determining that the first network slice is available in the third cell, the network device notifies the terminal that the first network slice is available in the third cell, and sends the cell identifier of the third cell, so that when still intending to access the first network slice, the terminal may access the third cell and request to access the first network slice, thereby improving a success rate of accessing the first network slice, and further improving service performance and user experience.

With reference to the fifth aspect or the sixth aspect, in some possible designs, the first network slice is included in a network slice configured for the terminal in a first network.

With reference to the fifth aspect or the sixth aspect, in some possible designs, the first network slice is included in a network slice that the terminal requests to access in the first cell.

With reference to the fifth aspect or the sixth aspect, in some possible designs, that the network device determines the first network slice includes: The network device receives, via the first cell, information about a network slice that the terminal requests to access, where the information about the network slice that the terminal requests to access includes identification information of the first network slice; and the network device determines a network slice that the terminal is allowed to access, and learns that the first network slice does not belong to the network slice that the terminal is allowed to access in the first cell.

With reference to the fifth aspect or the sixth aspect, in some possible designs, the method further includes: The network device sends reference frequency information corresponding to the first network slice to the first access network device.

According to a seventh aspect, a network slice-based communication method is provided. The method may be performed by a terminal, or may be performed by a component of a terminal, for example, a processor, a chip, or a chip system of the terminal. In this application, an example in which the terminal performs the method is used for description. The method includes: The terminal learns, from a network device, that a first network slice is available in a second cell, and initiates a registration procedure for an application corresponding to the first network slice. The first network slice does not belong to a network slice that the terminal is allowed to access in a first cell, and a registration area of the terminal includes the first cell and the second cell.

In the current technology, because the first network slice does not belong to the network slice that the terminal is allowed to access in the first cell, the terminal cannot access the first network slice in the first cell. Because the registration area of the terminal includes the first cell and the second cell, even if the terminal moves from the first cell to coverage of the second cell, the terminal still does not re-initiate a registration procedure, and therefore does not request to access the first network slice. Based on this solution, the terminal may learn, from the network device, that the first network slice is available in the second cell, and therefore may initiate, when an application of the terminal corresponds to the first network slice, a registration procedure for the application to request to access the first network slice, thereby improving a success rate of accessing the first network slice, and further improving service performance and user experience.

In some possible designs, the first network slice is included in a configured for the terminal in a first network.

In some possible designs, the first network slice is included in a network slice that the terminal requests to access in the first cell.

In some possible designs, the method further includes: The terminal receives a cell identifier from the network device, where the cell identifier is used for the second cell.

In some possible designs, that the terminal initiates the registration procedure for the application corresponding to the first network slice includes: The terminal accesses the second cell, and initiates a registration procedure for the application via the second cell.

In some possible designs, that the terminal initiates the registration procedure for the application corresponding to the first network slice includes: The terminal determines whether the first network slice is a network slice corresponding to the application in response to that a context of the terminal does not include a session used for the application and does not include a route selection policy used for the application; and the terminal initiates the registration procedure for the application when the first network slice is the network slice corresponding to the application. In some possible designs, the method further includes: The terminal notifies the network device that the terminal no longer requests to access the first network slice. Based on this possible design, when the terminal notifies the network device that the terminal no longer requests to access the first network slice, the network device may delete identification information of the first network slice stored in the network device. When subsequently serving the terminal, the network device may no longer notify the terminal of a cell that can access the first network slice, thereby reducing signaling overheads and reducing resource waste.

In some possible designs, that the terminal notifies the network device that the terminal no longer requests to access the first network slice includes: After first duration starting from a first moment, the terminal notifies the network device that the terminal no longer requests to access the first network slice, where the first moment is a moment at which the terminal learns, from the network device, that the first network slice is available in the second cell.

According to an eighth aspect, a communication apparatus is provided, to implement the foregoing methods. The communication apparatus may be the network device in the first aspect to the sixth aspect, an apparatus including the network device, or an apparatus included in the network device, for example, a chip; or the communication apparatus may be the terminal in the seventh aspect, an apparatus including the terminal, or an apparatus included in the terminal, for example, a chip. The communication apparatus includes a corresponding module, unit, or means for implementing the foregoing method. The module, unit, or means may be implemented by hardware, software, or hardware executing corresponding software. The hardware or the software includes one or more modules or units corresponding to the functions.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects. In some possible designs, the transceiver module includes a sending module and a receiving module, respectively configured to implement the sending function and the receiving function in any one of the foregoing aspects and any one of the possible implementations of the foregoing aspects.

The communication apparatus provided in the eighth aspect is configured to perform any one of the foregoing aspects or any one of the possible implementations of the foregoing aspects. For specific details, refer to any one of the foregoing aspects or any one of the possible implementations of the foregoing aspects. Details are not described herein again.

According to a ninth aspect, a communication apparatus is provided, including a processor and a memory. The memory is configured to store computer instructions. When the processor executes the instructions, the communication apparatus is enabled to perform the method according to any one of the foregoing aspects. The communication apparatus may be the network device in the first aspect to the sixth aspect, an apparatus including the network device, or an apparatus included in the network device, for example, a chip; or the communication apparatus may be the terminal in the seventh aspect, an apparatus including the terminal, or an apparatus included in the terminal, for example, a chip.

According to a tenth aspect, a communication apparatus is provided, including a processor and a communication interface. The communication interface is configured to communicate with a module other than the communication apparatus; and the processor is configured to execute a computer program or instructions, to enable the communication apparatus to perform the method according to any one of the foregoing aspects. The communication apparatus may be the network device in the first aspect to the sixth aspect, an apparatus including the network device, or an apparatus included in the network device, for example, a chip; or the communication apparatus may be the terminal in the seventh aspect, an apparatus including the terminal, or an apparatus included in the terminal, for example, a chip.

According to an eleventh aspect, a communication apparatus is provided, including an interface circuit and a logic circuit. The interface circuit is configured to obtain input information and/or output output information; and the logic circuit is configured to perform the method according to any one of the foregoing aspects or any one of the possible implementations of the foregoing aspects, to perform processing based on input information and/or generate output information. The communication apparatus may be the network device in the first aspect to the sixth aspect, an apparatus including the network device, or an apparatus included in the network device, for example, a chip; or the communication apparatus may be the terminal in the seventh aspect, an apparatus including the terminal, or an apparatus included in the terminal, for example, a chip. When the communication apparatus is the network device in the first aspect or the second aspect, an apparatus including the network device, or an apparatus included in the network device:
In some possible designs, the input information may be information about a network slice that the terminal requests to access, where the information about the network slice that the terminal requests to access includes identification information of a first network slice not supported by a first tracking area and includes identification information of a second network slice. The performing processing based on input information may be: determining a network slice that the terminal is allowed to access, or determining a registration area.

In some possible designs, the output information may be information about a registration area, where the registration area excludes a tracking area that supports the first network slice and the second network slice, or the registration area excludes a tracking area of an access network device that supports the first network slice and the second network slice.

When the communication apparatus is the network device in the third aspect, an apparatus including the network device, or an apparatus included in the network device:
In some possible designs, the output information may be information for notifying the terminal that the first network slice is available in the second cell.

In some possible designs, the input information may be information about a network slice that the terminal requests to access, where the information about the network slice that the terminal requests to access includes identification information of the first network slice. The performing processing based on input information may be: determining a network slice that the terminal is allowed to access, or determining that the first network slice does not belong to a network slice that the terminal is allowed to access in the first cell.

In some possible designs, the output information may be: identification information of the first network slice.

In some possible designs, the input information may be information used by the network device to learn that the first network slice can access the terminal in the second cell. The performing processing based on input information may be: learning that the first network slice can access the terminal in the second cell.

In some possible designs, the input information may be: a path switch request message. The performing processing based on input information may be: determining that the first network slice is available in the second cell.

In some possible designs, the input information may be: a handover required message. The performing processing based on input information may be: determining that the first network slice is available in the second cell.

In some possible designs, the input information may be: indication information. The performing processing based on input information may be: deleting the identification information of the first network slice based on the indication information.

When the communication apparatus is the network device in the fifth aspect, an apparatus including the network device, or an apparatus included in the network device: In some possible designs, the output information may be information for notifying the terminal that the first network slice is available in the second cell, and a cell identifier of the second cell.

In some possible designs, the input information may be information about a network slice that the terminal requests to access, where the information about the network slice that the terminal requests to access includes identification information of the first network slice. The performing processing based on input information may be: determining a network slice that the terminal is allowed to access, and learning that the first network slice does not belong to a network slice that the terminal is allowed to access in the first cell.

In some possible designs, the input information may be: a cell identifier of the second cell. The performing processing based on input information may be: determining that the first network slice is available in the second cell.

In some possible designs, the input information may be: signal quality information of a neighboring cell of the first cell, where the neighboring cell of the first cell includes the second cell. The performing processing based on input information may be: determining, based on the signal quality information of the second cell, that the first network slice can access the terminal in the second cell.

In some possible designs, the output information may be: reference frequency information corresponding to the first network slice.

In some possible designs, the input information may be: indication information. The performing processing based on input information may be: deleting the identification information of the first network slice based on the indication information.

When the communication apparatus may be the terminal in the seventh aspect, an apparatus including the terminal, or an apparatus included in the terminal:
In some possible designs, the input information may be information for learning that the first network slice is available in the second cell. The performing processing based on input information may be: initiating a registration procedure for an application corresponding to the first network slice.

In some possible designs, the input information may be: a cell identifier, where the cell identifier is used for the second cell. The performing processing based on input information may be: accessing the second cell.

In some possible designs, the output information may be information for notifying that the terminal no longer requests to access the first network slice.

According to a twelfth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the network device in the first aspect to the sixth aspect, an apparatus including the network device, or an apparatus included in the network device, for example, a chip; or the communication apparatus may be the terminal in the seventh aspect, an apparatus including the terminal, or an apparatus included in the terminal, for example, a chip. According to a thirteenth aspect, a computer-readable storage medium is provided. The computer-readable storage medium stores instructions, and when the instructions are run on a communication apparatus, the communication apparatus is enabled to perform the method according to any one of the foregoing aspects.

According to a fourteenth aspect, a computer program product including instructions is provided. When the computer program product is run on a communication apparatus, the communication apparatus is enabled to perform the method according to any one of the foregoing aspects. According to a fifteenth aspect, a communication apparatus (for example, the communication apparatus may be a chip or a chip system) is provided. The communication apparatus includes a processor, configured to implement the function in any one of the foregoing aspects.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that when the communication apparatus provided in any one of the eighth aspect to the fifteenth aspect is the chip, the foregoing sending action/function may be understood as the output information, and the foregoing receiving action/function may be understood as the input information.

For technical effects brought by any design manner in the eighth aspect to the fifteenth aspect, refer to technical effects brought by different design manners in the first aspect to the seventh aspect. Details are not described herein again.

According to a sixteenth aspect, a communication system is provided. The communication system includes the network device and the terminal according to the foregoing aspects.

### BRIEF DESCRIPTION OF DRAWINGS

FIG. 1 is a schematic diagram of a 5G network architecture according to this application;
FIG. 2 is a schematic diagram of an application scenario of a network slice according to this application;
FIG. 3 is a schematic diagram of a network slice supported by an access network device according to this application;
FIG. 4 is a schematic diagram of a registration procedure according to this application;
FIG. 5 is a schematic diagram of a redirection procedure according to this application;
FIG. 6 is a schematic flowchart of Xn handover according to this application;
FIG. 7 is a schematic flowchart of N2 handover according to this application;
FIG. 8a is a schematic diagram of a scenario according to this application;
FIG. 8b is a schematic diagram of a scenario according to this application;
FIG. 8c is a schematic diagram of a scenario according to this application;
FIG. 9a is a schematic diagram of a structure of a communication system according to this application;
FIG. 9b is a schematic diagram of a structure of another communication system according to this application;
FIG. 9c is a schematic diagram of a structure of another communication system according to this application;
FIG. 10 is a schematic diagram of a structure of a communication device according to this application;
FIG. 11 is a schematic flowchart of a network slice-based communication method according to this application;
FIG. 12 is a schematic flowchart of a network slice-based communication method according to this application;
FIG. 13 is a schematic flowchart of a network slice-based communication method according to this application;
FIG. 14 is a schematic flowchart of a network slice-based communication method according to this application;
FIG. 15 is a schematic flowchart of a network slice-based communication method according to this application;
FIG. 16 is a schematic flowchart of a network slice-based communication method according to this application;
FIG. 17 is a schematic flowchart of a network slice-based communication method according to this application;
FIG. 18 is a schematic flowchart of a network slice-based communication method according to this application;
FIG. 19 is a schematic interaction flowchart of a network slice-based communication method according to this application;
FIG. 20 is a schematic interaction flowchart of a network slice-based communication method according to this application;
FIG. 21 is a schematic interaction flowchart of a network slice-based communication method according to this application;
FIG. 22 is a schematic interaction flowchart of a network slice-based communication method according to this application;
FIG. 23 is a schematic interaction flowchart of a network slice-based communication method according to this application;
FIG. 24 is a schematic interaction flowchart of a network slice-based communication method according to this application;
FIG. 25 is a schematic interaction flowchart of a network slice-based communication method according to this application;
FIG. 26 is a schematic interaction flowchart of a network slice-based communication method according to this application;
FIG. 27 is a schematic interaction flowchart of a network slice-based communication method according to this application;
FIG. 28 is a schematic interaction flowchart of a network slice-based communication method according to this application;
FIG. 29 is a schematic interaction flowchart of a network slice-based communication method according to this application;
FIG. 30 is a schematic interaction flowchart of a network slice-based communication method according to this application;
FIG. 31 is a schematic diagram of a structure of a network device according to this application;
FIG. 32 is a schematic diagram of a structure of a terminal according to this application; and
FIG. 33 is a schematic diagram of a structure of a communication apparatus according to this application.

### DESCRIPTION OF EMBODIMENTS

In the description of this application, unless otherwise specified, "/" indicates that associated objects are in an "or" relationship. For example, A/B may represent A or B. "and/or" in this application is merely an association relationship for describing an associated object, and indicates that three relationships may exist. For example, A and/or B may represent that only A exists, both A and B exist, and only B exists, where A and B may be singular or plural. In addition, in the descriptions of this application, unless otherwise specified, "a plurality of" means two or more than two. "At least one of the following items (pieces)" or similar expressions refer to any combination of these items, including any combination of singular items (pieces) or plural items (pieces). For example, at least one of a, b, or c may represent: a, b, c, a and b, a and c, b and c, and a and b and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that in this application, the terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a relative concept in a specific manner.

To facilitate understanding of the technical solutions in embodiments of this application, the following briefly describes related technologies in this application.

### 1. 5th generation (5G) network architecture:

A 5G network architecture defined in the 3rd Generation Partnership Project (3GPP) TS 23.501 standard is mainly divided into two parts: an access network (AN) and a core network.

The access network may include a radio access network (RAN), and is configured to implement a function related to radio access.

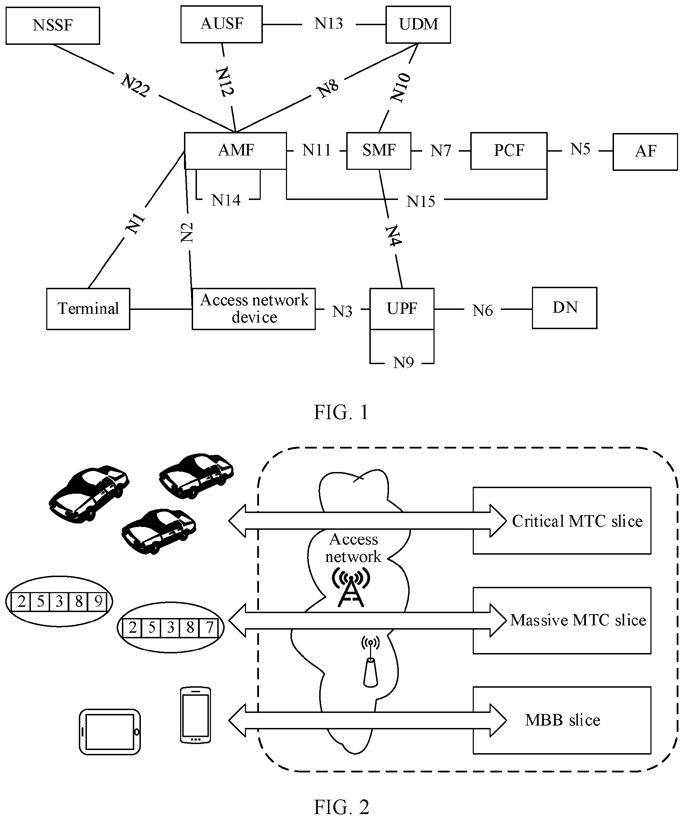

The core network mainly includes the following key logical network elements: an access and mobility management function (AMF) network element, a session management function (SMF) network element, a user plane function (UPF) network element, a policy control function network element, and a unified data management (UDM) network element; and may additionally further include an authentication server function (AUSF) network element, a network slice selection function (NSSF) network element, an application function (AF) network element, and the like. FIG. 1 is a schematic diagram of a 5G network architecture. A terminal may be user equipment (UE), for example, a mobile phone or an Internet of Things terminal.

DN is a data network (DN), and is mainly configured to provide a data transmission service for a user, for example, an Internet Protocol (IP) multimedia service (IMS).

Access network devices that provide radio access for the user is deployed in the RAN, and include but are not limited to an evolved NodeB (NodeB, eNB, or e-NodeB, evolved NodeB), wireless fidelity (Wi-Fi) access point (AP), and the like.

An AMF network element is mainly responsible for mobility management in a mobile network, such as user location update, user network registration, and user handover.

An SMF network element is mainly responsible for session management in the mobile network, for example, session establishment, modification, and release. Specific functions include allocating an IP address to the user, selecting a UPF that provides a packet forwarding function, and the like.

A PCF network element is mainly responsible for providing policies such as a quality of service (QoS) policy and a slice selection policy for the AMF and the SMF.

A UDM network element is mainly responsible for storing user data such as subscription information and authentication/authorization information.

An AF network element is mainly responsible for providing service requirements for a 3GPP network, for example, affecting a service route and interacting with the PCF network element to perform policy control.

A UPF network element is mainly responsible for processing, for example, forwarding and charging a user packet.

The terminal accesses the DN by establishing a protocol data unit (PDU) session from the terminal to the RAN, the UPF, and the DN.

An AUSF network element is mainly responsible for providing a terminal authentication service for the AMF network element.

An NSSF network element is mainly responsible for selecting a network slice that serves the terminal.

In addition, refer to FIG. 1. Nx represents a logical interface or a service-based interface between two network elements, and is used for communication between network elements. For example, N1 is an interface between the terminal and the AMF network element. N2 is an interface between the access network device and the AMF network element. N3 is an interface between the access network device and the UPF network element. N9 is an interface between different UPF network elements. N6 is an interface between the UPF network element and the DN. N4 is an interface between the UPF network element and the SMF network element. N11 is an interface between the AMF network element and the SMF network element. N7 is an interface between the SMF network element and the PCF network element. N5 is an interface between the PCF network element and the AF network element. N14 is an interface between different AMF network elements. N15 is an interface between the AMF network element and the PCF network element. N22 is an interface between the NSSF network element and the AMF network element. N12 is an interface between the AUSF network element and the AMF network element. N8 is an interface between the UDM network element and the AMF network element. N13 is an interface between the AUSF network element and the UDM network element.

### 2. Network slice (or Slice for short):

In the 5G era, hundreds of billions of Internet of Things devices are connected to the network. Different types of application scenarios have different network requirements, and some network requirements even conflict with each other. If a single network is used to provide services for different types of application scenarios, a network architecture is extremely complex, and network management efficiency and resource utilization efficiency are low.

A 5G network slicing technology provides mutually isolated network environments for different application scenarios in a manner of virtualizing independent logical networks on a same network infrastructure, so that network functions and features of the different application scenarios can be customized based on respective requirements, and QoS requirements of different services can be effectively ensured.

An objective of network slicing is to organically combine terminals, access network resources, core network resources, and network O&M and management systems to provide different business scenarios or service types with complete networks that can be independently operated and maintained and mutually isolated.

Various scenarios pose different requirements for a 3GPP ecosystem: charging, policy, security, mobility, and the like. 3GPP emphasizes that network slices do not affect each other. For example, a large quantity of sudden meter reading services should not affect normal mobile broadband services. To satisfy diversified requirements and isolate slices, independent management and O&M of services need to be performed, and customized service functions and analysis capabilities need to be provided. Instances of different types of services are deployed on different network slices, and different instances of a same service type may also be deployed on different network slices.

For example, as shown in FIG. 2, a mobile broadband service is provided for a handheld terminal or the like via a mobile broadband (MBB) slice. A service is provided for a large quantity of meter reading services via a massive machine type communications (mMTC) slice. A service is provided for a vehicle to everything (V2X) service via a critical MTC slice.

Details are as follows:
A network slice refers to a logical network that can provide specific network capabilities and network characteristics.

A network slice instance refers to a group of network function entities and required resources that form a network slice, for example, computing, storage, and network resources.

Single network slice selection assistance information (S-NSSAI) may be used as identification information of a network slice, to differentiate between different network slices.

The S-NSSAI may include slice/service type (SST) information. The SST information describes expected network slice behavior, for example, is used to describe a slice type/service type of a network slice. This is not limited.

For example, slice/service types (SST) of network slices may include: enhanced mobile broadband (eMBB), ultra-reliable low-latency communications (URLLC), massive Internet of Things (MIoT), vehicle to everything (V2X), and the like. This is not limited.

Optionally, the S-NSSAI further includes slice differentiator (or referred to as a slice differentiation identifier) (SD) information. The SD information is supplementary information of the SST information, and is used to differentiate between different network slices with a same SST characteristic. That is to say, when the SST information points to a plurality of network slices, the SD information may assist in corresponding to a unique network slice.

In addition, a group of S-NSSAI may be identified via network slice selection assistance information (NSSAI). That is to say, the NSSAI is a set of one group of S-NSSAI.

When being classified based on different types, NSSAI includes subscribed NSSAI, configured NSSAI, requested NSSAI, allowed NSSAI, rejected NSSAI, or pending NSSAI.

Examples are as follows:
Subscribed NSSAI: The subscribed NSSAI is unique to a home public land mobile network PLMN (HPLMN), and refers to subscribed NSSAI that allows a terminal to access.

Configured NSSAI: It is NSSAI of one or more PLMNs defined in the terminal. The configured NSSAI is determined by a serving PLMN based on a capability of the serving PLMN to support a network slice and a network slice to which the terminal subscribes, and then sent to the terminal via a registration accept message in a registration procedure. For configured NSSAI, a PLMN or stand-alone non-public network (SNPN) is used as a granularity. Different PLMNs or SNPNs can correspond to different pieces of configured NSSAI.

Requested NSSAI: It refers to NSSAI provided by the terminal to the serving PLMN in the registration procedure. When the terminal stores the configured NSSAI corresponding to the serving PLMN, the requested NSSAI includes S-NSSAI in the configured NSSAI corresponding to the serving PLMN. When the terminal does not store the configured NSSAI corresponding to the serving PLMN, for example, the terminal accesses for the first time or deletes the configured NSSAI corresponding to the serving PLMN for a reason such as restarting, the requested NSSAI may include S-NSSAI in default configured NSSAI, and the Default configured NSSAI is configured by the HPLMN. In this scenario, the requested NSSAI may include S-NSSAI that does not belong to the configured NSSAI corresponding to the serving PLMN.

Allowed NSSAI: It refers to NSSAI provided by the serving PLMN in, for example, a registration procedure, and indicates a network slice that is of the serving PLMN, that the terminal is allowed to access in a current registration area (RA), and that is in a network slice corresponding to the requested NSSAI.

Rejected NSSAI: It refers to NSSAI provided by the serving PLMN in, for example, a registration procedure, and indicates a network slice that the terminal is rejected to access in a current RA and that is in a network slice corresponding to the requested NSSAI.

Network slices corresponding to the rejected NSSAI may be classified into the following two types: one type of network slices that are not allowed to be accessed in the current RA but can be accessed in the serving PLMN; and the other type of network slices that are not allowed to be accessed in the entire serving PLMN.

Pending NSSAI: It is NSSAI provided by the serving PLMN in a registration procedure, indicating S-NSSAI for which a network slice-specific authentication and authorization procedure is pending.

For details, refer to a definition in the 3GPP 23.501 standard. Details are not described herein again.

### 3. Capability of an access network to support network slices:

A capability of a RAN to support a network slice is divided by using a tracking area (TA) as a granularity. One TA may support one or more network slices, cells in a same TA support a same network slice, and one cell supports only one frequency band.

For example, it is assumed that an access network device supports a frequency (FR) 1 (FR 1) and a frequency 2 (FR 2). Because each cell supports only one frequency band, FR 1 and FR 2 are frequencies supported by different cells. For example, FR 1 is a frequency supported by a cell 1, and FR 2 is a frequency supported by a cell 2. Further, it is assumed that the cell 1 supports a network slice 1 (corresponding to S-NSSAI 1), and the cell 2 supports a network slice 2 (corresponding to S-NSSAI 2). Because cells in a same TA support a same network slice, the cell 1 and the cell 2 are cells in different TAs.

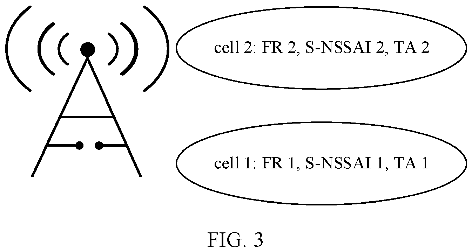

In other words, as shown in FIG. 3, a cell 1 in a TA 1 supports a network slice 1 on an FR 1, and a cell 2 in a TA 2 supports a network slice 2 on an FR 2. In addition, it should be noted that physical coverage of the cell 1 and physical coverage of the cell 2 completely or partially overlap.

The AMF network element perceives a network slice supported by the RAN also by using a TA as a granularity. When establishing or updating an N2 connection to the AMF network element, the access network device may report, to the AMF network element, S-NSSAI supported by each TA of the access network device.

For example, the access network device may report, in a supported TAlist information element, a TA supported by the access network device; and report, in a tracking area identity (TAI) slice support list (TAI slice support list) information element, S-NSSAI supported by each TA in each PLMN or SNPN.

### 4. Slice selection:

When network slices are deployed, a network slice may be selected in a registration procedure. For example, the terminal requests a network slice to be accessed during registration, and the core network feeds back, to the terminal, allowed NSSAI that can be accessed by the terminal. When subsequently performing service transmission, the terminal selects S-NSSAI from the allowed NSSAI, and establishes a session via a network slice corresponding to the S-NSSAI.

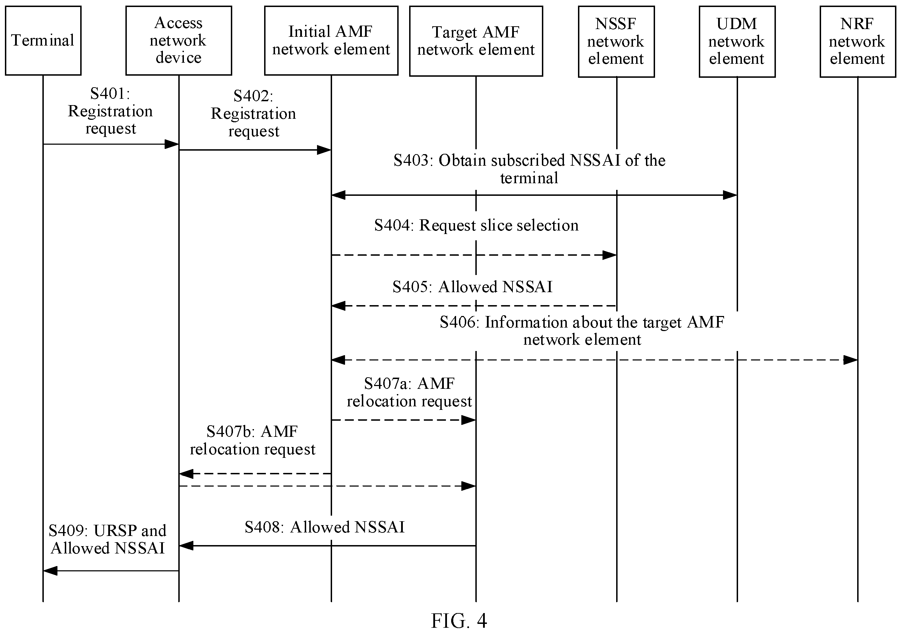

Refer to FIG. 4, which shows a partial procedure related to slice selection in a registration procedure, and the partial procedure specifically includes the following steps:
S401: A terminal sends a registration request to an access network device. Correspondingly, the access network device receives the registration request from the terminal.

The registration request includes NSSAI requested by the terminal, that is, requested NSSAI. S402: The access network device forwards the NSSAI requested by the terminal to an initial AMF network element. Correspondingly, the initial AMF network element receives the NSSAI that is requested by the terminal and that is forwarded by the access network device.

The access network device may forward, via an N2 message, the NSSAI requested by the terminal to the initial AMF network element.

S403: The initial AMF network element initiates a request to a UDM network element, to obtain subscribed NSSAI of the terminal.

S404: When being incapable of determining allowed NSSAI of the terminal, the initial AMF network element requests slice selection from an NSSF network element, and sends the NSSAI requested by the terminal, the NSSAI to which the terminal subscribes, and location information of the terminal to the NSSF network element.

S405: The NSSF network element returns the allowed NSSAI of the terminal to the initial AMF network element.

In addition, if the AMF network element needs to be switched, the NSSF network element further returns, to the initial AMF network element, a target AMF set (or list) and an identifier (ID) of a network repository function (NRF) network element corresponding to a target AMF network element.

S406: If the AMF network element needs to be switched, the initial AMF network element queries the corresponding NRF network element for information about the target AMF network element based on the NRF ID returned by the NSSF network element.

S407: The initial AMF network element sends an AMF relocation request to the target AMF network element. The AMF relocation request includes the allowed NSSAI that is of the terminal and that is returned by the NSSF network element.

In a possible implementation, the initial AMF network element may send the AMF relocation request to the target AMF network element via an interface between the AMF network elements, for example, as shown in S407a.

In another possible implementation, the initial AMF network element may alternatively forward the AMF relocation request to the target AMF network element via the access network device.

For example, as shown in S407b, the initial AMF network element sends an AMF relocation request to the access network device. In addition to the allowed NSSAI of the terminal returned by the NSSF network element, the AMF relocation request further includes information about the target AMF network element. After receiving the AMF relocation request from the initial AMF network element, the access network device forwards the AMF relocation request to the target AMF network element based on the information about the target AMF network element included in the AMF relocation request.

S408: The target AMF network element sends the allowed NSSAI of the terminal to the access network device.

S409: The access network device feeds back the allowed NSSAI of the terminal and a UE route selection policy (URSP) to the terminal.

The URSP is generated by a PCF in the registration procedure.

So far, the terminal may learn a network slice that can be subsequently accessed and a URSP corresponding to the network slice.

In addition, based on the current 23.502 protocol, triggering scenarios of the registration procedure mainly include: (1): initial registration of the terminal with the core network; (2): mobility registration update caused by movement of the terminal to a TA outside a registration area (RA); (3): registration update caused by capability change of the terminal; (4): periodic registration update of the terminal in an inactive state; and (5): emergency registration. In other words, the terminal may select a network slice in the foregoing five scenarios. In other words, in the current technology, in other scenarios than the foregoing five scenarios, the terminal does not initiate a registration procedure.

### 5. Redirection:

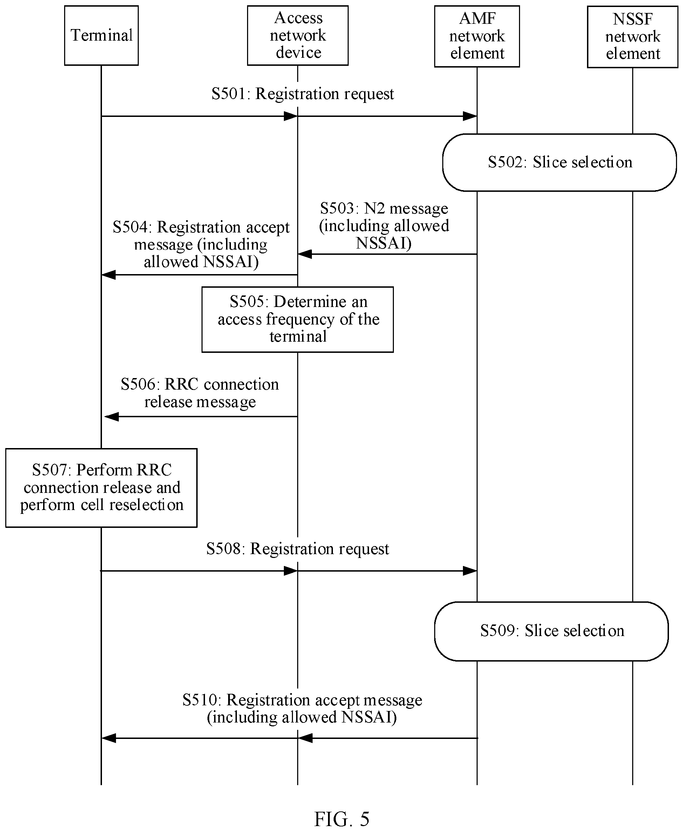

This application mainly describes a process in which a terminal initiates a registration request in a cell in a TA 1 of an access network device, and the terminal is redirected from the cell in the TA 1 to a cell in a TA 2 when the TA 1 does not support a network slice requested by the terminal but the TA 2 of the access network device supports the network slice requested by the terminal. Refer to FIG. 5. The process mainly includes the following steps:
S501: A terminal sends a registration request to an AMF network element via an access network device. Correspondingly, the AMF network element receives the registration request from the terminal via the access network device.

That the terminal sends the registration request to the AMF network element via the access network device includes: The terminal sends the registration request to the AMF network element via a cell 1 of the access network device, where the cell 1 is a cell in a TA 1 of the access network device. The registration request includes NSSAI requested by the terminal, that is, requested NSSAI. S502: The AMF network element and an NSSAI network element perform network slice selection, and determine allowed NSSAI of the terminal. For details, refer to steps S402 to S405, and details are not described herein again.

Adescription is made through an example in which first S-NSSAI included in the requested NSSAI does not belong to the allowed NSSAI, that is, a network slice corresponding to the first S-NSSAI does not belong to a network slice that a serving PLMN allows the terminal to access in the TA 1, in other words, the TA 1 does not support the network slice corresponding to the first S-NSSAI. In other words, when the terminal sends the registration request to the AMF network element via the cell 1 of the access network device, the first S-NSSAI belongs to rejected NSSAI.

In addition, in addition to the allowed NSSAI, at least one of the rejected NSSAI and configured NSSAI of the terminal is further determined.

S503: The AMF network element sends an N2 message to the access network device, where the message includes the allowed NSSAI of the terminal.

Further, at least one of the rejected NSSAI and the configured NSSAI may be further included. S504: The access network device sends a registration accept message to the terminal, where the message includes the allowed NSSAI of the terminal.

Further, at least one of the rejected NSSAI and the configured NSSAI may be further included. S505: The access network device determines an access frequency of the terminal based on information learned from the AMF network element.

For example, if a piece of S-NSSAI included in the requested NSSAI is not supported by the current TA, in addition to the allowed NSSAI and the configured NSSAI to the access network device, the AMF network element further provides the rejected NSSAI to the access network device. In this way, the access network device can redirect or steer the terminal to an access frequency that supports the S-NSSAI. After receiving the rejected NSSAI from the AMF network element, the access network device may perform step S505 to determine the access frequency of the terminal, so as to determine a frequency of a neighboring cell.

S506: The access network device sends a radio resource control (RRC) connection release message to the terminal, where the message includes the frequency of the neighboring cell, an identifier of a network slice supported by the neighboring cell, and a cell reselection priority of the neighboring cell.

S507: The terminal performs RRC connection release to enter an RRC idle state, and performs cell reselection based on the cell reselection priority configured by the access network device.

A description is made through an example in which the terminal accesses a cell 2 in a TA 2 via cell reselection, the TA 2 does not belong to an RA in which the TA is located, and the TA 2 supports the network slice corresponding to the first S-NSSAI.

S508: The terminal re-initiates a registration procedure, and sends a registration request to the AMF network element via the cell 2 of the access network device.

The registration request may include the first S-NSSAI.

S509: It is the same as step S502.

S510: The AMF network element sends a registration accept message to the terminal via the cell 2 of the access network device, where the message includes the allowed NSSAI of the terminal, and the allowed NSSAI may include the first S-NSSAI. In other words, when the terminal sends the registration request to the AMF network element via the cell 2 of the access network device, the first S-NSSAI belongs to the allowed NSSAI.

So far, the terminal may access, via the cell 2, the network slice corresponding to the first S-NSSAI, and use a service provided by the network slice.

### 6. Xn Handover:

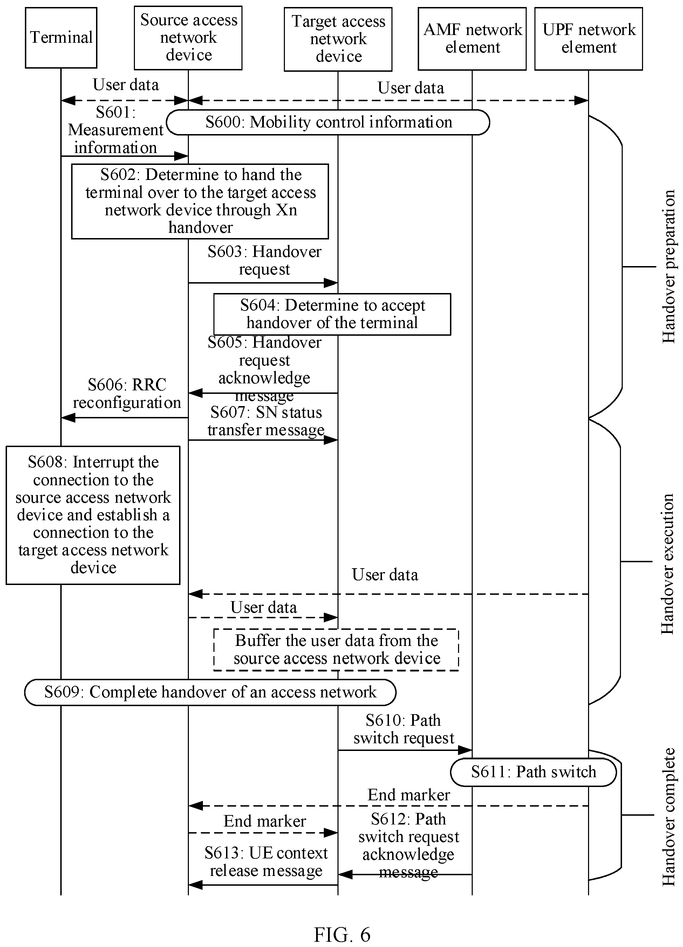

An Xn interface is an interface between access network devices (that is, between a source access network device from which handover is made and a target access network device to which handover is made). When the Xn interface or an Xn connection exists between the access network devices, an example in which a terminal is handed over from the source access network device to the target access network device is used, and an Xn handover procedure is shown in FIG. 6 and specifically includes:
S600: An AMF network element delivers mobility control information to the source access network device and the target access network device.
S601: The terminal reports measurement information to the source access network device.

For example, the measurement information includes reference signal received power (RSRP). S602: The source access network device determines, based on the measurement information reported by the terminal and a local policy, to hand over the terminal to the target access network device in an Xn handover manner.

S603: The source access network device sends a handover request message to the target access network device.

S604: The target access network device determines whether to accept the handover of the terminal. When the target access network device accepts the handover of the terminal, the following steps continue to be performed.

S605: The target access network device sends a handover request acknowledge message to the source access network device, to indicate that the handover of the terminal is accepted. The handover request acknowledge message may further include a handover command, instructing the terminal to access the target access network device via a random access procedure.

S606: The source access network device sends a radio resource control (RRC) reconfiguration to the terminal, to indicate the terminal to release a connection to the source access network device and attempt to access the target access network device via a random access procedure.

Step S600 to step S606 may be a handover preparation phase. After the handover preparation phase is completed, a handover execution phase is performed. The handover execution phase mainly includes step S607 to step S609.

S607: The source access network device sends an SN status to the target access network device via a sequence number (SN) status transfer message, to perform packet data convergence protocol (PDCP) SN synchronization.

S608: The terminal interrupts the connection to the source access network device, and establishes a connection to the target access network device via a random access procedure.

In a process in which the terminal establishes a connection to the target access network device, the source access network device forwards, to the target access network device via a forwarding tunnel between the source access network device and the target access network device, user data that is sent by a UPF network element to the source access network device, and the target access network device buffers the forwarded user data.

S609: The terminal completes the random access procedure, establishes an air interface connection to the target access network device, and completes handover of an access network. Then, the target access network device starts to send the buffered data received from the source access network device.

So far, the handover of the access network is completed, and path switch of a core network to be subsequently performed mainly includes the following steps:
S610: The target access network device sends a path switch request to the AMF network element, to notify the AMF network element that the terminal has been switched, where the path switch request may include a session that needs to be switched and AN tunnel port information for establishing a user plane connection. Further, the path switch request may further include location information of the terminal, for example, a current TAI of the terminal.
S611: The AMF network element, an SMF network element, the UPF network element, and the like perform path switch of the UPF, and simultaneously the UPF network element delivers an end marker from an original path, to indicate that transmission of data on the original path is completed and new data is delivered from a path to which the switch is made.
S612: The AMF network element sends a path switch request acknowledge message to the target access network device, to feed back a path switch status.
S613: The target access network device sends a UE context release message to the source access network device, to indicate the source access network device to release a context of the terminal.

### 7. N2 Handover:

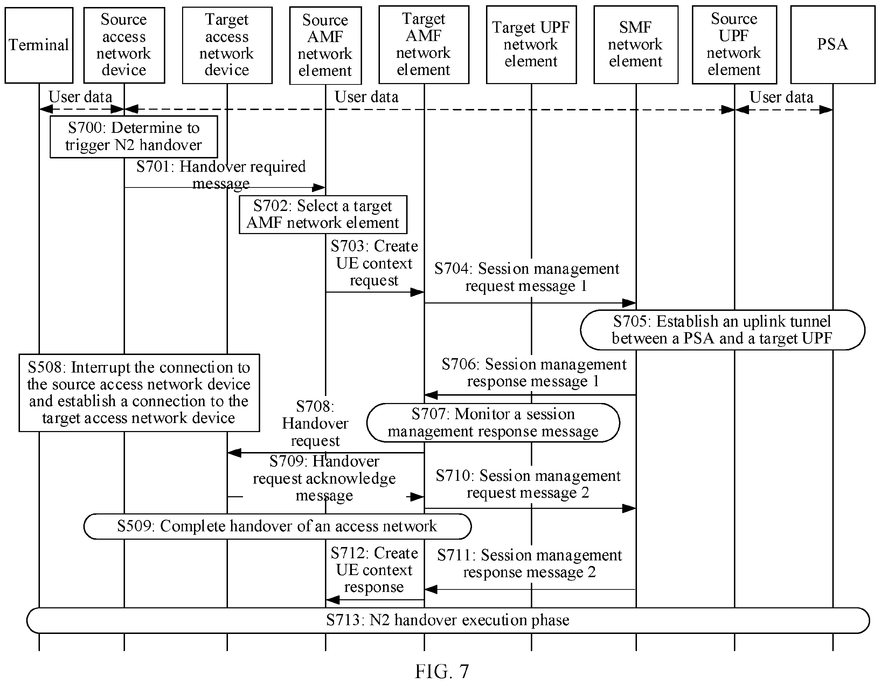

The N2 handover is applicable to a scenario in which no Xn interface exists or no Xn connection exists between access network devices. An example in which a terminal is handed over from the source access network device to the target access network device is used, and an N2 handover procedure is shown in FIG. 7 and specifically includes:
S700: The source access network device determines to trigger N2 handover.

The source access network device finds, by querying local information, that no Xn connection exists between the source access network device and the target access network device, and a control plane message of the handover needs to be forwarded via an N2 interface.

S701: The source access network device sends a handover required message to a source AMF network element.

The handover required message may include a target identifier (Target ID) and a to-be-handed-over session identifier set. The target identifier may include an identifier of the target access network device and a target TAI, and the target TAI corresponds to a target TA that the terminal intends to access.

S702: The source AMF network element selects a target AMF network element.

If the target access network device is not within a service range of the source AMF network element, the source AMF network element selects, based on identification information of the target access network device, the target AMF network element serving the target access network device. S703: The source AMF network element sends a create UE context request message to the target AMF network element, where the message may include the target identifier and the to-be-handed-over session identifier set.

The create UE context request message may be, for example, an Namf_Communication_CreateUEContext Request message that is a type of N2 message.

S704: The target AMF network element sends a session management request message 1 to an SMF network element, where the message may include the target identifier and the to-be-handed-over session identifier set.

The session management request message 1 may be, for example, an Namf_PDUSession_UpdateSMContext Request message that is a type of N2 session management message.

S705: The SMF network element controls establishment of an uplink tunnel between a PDU session anchor (PSA) and a target UPF network element.

S706: The SMF network element sends a session management response message 1 to the target AMF network element, where the message includes a session for which the target UPF network element accepts the handover, and QoS flow information.

The session management response message 1 may be, for example, an Namf_PDUSession_UpdateSMContext Response message.

S707: The target AMF network element monitors a session management response message corresponding to a session management request message sent to each SMF network element, and starts to send a handover request to the target access network device after each session management response message is received or a maximum waiting time is reached.

S708: The target AMF network element sends the handover request to the target access network device, where the handover request includes the session for which the target UPF network element accepts the handover, and the QoS flow information.

S709: The target access network device feeds back a handover request acknowledge message to the target AMF network element. The handover request acknowledge message includes a session for which the target access network device accepts the handover, and QoS flow information. S710: The target AMF network element sends a session management request message 2 to the SMF network element based on a session status fed back by the target access network device, to feed back a session for which handover is accepted by both the target access network device and the target UPF network element, and a QoS flow list.

The session management request message 2 may be, for example, an Namf_PDUSession_UpdateSMContext Request message.

S711: The SMF network element sends a session management response message 2 to the target AMF network element based on a session status fed back by the target AMF network element, where the message includes information about a QoS flow granularity.

The session management response message 2 may be, for example, an Namf_PDUSession_UpdateSMContext Response message.

S712: The target AMF network element sends a create UE context response message to the source AMF network element, where the message includes a list of rejected sessions and corresponding rejection reasons.

The create UE context response message may be, for example, an Namf_Communication_CreateUEContext Response message.

S713: Continue to perform an N2 handover execution phase. For details, refer to descriptions in an existing protocol. Details are not described herein again.

The foregoing mainly describes a network slice and a network slice selection process. In actual application, the following scenarios may exist: In a registration procedure, because a TA in which a terminal is currently located does not support a network slice that the terminal intends to access, the terminal cannot access the network slice in this registration procedure. Subsequently, even if the terminal moves to a TA that supports the network slice, the terminal is still unable to normally access the network slice.

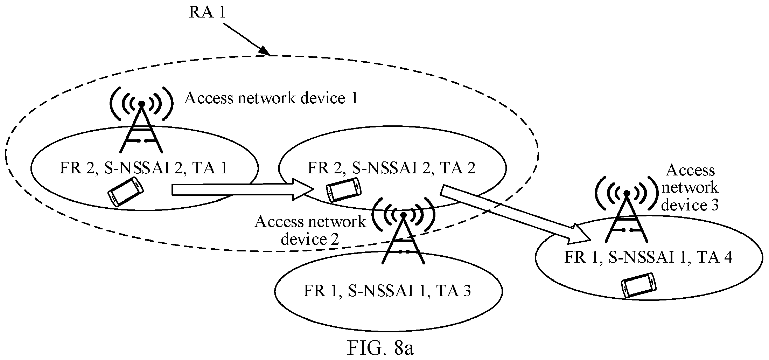

In a possible scenario, as shown in FIG. 8a, it is assumed that a TA 1 of an access network device 1 supports a network slice 2 (corresponding to S-NSSAI2) on an FR 2; a TA 2 of an access network device 2 supports the network slice 2 on the FR 2, a TA 3 of the access network device 2 supports a network slice 1 (corresponding to S-NSSAI 1) on an FR 1, and physical coverage of the TA 2 and physical coverage of the TA3 completely or partially overlap; and a TA4 of an access network device 3 supports the network slice 1 on the FR 1.

Currently, when dividing an RA corresponding to a terminal, an AMF network element usually groups TAs supporting allowed NSSAI into a same RA. For example, the terminal requests access to the S-NSSAI 1 and the S-NSSAI 2 via the access network device 1 in the TA 1, the allowed NSSAI determined on a network side is the S-NSSAI 2, and both the TA 1 and the TA 2 support the S-NSSAI 2. Therefore, the AMF network element groups the TA 1 and the TA 2 into an RA 1. For example, the terminal accesses a network via the access network device 1 and performs a registration procedure, and the terminal intends to access the network slice 1. In a location of the TA 1, because the TA 1 of the access network device 1 does not support the network slice 1, the terminal cannot access the network slice 1, and finally access the network slice 2.

Subsequently, when the terminal moves into a service range of the TA 2 of the access network device 2, because the TA 2 is grouped into a range of the RA 1, and the terminal does not move out of the range of the RA 1, the terminal does not re-initiate a registration procedure based on the foregoing five scenarios of triggering a registration procedure. Therefore, even if the TA 3 whose physical coverage is the same as that of the TA 2 can support the network slice 1, that is, even if the TA 3 that can support the network slice 1 exists in a current location of the terminal, the terminal still cannot access the network slice 1.

As the terminal moves, when the terminal moves into a service range of the TA 4 of the access network device 3, because of moving out of the range of the RA 1, the terminal may re-initiate a registration procedure to access the network slice 1.

In other words, in the scenario shown in FIG. 8a, when the terminal moves into the TA 2 that supports the network slice 1, the terminal still cannot normally access the network slice 1. The terminal can normally access the network slice 1 only when moving to a location of the TA 4, which affects user experience and service performance.

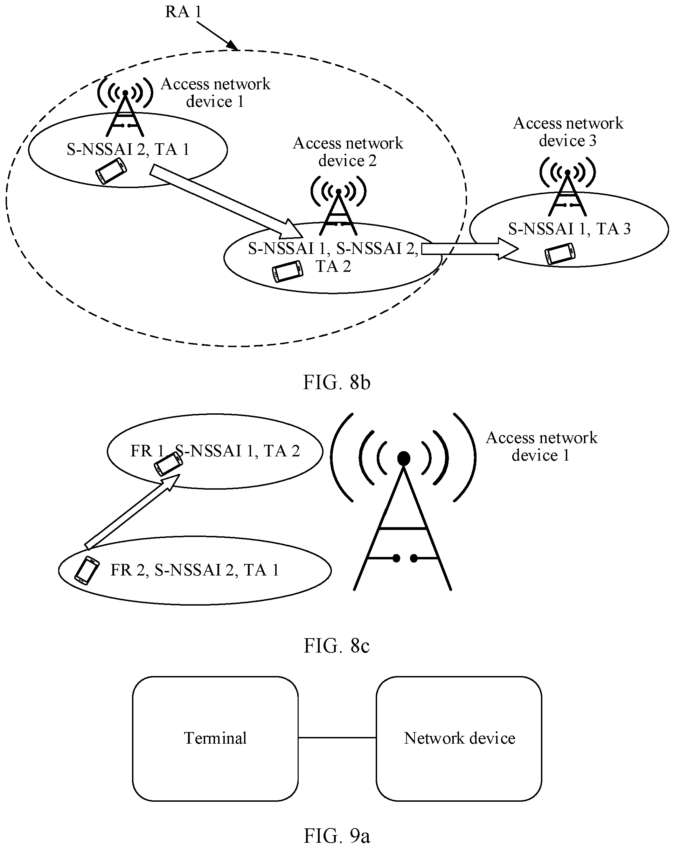

In another possible scenario, as shown in FIG. 8b, it is assumed that a TA 1 of an access network device 1 supports a network slice 2 (corresponding to S-NSSAI 2); a TA 2 of an access network device 2 supports the network slice 2 and a network slice 1 (corresponding to S-NSSAI 1); and a TA 3 of an access network device 3 supports the network slice 1.

When dividing an RA corresponding to a terminal, an AMF network element usually groups TAs supporting allowed NSSAI into a same RA. Similarly, for example, the terminal requests access to the S-NSSAI 1 and the S-NSSAI 2 via the access network device 1 in the TA 1, the allowed NSSAI determined on a network side is the S-NSSAI 2, and both the TA 1 and the TA 2 support the S-NSSAI 2. Therefore, the AMF network element groups the TA 1 and the TA 2 into an RA 1. Based on grouping of the RA 1, when moving into a service range of the TA2 of the access network device 2, the terminal still cannot access the network slice 1. For specific analysis, refer to the scenario shown in FIG. 8a. Details are not described herein again.

In still another possible scenario, as shown in FIG. 8c, it is assumed that a cell in a TA 1 of an access network device 1 supports a network slice 2 (corresponding to S-NSSAI 2) on an FR 2; and a cell in a TA 2 of the access network device 1 supports a network slice 1 (corresponding to S-NSSAI 1) on an FR 1, and there is a non-overlapping area between physical coverage of the TA 1 and that of the TA 2.

For example, the terminal accesses a network via the cell in the TA 1 of the access network device 1 and performs a registration procedure, the terminal intends to access the network slice 1, and the terminal is not within the physical coverage of the TA 2. Because the TA 1 of the access network device 1 does not support the network slice 1, the terminal cannot access the network slice 1, and finally access the network slice 2.

When the terminal enters the coverage of the TA 2, and is handed over from the cell in the TA 1 to the cell in the TA 2, cell handover within the access network device, or intra-eNodeB handover for short, occurs. In this scenario, even if the cell in the TA2 supports the network slice 1, the terminal device may still be unable to access the network slice 1 based on an existing procedure.

Based on this, this application provides a network slice-based communication method, to reduce a probability that a terminal cannot normally access a network slice, improve a network slice access success rate, and further improve service performance and user experience.

The following describes the technical solutions provided in embodiments of this application with reference to the accompanying drawings.

The network slice-based communication method provided in embodiments of this application may be used in any communication system. The communication system may be a 3GPP communication system, for example, a 5G mobile communication system or a new radio (NR) system, an NR V2X system, or another next-generation communication system, or may be a non-3GPP communication system. This is not limited.

The network slice-based communication method provided in embodiments of this application may be applied to various communication scenarios, for example, may be applied to one or more of the following communication scenarios: enhanced mobile broadband (eMBB), ultra-reliable low latency communication (URLLC), machine type communication (MTC), massive machine type communications (mMTC), device to device (D2D), vehicle to everything (V2X), vehicle to vehicle (V2V), Internet of Things (IoT), and the like.

The following uses FIG. 9a as an example to describe a communication system provided in an embodiment of this application. As shown in FIG. 9a, the communication system may include at least one terminal and at least one network device.

In some embodiments, the network device in this application is a mobility management device. In this scenario, the communication system may further include a first access network device. Further, the communication system further includes a second access network device.

In some other embodiments, the network device in this application is a first access network device. In this scenario, the communication system may further include a mobility management device. Further, the communication system further includes a second access network device.

In still some embodiments, the network device in this application is a second access network device. In this scenario, the communication system may further include a mobility management device and a first access network device.

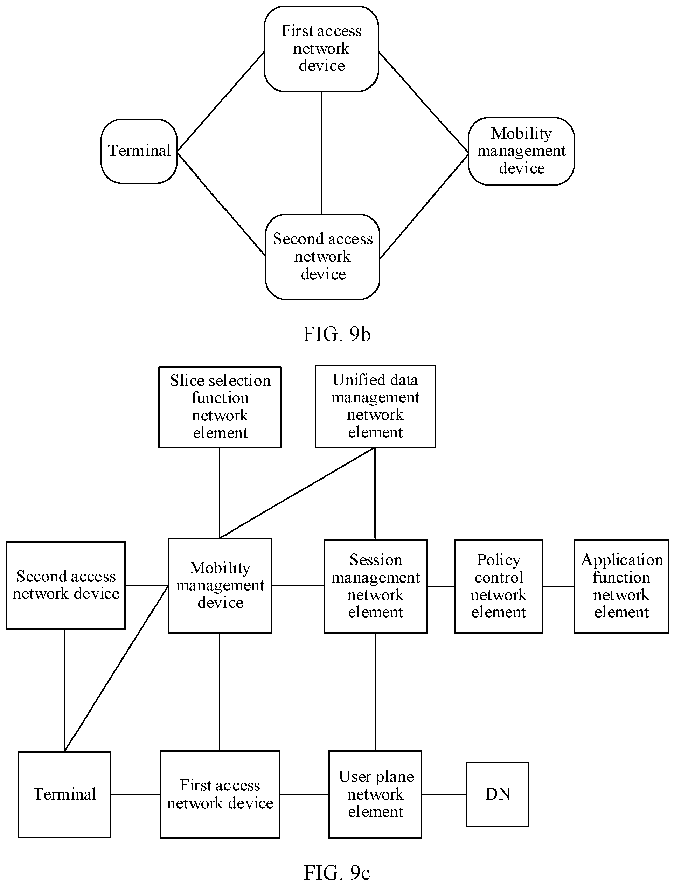

In other words, as shown in FIG. 9b, a communication system provided in this application may include one or more of a terminal, a first access network device, a second access network device, and a mobility management device.

Optionally, as shown in FIG. 9c, a communication system may further include one or more of a session management network element, a policy control network element, a user plane network element, an application function network element, a slice selection function network element, a unified data management network element, or a data network (DN) connected to an operator network.

In this application, after accessing a network, the terminal may establish a protocol data unit (PDU) session, access an external data network DN via the PDU session, and interact with an application server deployed in the DN. As shown in FIG. 9c, based on different DNs accessed by the terminal, the network may select, based on a network policy, a user plane network element that accesses the DN as a PDU session anchor, that is, a protocol data unit session anchor (PSA), to access the application server via an N6 interface of the PSA. Application servers of a same application may be deployed in a plurality of locations. The network can select, based on an access location of the terminal, a PSA that is close to the terminal and that can support the terminal in accessing the DN, to reduce route recurvation and network delay.

The terminal in this application may be a device configured to implement a wireless communication function, for example, a terminal or a chip that can be used in a terminal. The terminal may be deployed on land, including indoors or outdoors, handheld, or vehicle-mounted; may also be deployed on the water surface (such as a ship); and may also be deployed in the air (for example, on aircraft, a balloon, and a satellite). The terminal may be user equipment (UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (PLMN). The access terminal may be a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, a vehicle-mounted device, a wearable device, a virtual reality (VR) terminal device, an augmented reality (AR) terminal device, a wireless terminal in industrial control, a wireless terminal in self-driving, a wireless terminal in remote medical, a wireless terminal in a smart grid, a wireless terminal in transportation safety, a wireless terminal in a smart city, a wireless terminal in a smart home, or the like. The terminal may be mobile or fixed.

The access network device in this application is a device for connecting a terminal to a wireless network, and may be an evolved NodeB (evolved NodeB, eNB, or eNodeB) in LTE; or a base station in a 5G network or a future evolved public land mobile network (PLMN), a broadband network gateway (BNG), an aggregation switch, or a non-3GPP access device. Alternatively, the access network device in embodiments of this application may be a radio controller in a cloud radio access network (CRAN); or a transmission and reception point (TRP), a device including a TRP, or the like. This is not specifically limited in embodiments of this application. Optionally, the base station in embodiments of this application may include base stations in various forms, for example, a macro base station, a micro base station (also referred to as a small cell), a relay station, or an access point. This is not specifically limited in embodiments of this application.

The mobility management device in this application is mainly used for attachment, mobility management, and tracking area update procedures of a terminal in a mobile network. The mobility management device terminates a non-access stratum (NAS) message, completes registration management, connection management, reachability management, allocation of a tracking area list (TA list), mobility management, and the like, and transparently routes a session management (SM) message to the session management network element. In a 5G communication system, the mobility management network element may be an AMF. In future communication such as 6th generation (6G) communication, the mobility management network element may still be an AMF network element or have another name. This is not limited in embodiments of this application.

The slice selection function network element in this application is configured to select a network slice for a terminal, and so on. In a 5G communication system, the slice selection function network element may be an NSSF network element. In future communication such as 6G communication, the network slice selection function network element may still be an NSSF network element or have another name. This is not limited in embodiments of this application.

The policy control network element in this application includes a user subscription data management function, a policy control function, a charging policy control function, a QoS control function, and the like, and is configured to guide a unified policy framework of network behavior, provide policy rule information for a control plane function network element (for example, an AMF network element), and so on. In a 5G communication system, the policy control network element may be a PCF network element. In future communication such as 6G communication, the policy control function network element may still be a PCF network element or have another name. This is not limited in embodiments of this application.

The 5G communication system is used as an example. A schematic diagram of a possible network architecture corresponding to the communication system shown in FIG. 9c to which embodiments of this application are applicable may be shown in FIG. 1.

It should be noted that the communication system and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Functions related to the terminal, the access network device, and the core network element in this application may be implemented by one device, may be jointly implemented by a plurality of devices, may be implemented by one or more functional modules in one device, or may be implemented by one or more chips, a system-on-chip (SOC) or a chip system. The chip system may include a chip, or may include a chip and another discrete component. This is not specifically limited in embodiments of this application.

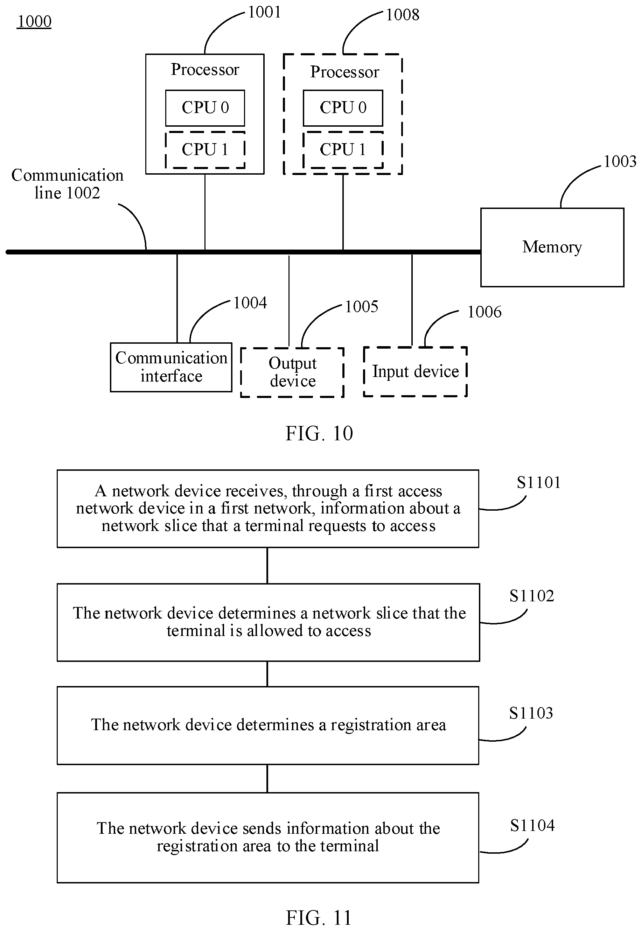

It may be understood that the foregoing function may be a network element in a hardware device, may be a software function running on dedicated hardware, a combination of hardware and software, or a virtualized function instantiated on a platform (for example, a cloud platform). For example, the functions related to the terminal, the access network device, and the core network element in this application may be implemented by a communication device 1000 in FIG. 10. FIG. 10 is a schematic diagram of a structure of a communication device 1000 according to an embodiment of this application. The communication device 1000 includes one or more processors 1001, a communication line 1002, and at least one communication interface (a communication interface 1004 and one processor 1001 are merely used as an example in FIG. 10 for description), and optionally may further include a memory 1003.

The processor 1001 may be a general-purpose central processing unit (CPU), a microprocessor, an application-specific integrated circuit (ASIC), or one or more integrated circuits configured to control execution of programs in the solutions in this application.

The communication line 1002 may include a path for connecting different components.

The communication interface 1004 may be a transceiver module, configured to communicate with another device or a communication network, such as the Ethernet, a RAN, or a wireless local area network (WLAN). For example, the transceiver module may be an apparatus such as a transceiver or a transceiver machine. Optionally, the communication interface 1004 may alternatively be a transceiver circuit located in the processor 1001, and is configured to implement signal input and signal output of the processor.

The memory 1003 may be an apparatus with a storage function. For example, the memory may be a read-only memory (ROM) or another type of static storage device capable of storing static information and instructions, may be a random access memory (RAM) or another type of dynamic storage device capable of storing information and instructions, or may be an electrically erasable programmable read-only memory (EEPROM), a compact disc read-only memory (CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. The memory may exist independently and is connected to the processor through the communication line 1002. Alternatively, the memory and the processor may be integrated.

The memory 1003 is configured to store computer-executable instructions for executing the solutions of this application, and the processor 1001 controls the execution. The processor 1001 is configured to execute the computer-executable instructions stored in the memory 1003, to implement the network slice-based communication method provided in embodiments of this application.

Alternatively, optionally, in this embodiment of this application, the processor 1001 may perform a processing-related function in the network slice-based communication method provided in the following embodiments of this application, and the communication interface 1004 is responsible for communicating with another device or a communication network. This is not specifically limited in embodiments of this application.

Optionally, the computer-executable instruction in this embodiment of this application may also be referred to as application code. This is not specifically limited in embodiments of this application.

During specific implementation, in an embodiment, the processor 1001 may include one or more CPUs, such as a CPU 0 and a CPU 1 in FIG. 10.

During specific implementation, in an embodiment, the communication device 1000 may include a plurality of processors, for example, the processor 1001 and a processor 1008 in FIG. 10. Each of these processors may be a single-core processor, or may be a multi-core processor. The processor herein may include but is not limited to at least one of the following: various computing devices that run software, such as a central processing unit (CPU), a microprocessor, a digital signal processor (DSP), a microcontroller unit (MCU), or an artificial intelligence processor. Each type of computing device may include one or more cores for executing software instructions to perform an operation or processing.

During specific implementation, in an embodiment, the communication device 1000 may further include an output device 1005 and an input device 1006. The output device 1005 communicates with the processor 1001, and may display information in a plurality of manners. For example, the output device 1005 may be a liquid crystal display (LCD), a light emitting diode (LED) display device, a cathode ray tube (CRT) display device, or a projector. The input device 1006 communicates with the processor 1001, and may receive user input in a plurality of manners. For example, the input device 1006 may be a mouse, a keyboard, a touchscreen device, or a sensor device.

Sometimes, the communication device 1000 may also be referred to as a communication apparatus, and may be a general-purpose device or a dedicated device. For example, the communication device 1000 may be a desktop computer, a portable computer, a network server, a palmtop computer (PDA), a mobile phone, a tablet computer, a wireless terminal device, an embedded device, the foregoing terminal, the foregoing network device, or a device having a structure similar to that in FIG. 10. A type of the communication device 1000 is not limited in embodiments of this application.

In addition, the composition structure shown in FIG. 10 does not constitute a limitation on the communication apparatus. In addition to the parts shown in FIG. 10, the communication apparatus may include more or fewer parts than the parts shown in the figure, or some parts may be combined, or there may be a different part layout.

The following describes a network slice-based communication method provided in an embodiment of this application with reference to the communication system shown in FIG. 9a, FIG. 9b, or FIG. 9c.

It should be noted that in the following embodiments of this application, a name of a message between network elements, a name of each parameter, a name of each piece of information, or the like is merely an example, and may be another name in another embodiment. This is not specifically limited in the method provided in this application.

It may be understood that in this embodiment of this application, each network element may perform some or all of the steps in this embodiment of this application. These steps or operations are merely examples. In this embodiment of this application, other operations or variations of various operations may be further performed. In addition, the steps may be performed in different sequences presented in embodiments of this application, and it is possible that not all operations in embodiments of this application need to be performed.

FIG. 11 is a flowchart of a network slice-based communication method according to an embodiment of this application. FIG. 11 is described with reference to scenarios in FIG. 8a and FIG. 8b. As shown in FIG. 11, the method may include:
S1101: A network device receives, via a first access network device in a first network, information about a network slice that a terminal requests to access.

In some embodiments, the network device may be a mobility management device. In a 5G system, the mobility management device may be, for example, an AMF network element.

In some embodiments, the first network may be a PLMN, or may be an SNPN. This is not specifically limited in this application. For example, the first network may be the PLMN including the TA 1 to the TA 4 in FIG. 8a, or the PLMN including the TA 1 to the TA 3 in FIG. 8b. The first access network device may be the access network device 1 in FIG. 8a, or the access network device 1 in FIG. 8b.

The information about the network slice that the terminal requests to access includes identification information of a first network slice and identification information of a second network slice. In other words, the first network slice and the second network slice are network slices corresponding to requested NSSAI of the terminal. For example, the identification information of the first network slice is S-NSSAI 1, and the identification information of the second network slice is S-NSSAI2.

In an example, identification information of a slice may be S-NSSAI, or may be other information for identifying the slice. This is not specifically limited in this application.

The first network slice is not supported by a first tracking area of the first access network device. In other words, the first tracking area does not support the first network slice.

In some embodiments, the first tracking area may be a tracking area in which the terminal is located when sending the information about the network slice that the terminal requests to access. For example, the first tracking area may be the TA 1 in FIG. 8a, or the TA 1 in FIG. 8b.

A second tracking area in the first network supports the first network slice. In other words, the first network slice is a network slice that the terminal is allowed to access in the first network. In other words, there is at least one tracking area that is in the first network and that supports the first network slice. For example, the second tracking area may be the TA 3 in FIG. 8a, or the TA 2 in FIG. 8b.

In some embodiments, the network device may determine the network slice supported by the tracking area of the first access network device, to determine that the first tracking area of the first access network device does not support the first network slice. Further, the network device may further learn configured NSSAI of the terminal, to learn that there is a tracking area that is in the first network and that supports the first network slice. For ease of description, in this application, the tracking area that is in the first network and that supports the first network slice is denoted as the second tracking area, that is, the second tracking area in the first network supports the first network slice.

S 1102: The network device determines a network slice that the terminal is allowed to access.

The network slice that the terminal is allowed to access is a network slice corresponding to allowed NSSAI of the terminal, and includes the second network slice. In addition, the allowed NSSAI does not include the first network slice. In other words, the first network slice does not belong to the network slice that the terminal is allowed to access. That is to say:
The network slice that the terminal requests to access includes the first network slice and the second network slice.

The network slice that the terminal is allowed to access includes the second network slice.

The network slice that the terminal is rejected to access includes the first network slice.

It may be understood that the network slice that the terminal is allowed to access includes the second network slice, and therefore the second network slice is also a network slice that the terminal is allowed to access in the first network.

In an example, the network device may independently determine a network slice that the terminal is allowed to access. Alternatively, the network device may determine, by interacting with a network slice selection function network element (for example, an NSSF network element), a network slice that the terminal is allowed to access. This is not specifically limited in this application.

In some embodiments, in addition to a network slice that the terminal is allowed to access, the network device further determines a network slice that the terminal is rejected to access, so as to determine whether the first network slice is the network slice that the terminal is rejected to access. The network slice that the terminal is rejected to access is a network slice corresponding to rejected NSSAI of the terminal. A description is made in this application through an example in which the network slice that the terminal is rejected to access includes the first network slice. That is to say: The network slice that the terminal requests to access includes the first network slice and the second network slice.

The network slice that the terminal is allowed to access includes the second network slice. That is to say, the allowed NSSAI includes the S-NSSAI 2.

The network slice that the terminal is rejected to access includes the first network slice. That is to say, the rejected NSSAI includes the S-NSSAI 1.

S1103: The network device determines a registration area.

In different implementation scenarios of this application, ranges of the registration area may be different. For example, in a possible implementation scenario, the registration area excludes a tracking area that supports the first network slice and the second network slice. The tracking area that supports the first network slice and the second network slice may be understood as: a tracking area that supports both the first network slice and the second network slice; or may be understood as a tracking area that supports the first network slice and the second network slice simultaneously. This is applicable to the scenario of FIG. 8b. For example, a tracking area that supports the first network slice and the second network slice may be the TA 2 in FIG. 8b.

In some embodiments, that the registration area excludes a tracking area may be understood as that the registration area does not include the tracking area; the tracking area is not in the registration area; or the tracking area is removed from the registration area. Examples are as follows:
In a possible implementation, that the registration area excludes a tracking area that supports the first network slice and the second network slice may be understood as that the registration area does not include a tracking area that supports the first network slice and the second network slice.

In a possible implementation, that the registration area excludes a tracking area that supports the first network slice and the second network slice may be understood as that a tracking area that supports the first network slice and the second network slice is not in the registration area.

In a possible implementation, that the registration area excludes a tracking area that supports the first network slice and the second network slice may be understood as that a tracking area that supports the first network slice and the second network slice is deleted from the registration area. In a possible implementation, that the registration area excludes a tracking area that supports the first network slice and the second network slice may be understood as that a tracking area included in the registration area supports the second network slice, but does not support the first network slice. Certainly, the tracking area included in the registration area may support the second network slice, and support another network slice other than the first network slice.

In a possible implementation, that the registration area excludes a tracking area that supports the first network slice and the second network slice may be understood as that a tracking area included in the registration area supports the second network slice, and a tracking area supporting the first network slice is excluded from the registration area.

For example, for the scenario shown in FIG. 8b, for example, identification information of the first network slice is S-NSSAI 1, and identification information of the second network slice is S-NSSAI 2. It is assumed that the TA 1 of the access network device 1 supports the second network slice; the TA 2 of the access network device 2 supports the first network slice and the second network slice; and the TA 3 of the access network device 3 supports the first network slice.

When the network device determines the registration area through the method provided in the application, the registration area excludes a tracking area that supports the first network slice and the second network slice. In other words, the registration area excludes the TA 2. Therefore, the registration area determined by the network device does not include the TA 2. When the terminal subsequently moves from the cell in the TA 1 to the cell in the TA 2, because of moving to a TA outside the registration area, when still intending to access the first network slice, the terminal may re-initiate a registration procedure to access the first network slice and use a service provided by the first network slice.

In another possible implementation scenario, the registration area excludes a tracking area of an access network device that supports the first network slice and the second network slice. This is applicable to the scenario of FIG. 8a. For example, an access network device that supports the first network slice and the second network slice may be the access network device 2 in FIG. 8a, and tracking areas of the access network device 2 include the TA 2 and the TA 3.

It should be noted that in tracking areas of the access network device, a tracking area that supports the first network slice and a tracking area that supports the second network slice may be a same tracking area. For example, a tracking area 1 of the access network device supports the first network slice and the second network slice. Alternatively, a tracking area that supports the first network slice and a tracking area that supports the second network slice may be different tracking areas. For example, a tracking area 1 of the access network device supports the first network slice, and a tracking area 2 of the access network device supports the second network slice.

In an example, the registration area may exclude all tracking areas of the access network device that supports the first network slice and the second network slice. In other words, when one or more tracking areas supporting the first network slice exist in the access network device corresponding to the tracking area supporting the second network slice, the tracking area supporting the second network slice is excluded from the registration area.

In a possible implementation, that the registration area excludes a tracking area of the access network device that supports the first network slice and the second network slice may be understood as that the registration area does not include a tracking area of the access network device that supports the first network slice and the second network slice.

In a possible implementation, that the registration area excludes a tracking area of the access network device that supports the first network slice and the second network slice may be understood as that a tracking area of the access network device that supports the first network slice and the second network slice is not in the registration area.

In a possible implementation, that the registration area excludes a tracking area of the access network device that supports the first network slice and the second network slice may be understood as that a tracking area of the access network device that supports the first network slice and the second network slice is deleted from the registration area.

For example, for the scenario shown in FIG. 8a, for example, identification information of the first network slice is S-NSSAI 1, and identification information of the second network slice is S-NSSAI 2. It is assumed that the TA 1 of the access network device 1 supports the second network slice; the TA 2 of the access network device 2 supports the second network slice, and the TA 3 supports the first network slice; and the TA 4 of the access network device 3 supports the first network slice. When the network device determines the registration area through the method provided in the application, the registration area excludes a tracking area of the access network device that supports the first network slice and the second network slice. In other words, the registration area excludes tracking areas of the access network device 2, that is, the TA2 and the TA 3, and therefore the registration area determined by the network device does not include the TA 2 or the TA 3. It may be understood that because the TA 3 does not support the allowed NSSAI, the RA itself does not include the TA 3. However, for the TA 2, although the TA 2 supports the S-NSSAI 2, the TA 3 still exists under the access network device 2 corresponding to the TA 2, and TA 3 supports S-NSSAI 1. In this case, the TA 2 needs to be excluded from the RA when the RA is determined. When the terminal subsequently moves from the cell in the TA 1 to the cell in the access network device 2, because of moving to the TA 2 outside the registration area, when still intending to access the first network slice, the terminal may re-initiate a registration procedure to access the first network slice and use a service provided by the first network slice.

S1104: The network device sends information about the registration area to the terminal.

In an example, the information about the registration area may include identification information of a tracking area in the registration area. Specific content of the information about the registration area is not specifically limited in this application.

In an example, when receiving the information about the registration area and subsequently leaving the registration area, the terminal may trigger mobility registration update, that is, re-perform a registration procedure, to re-request a network slice to be accessed.

For example, the scenario shown in FIG. 8a is used as an example. It is assumed that the terminal moves from the coverage of the TA 1 to the coverage of the TA 2. Because the TA 2 is not in the RA, the terminal re-initiates a registration procedure. It is assumed that in the re-initiated registration procedure, the terminal still requests to access the first network slice (corresponding to the S-NSSAI 1). Because the TA 2 does not support the first network slice, the first network slice in the registration procedure does not belong to the network slice that the terminal is allowed to access. However, the TA 3 whose physical coverage is the same as that of the TA 2 supports the first network slice. Therefore, the access network device may send an RRC connection release message to redirect the terminal to a cell in the TA 3, so that the terminal accesses the first network slice in the cell in the TA 3. For details, refer to the procedure shown in FIG. 5. Details are not described herein again. It should be noted that the registration request in S501 in FIG. 5 may be understood as a registration request initiated by the terminal in a cell in the TA 2.

The scenario shown in FIG. 8b is used as an example. It is assumed that the terminal moves from the coverage of the TA 1 to the coverage of the TA 2. Because the TA 2 is not in the RA, the terminal may re-initiate a registration procedure. It is assumed that in the re-initiated registration procedure, the terminal still requests to access the first network slice (corresponding to the S-NSSAI 1). Because the TA2 supports the first network slice, the terminal accesses the first network slice in the TA 2.

Based on this solution, when determining the registration area, the network device excludes the tracking area that supports the first network slice and the second network slice, or excludes the tracking area of the access network device that supports the first network slice and the second network slice. Therefore, when the terminal moves within the excluded tracking area, because the registration area of the terminal does not include the tracking area, and the tracking area supports the first network slice, the terminal may re-initiate a registration procedure to request to access the first network slice, to increase a success rate of accessing the first network slice, thereby improving service performance and user experience.

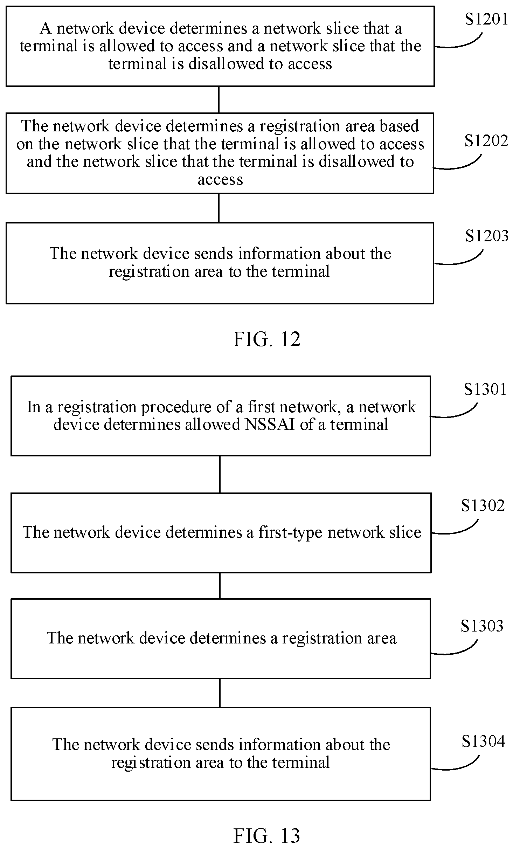

FIG. 12 is a flowchart of another network slice-based communication method according to an embodiment of this application. FIG. 12 is described with reference to FIG. 11. As shown in FIG. 12, the method may include:
S1201: A network device determines a network slice that a terminal is allowed to access and a network slice that the terminal is rejected to access.

In some embodiments, before step S1201, the method may further include: The network device receives, via a first access network device in a first network, information about a network slice that a terminal requests to access.

For related descriptions of the network device and the first network, refer to step S1101. Details are not described herein again.

The information about the network slice that the terminal requests to access includes identification information of a first network slice and identification information of a second network slice. In other words, the first network slice and the second network slice are network slices corresponding to requested NSSAI of the terminal.

In some embodiments, that the network device determines the network slice that the terminal is allowed to access and the network slice that the terminal is rejected to access may include: The network device receives, from a slice selection function network element, information about the network slice that the terminal is allowed to access and information about the network slice that the terminal is rejected to access.

In this application, a description is made through an example in which the network slice that the terminal is allowed to access includes the second network slice, and the network slice that the terminal is rejected to access includes the first network slice.

In some embodiments, the first network slice is not supported by a first tracking area of the first access network device. In other words, the first tracking area does not support the first network slice. The second network slice is a network slice supported by the first tracking area. In other words, the first tracking area supports the second network slice.

In some embodiments, a second tracking area in the first network supports the first network slice. In other words, the first network slice is a network slice that the terminal is allowed to access in the first network.

In an example, the network device may determine the network slice supported by the tracking area of the first access network device, to determine that the first tracking area of the first access network device does not support the first network slice. Further, the network device may learn configured NSSAI of the terminal, to learn that there is a tracking area that is in the first network and that supports the first network slice, that is, the first network slice is a network slice that the terminal is allowed to access in the first network. In this application, the tracking area that is in the first network and that supports the first network slice is denoted as the second tracking area. S1202: The network device determines a registration area of the terminal based on the network slice that the terminal is allowed to access and the network slice that the terminal is rejected to access.
in a possible implementation scenario, the registration area excludes a tracking area that supports the first network slice and the second network slice.

In another possible implementation scenario, the registration area excludes a tracking area of an access network device that supports the first network slice and the second network slice.

For a detailed description, refer to the related description in step S1103. Details are not described herein again. This manner of determining the registration area may be understood as follows: When the registration area is determined, a network slice that is rejected by the network for access because the network slice is not supported by the current TA is considered.

In another possible design, the registration area excludes a tracking area that supports a network slice that the terminal is allowed to access and a network slice that the terminal is rejected to access, or the registration area excludes a tracking area of an access network device that supports a network slice that the terminal is allowed to access and a network slice that the terminal is rejected to access. In other words, when the range of the registration area is determined, a reason why a network slice is rejected by the network for access may not be considered, provided that the network slice is rejected and belongs to a network slice that the terminal is rejected to access. Therefore, when the range of the registration area is determined, it is considered that a tracking area that supports a network slice that the terminal is allowed to access and a network slice that the terminal is rejected to access, or a tracking area of an access network device that supports a network slice that the terminal is allowed to access and a network slice that the terminal is rejected to access is excluded from the registration area.

For example, it is assumed that the following scenario exists:
The network slice that the terminal requests to access includes the first network slice, the second network slice, and a third network slice.

The network slice that the terminal is allowed to access includes the second network slice.

The network slice that the terminal is rejected to access includes the first network slice and the third network slice.

Therefore, when the registration area is determined, it may be considered that a tracking area that supports the first network slice and the second network slice, a tracking area of an access network device that supports the first network slice and the second network slice, a tracking area that supports the third network slice and the second network slice, a tracking area of an access network device that supports the third network slice and the second network slice, a tracking area that supports the first network slice, the second network slice, and the third network slice, or a tracking area of an access network device that supports the first network slice, the second network slice, and the third network slice is excluded from the registration area.

S1203: The network device sends information about the registration area to the terminal.

For details, refer to the related description in step S1104. Details are not described herein again.

Based on this solution, the registration area of the terminal is determined based on the network slice that the terminal is allowed to access and the network slice that the terminal is rejected to access, so that the registration area excludes a tracking area that supports the network slice that the terminal is allowed to access and the network slice that the terminal is rejected to access, or a tracking area of an access network device that supports the network slice that allows the terminal to access and the network slice that the terminal is rejected to access. Therefore, when the terminal moves within the excluded tracking area, because the registration area of the terminal does not include the tracking area, and the tracking area supports the first network slice, the terminal may re-initiate a registration procedure to request to access the first network slice, to increase a success rate of accessing the first network slice, thereby improving service performance and user experience.

The methods shown in FIG. 11 and FIG. 12 provide a registration area division manner. FIG. 13 is a flowchart of another network slice-based communication method according to an embodiment of this application. The method provides another registration area division manner. As shown in FIG. 13, the method may include:
S1301: In a registration procedure of a first network, a network device determines allowed NSSAI of a terminal.

For descriptions of the first network and the network device, refer to step S1101. For the registration procedure and a method for determining the allowed NSSAI by the network device, refer to the procedure shown in FIG. 4. Details are not described herein again.

S1302: The network device determines a first-type network slice.

The first-type network slice is a network slice that does not belong to the allowed NSSAI of the terminal in network slices that the terminal is allowed to access in the first network.

For example, it is assumed that the following scenario exists:
The network slice that the terminal requests to access includes the first network slice, the second network slice, and a third network slice.

The network slice that the terminal is allowed to access includes the second network slice.

The network slice that the terminal is rejected to access includes the first network slice and the third network slice.

Network slices that the terminal is allowed to access in the first network (for example, a current PLMN) include: the first network slice, the second network slice, and a fourth network slice. For example, a network slice that the terminal is allowed to access in the first network may be represented via configured NSSAI of the terminal in the first network.

A network slice that the terminal is allowed to access in a second network (for example, another PLMN) includes the third network slice.

In this scenario, the first-type network slice includes the first network slice and the fourth network slice.

S1303: The network device determines a registration area.

In different implementation scenarios of this application, ranges of the registration area may be different. For example, in a possible implementation scenario, the registration area excludes a tracking area that supports at least one network slice corresponding to the allowed NSSAI and at least one first-type network slice.

The tracking area that supports the at least one network slice corresponding to the allowed NSSAI and the at least one first-type network slice may be understood as: a tracking area that supports both the at least one network slice corresponding to the allowed NSSAI and the at least one first-type network slice; or a tracking area that supports the at least one network slice corresponding to the allowed NSSAI and the at least one first-type network slice simultaneously.

For example, based on the scenario of the assumption in S1302, the registration area may exclude a tracking area that supports the second network slice and the first network slice; may exclude a tracking area that supports the second network slice and the fourth network slice; or may exclude a tracking area that supports the second network slice, the first network slice, and the fourth network slice.

In another possible implementation scenario, the registration area excludes a tracking area of an access network device that supports at least one network slice corresponding to the allowed NSSAI and at least one first-type network slice.

It should be noted that in tracking areas of the access network device, a tracking area that supports the at least one network slice corresponding to the allowed NSSAI and a tracking area that supports the at least one first-type network slice may be a same tracking area. For example, a tracking area 1 of the access network device supports the at least one network slice corresponding to the allowed NSSAI and the at least one first-type network slice. Alternatively, a tracking area that supports the at least one network slice corresponding to the allowed NSSAI and a tracking area that supports the at least one first-type network slice may be different tracking areas. For example, a tracking area 1 of the access network device supports the at least one network slice corresponding to the allowed NSSAI and a tracking area 2 of the access network device supports the at least one first-type network slice.

In an example, the registration area may exclude all tracking areas of an access network device that supports at least one network slice corresponding to the allowed NSSAI and at least one first-type network slice. In other words, when one or more tracking areas supporting at least one first-type network slice exist in the access network device corresponding to the tracking area supporting the second network slice, the tracking area supporting the second network slice is excluded from the registration area.

For example, based on the scenario of the assumption in S1302, the registration area may exclude a tracking area of an access network device that supports the second network slice and the first network slice; may exclude a tracking area of an access network device that supports the second network slice and the fourth network slice; or may exclude a tracking area of an access network device that supports the second network slice, the first network slice, and the fourth network slice. S1304: The network device sends information about the registration area to the terminal.

For details, refer to the related description in step S 1104. Details are not described herein again.

Based on this solution, for the first-type network slice that does not belong to the network slice that the terminal is allowed to access in the registration procedure of the first network but is included in the network slice that the terminal is allowed to access in the first network, regardless of whether the network slice that the terminal requests to access in this registration procedure carries the identifier of the first network slice, because the first-type network slice is included in the network slice that the terminal is allowed to access in the first network, the terminal may subsequently intend to access a first-type network slice. In this case, the network device considers the first-type network slice when determining the registration area. For example, the registration area excludes a tracking area that supports the at least one network slice corresponding to the allowed NSSAI and the at least one first-type network slice, or excludes a tracking area of an access network device that supports the at least one network slice corresponding to the allowed NSSAI and the at least one first-type network slice. Therefore, when the terminal moves into the excluded tracking area, because the registration area of the terminal does not include the tracking area, and the tracking area supports the at least one first-type network slice, the terminal may re-initiate a registration procedure when intending to access a first-type network slice, and request to access the at least one first-type network slice, to improve a success rate of accessing the network slice, and further improve service performance and user experience.

In the methods shown in FIG. 11 to FIG. 13, the registration area is divided, so that a probability that a terminal cannot normally access a target network slice (for example, the foregoing first network slice) is reduced, and a network slice access success rate is improved. In addition, this application further provides a method for improving a network slice access success rate in another manner.

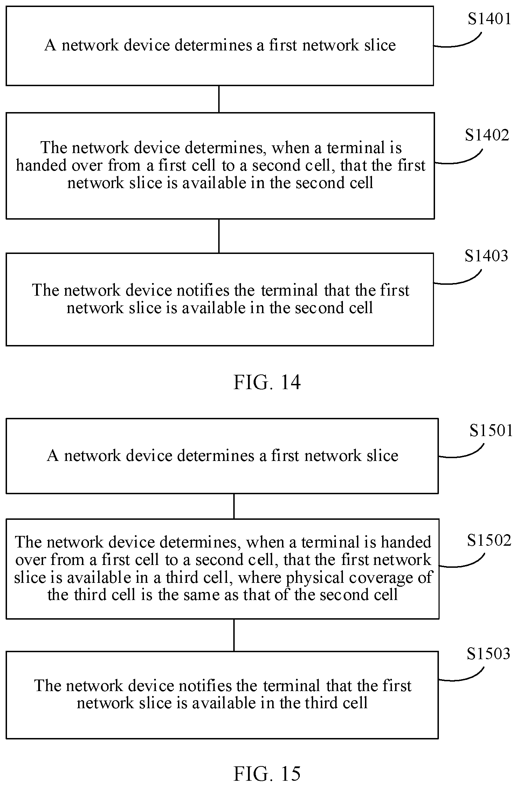

FIG. 14 is a flowchart of a network slice-based communication method according to this application. The method is applicable to a scenario in which a terminal is handed over from a first cell to a second cell, and a network device notifies the terminal of a network slice available in the second cell. The handover scenario may be intra-eNodeB handover, that is, the first cell and the second cell belong to a same access network device; or may be inter-eNodeB handover, that is, the first cell and the second cell belong to different access network devices. For example, the method shown in FIG. 14 is applicable to the scenario shown in FIG. 8b or FIG. 8c. As shown in FIG. 14, the method includes the following steps:
S1401: A network device determines a first network slice.

In some embodiments, the network device may be a mobility management device. In a 5G system, the mobility management device may be, for example, an AMF network element.

In some other embodiments, the network device may be an access network device. For example, when the first cell belongs to a first access network device and the second cell belongs to a second access network device, the network device is the second access network device; or when both the first cell and the second cell belong to a first access network device, the network device is the first access network device.

The first network slice does not belong to a network slice that the terminal is allowed to access in the first cell. In other words, when the terminal initiates a registration procedure in the first cell, a network slice corresponding to allowed NSSAI of the terminal does not include the first network slice. In this application, a network slice that the terminal is rejected to access may be referred to as a target network slice, and there may be one or more target network slices.

A registration area of the terminal includes the first cell and the second cell.

In some embodiments, the first cell is a cell in a first TA, the second cell is a cell in a second TA, and the first TA and the second TA are different TAs.

In some embodiments, the first network slice is included in a network slice that the terminal requests to access in the first cell. In other words, the terminal initiates the registration procedure in the first cell, and requests to access the first network slice. However, the first network slice does not belong to the network slice that the terminal is allowed to access in the first cell, or the first network slice belongs to the network slice that the terminal is rejected to access in the first cell. Therefore, the terminal cannot access the first network slice in the first cell. Based on subsequent steps, the terminal may access, in the second cell, the first network slice that cannot be accessed in the first cell.

In some embodiments, the first network slice is included in a network slice configured for the terminal in a first network; or the first network slice is included in a network slice corresponding to configured NSSAI of the terminal, or the first network slice is a network slice that the terminal is allowed to access in the first network. That is to say, regardless of whether the terminal requests to access the first network slice when initiating the registration procedure in the first cell, because the first network slice is included in the network slice configured for the terminal in the first network, the terminal may subsequently intend to access the first network slice. Because the first network slice does not belong to the network slice that the terminal is allowed to access in the first cell, the terminal cannot access the first network slice in the first cell. Based on subsequent steps, the terminal may access, in the second cell, the first network slice that cannot be accessed in the first cell.

For example, based on the scenario shown in FIG. 8b, using an example in which the first cell is a cell in the TA 1 of the access network device 1, the second cell is a cell in the TA 2 of the access network device 2, and the identification information of the first network slice is S-NSSAI 1, the terminal requests access to the S-NSSAI 1 and the S-NSSAI 2 via the access network device 1 in the TA 1, the allowed NSSAI determined on a network side is the S-NSSAI 2, and both the TA 1 and the TA2 support the S-NSSAI 2. Therefore, the registration area RA 1 of the terminal includes the TA 1 and the TA 2. Alternatively, based on the scenario shown in FIG. 8c, using an example in which the first cell is a cell in the TA 1 of the access network device 1, the second cell is a cell in the TA 2 of the access network device 1, and the identification information of the first network slice is S-NSSAI 1, the registration area RA 1 of the terminal similarly includes the TA 1 and the TA2.

In the foregoing two scenarios, the terminal initiates a registration request in the first cell, and requests to access the first network slice and the second network slice (for example, the identification information is S-NSSAI 2), the first network slice does not belong to a network slice that the terminal is allowed to access in the first cell, and the second network slice belongs to a network slice that the terminal is allowed to access in the first cell. Therefore, the terminal accesses the second network slice in the first cell.

S1402: The network device determines, when the terminal is handed over from the first cell to the second cell, that the first network slice is available in the second cell.

In some embodiments, a reason why the network device determines that the first network slice is available in the second cell may be that the second TA in which the second cell is located supports the first network slice.

For example, based on the scenario shown in FIG. 8b or FIG. 8c, the network device may determine, when the terminal is handed over from the first cell in the TA 1 to the second cell in the TA 2, that the first network slice is available in the second cell.

S1403: The network device notifies the terminal that the first network slice is available in the second cell.

In some embodiments, when the network device is a mobility management device, the network device may notify, via a non-access stratum (NAS) message, the terminal that the first network slice is available in the second cell.

In some other embodiments, when the network device is the first access network device or the second access network device, the network device may notify, via the mobility management device, the terminal that the first network slice is available in the second cell. For example, the network device notifies, via the mobility management device, the terminal that the first network slice is available in the second cell. Then, the mobility management device is triggered to notify, via a NAS message, the terminal that the first network slice is available in the second cell. Certainly, the network device may further notify the terminal in another manner. For example, the network device may notify, via an RRC message, the terminal that the first network slice is available in the second cell. A notification manner is not specifically limited in this application.

In an example, the network device may send the identification information of the first network slice to the terminal, to notify the terminal that the first network slice is available in the second cell. Further, the network device may further send a cell identifier of the second cell to the terminal. In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the second cell, because of initiating no registration procedure in the second cell, the terminal still cannot access the first network slice in the second cell. Based on the solution of this application, when the terminal is handed over from the first cell to the second cell, and it is determined that the first network slice is available in the second cell, the terminal is notified that the first network slice is available in the second cell, so that when still intending to access the first network slice, the terminal may initiate a registration procedure to request to access the first network slice, thereby improving a success rate of accessing the first network slice, and improving service performance and user experience.

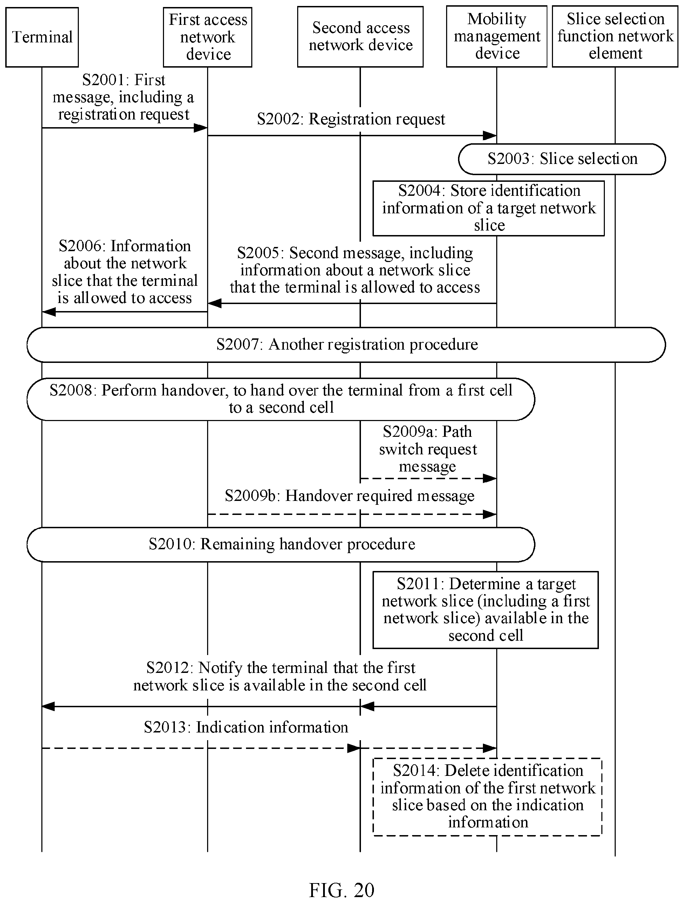

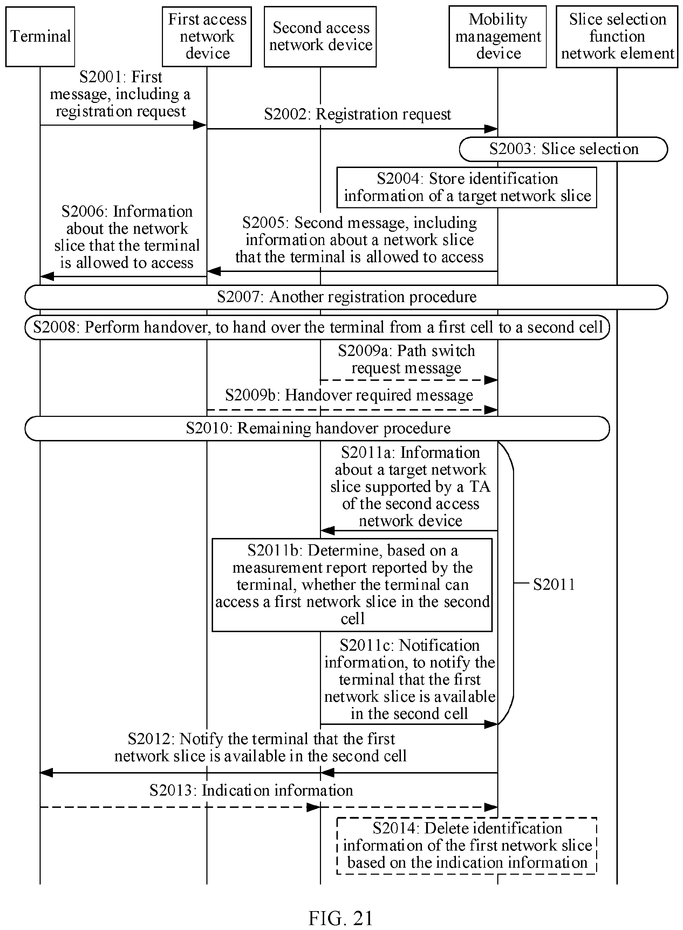

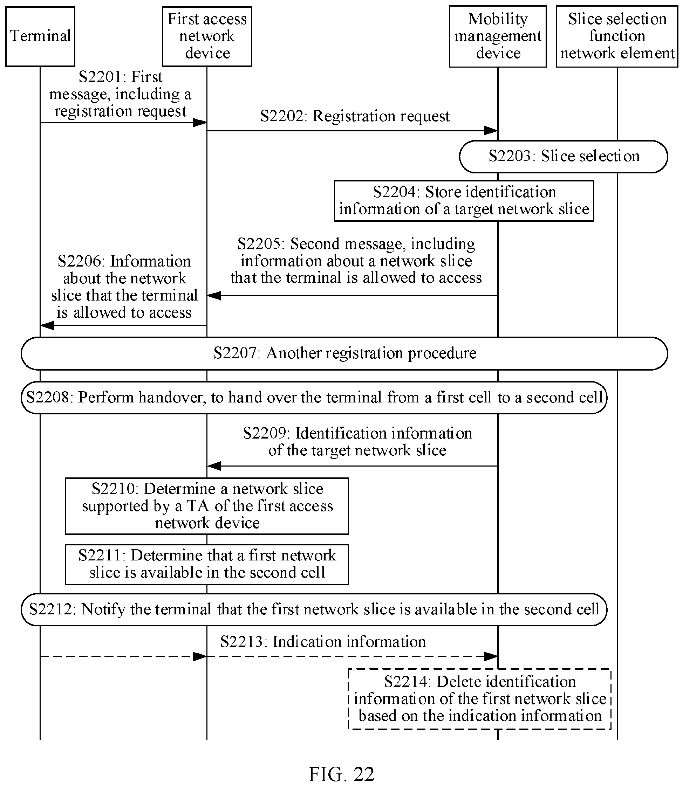

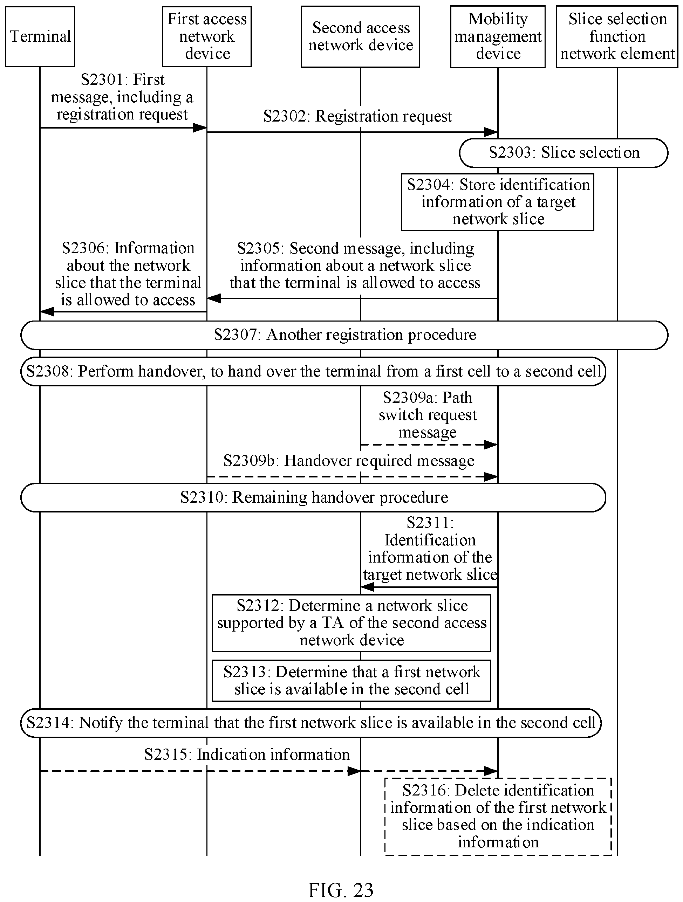

As described above, the network device may be a mobility management device or an access network device. When the network device is a mobility management device, refer to a specific implementation in FIG. 20 or FIG. 21. When the network device is an access network device in an intra-eNodeB handover scenario, refer to a specific implementation in FIG. 22. When the network device is an access network device in an inter-eNodeB handover scenario, refer to a specific implementation in FIG. 23.

In addition to the method shown in FIG. 14, refer to FIG. 15. This application further provides a network slice-based communication method applicable to the following scenario: a method in a scenario in which a terminal is handed over from a first cell to a second cell, and a third cell whose physical coverage is the same as that of the second cell exists. The handover scenario may be intra-eNodeB handover, that is, the first cell and the second cell belong to a same access network device; or may be inter-eNodeB handover, that is, the first cell and the second cell belong to different access network devices. For example, the method shown in FIG. 15 is applicable to the scenario shown in FIG. 8a. As shown in FIG. 15, the method includes the following steps:

S1501: A network device determines a first network slice.

In some embodiments, the network device may be a mobility management device, a first access network device, or a second access network device. For details, refer to related descriptions in step S1401. Details are not described herein again.

The first network slice does not belong to a network slice that the terminal is allowed to access in a first cell, and a registration area of the terminal includes the first cell and the second cell. Physical coverage of the third cell completely or partially overlaps physical coverage of the second cell. In some embodiments, the third cell may be referred to as a cell whose physical coverage is the same as that of the second cell.

In some embodiments, the first cell is a cell in a first TA, the second cell is a cell in a second TA, the third cell is a cell in a third TA, and the first TA, the second TA, and the third TA are different TAs.

In some embodiments, the first network slice is included in a network slice configured for the terminal in the first network, and/or the first network slice is included in a network slice that the terminal requests to access in the first cell. For details, refer to related descriptions in step S1401. Details are not described herein again.

For example, based on the scenario shown in FIG. 8a, using an example in which the first cell is a cell in the TA 1 of the access network device 1, the second cell is a cell in the TA 2 of the access network device 2, the third cell is a cell in the TA 3 of the access network device 2, and the identification information of the first network slice is S-NSSAI 1, the terminal requests access to the S-NSSAI 1 and the S-NSSAI 2 via the access network device 1 in the TA 1, the allowed NSSAI determined on a network side is the S-NSSAI 2, and both the TA 1 and the TA 2 support the S-NSSAI 2. Therefore, the registration area RA 1 of the terminal includes the TA 1 and the TA 2. The terminal initiates a registration request in the first cell, and requests to access the first network slice and the second network slice (for example, the identification information is S-NSSAI 2), the first network slice does not belong to a network slice that the terminal is allowed to access in the first cell, and the second network slice belongs to a network slice that the terminal is allowed to access in the first cell. Therefore, the terminal accesses the second network slice in the first cell. S1502: The network device determines, when the terminal is handed over from the first cell to the second cell, that the first network slice is available in the third cell.

In some embodiments, a reason why the network device determines that the first network slice is available in the third cell may be that the third TA in which the third cell is located supports the first network slice.

For example, based on the scenario shown in FIG. 8a, when the terminal is handed over from the first cell in the TA 1 to the second cell in the TA 2, because the TA 2 is grouped into a range of the RA 1, and the terminal does not move out of the range of the RA 1, the terminal does not re-initiate a registration procedure. Therefore, the terminal still does not access the first network slice. However, because the cell of the access network device 2 includes the third cell whose physical coverage partially or completely overlaps the physical coverage of the second cell, and the TA 3 in which the third cell is located supports the first network slice, the network device may determine that the first network slice is available in the third cell.

S1503: The network device notifies the terminal that the first network slice is available in the third cell.

For a notification manner, refer to the manner in which the network device notifies the terminal that the first network slice is available in the second cell in step S1403. Details are not described herein again.

In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the third cell whose physical coverage is the same as that of the second cell, because of initiating no registration procedure again in the second cell, the terminal still cannot access the first network slice in a location of the second cell. Based on the solution of this application, when the terminal is handed over from the first cell to the second cell, and it is determined that the first network slice is available in the third cell, the terminal is notified that the first network slice is available in the third cell, so that when still intending to access the first network slice, the terminal may access the first network slice in the third cell, thereby improving a success rate of accessing the first network slice, and using a service provided by the first network slice.

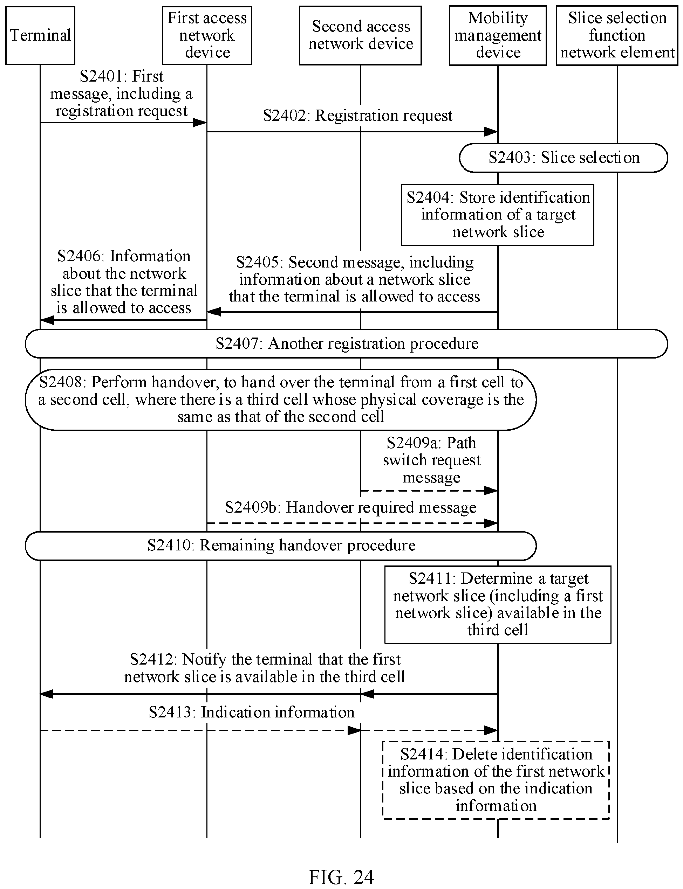

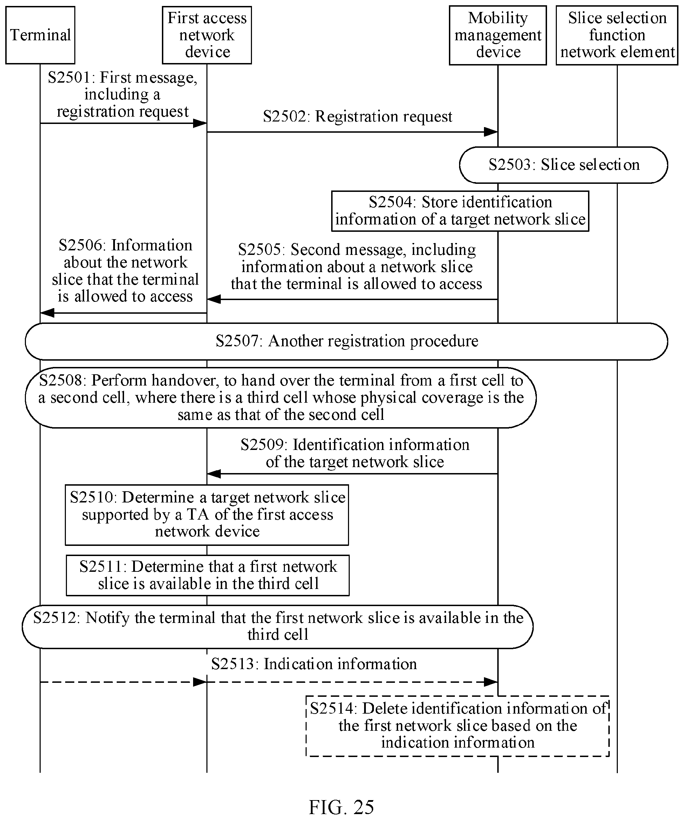

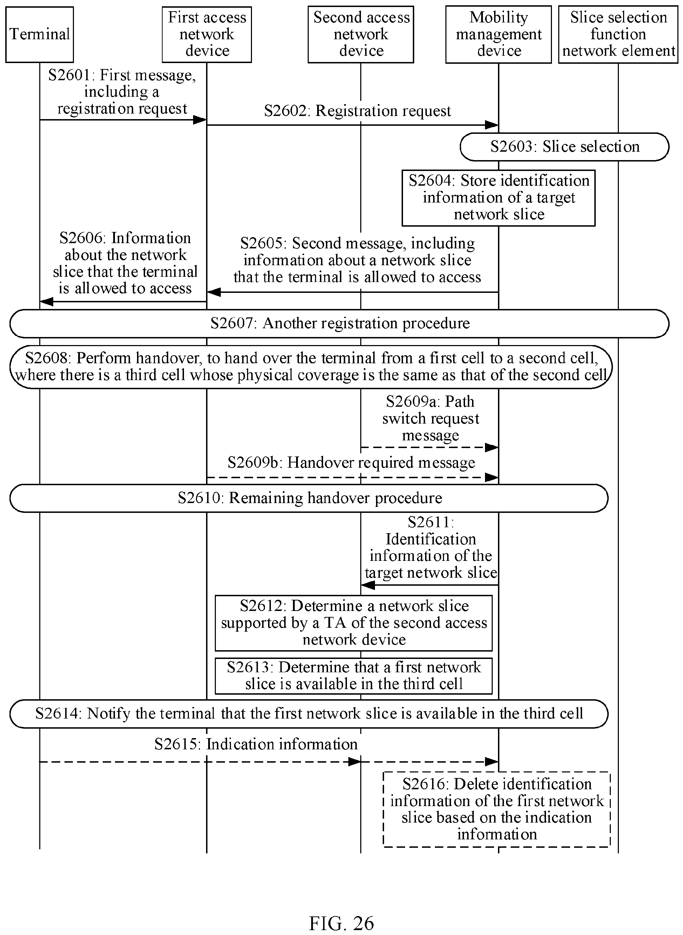

As described above, the network device may be a mobility management device or an access network device. When the network device is a mobility management device, refer to a specific implementation in FIG. 24. When the network device is an access network device in an intra-eNodeB handover scenario, refer to a specific implementation in FIG. 25. When the network device is an access network device in an inter-eNodeB handover scenario, refer to a specific implementation in FIG. 26.

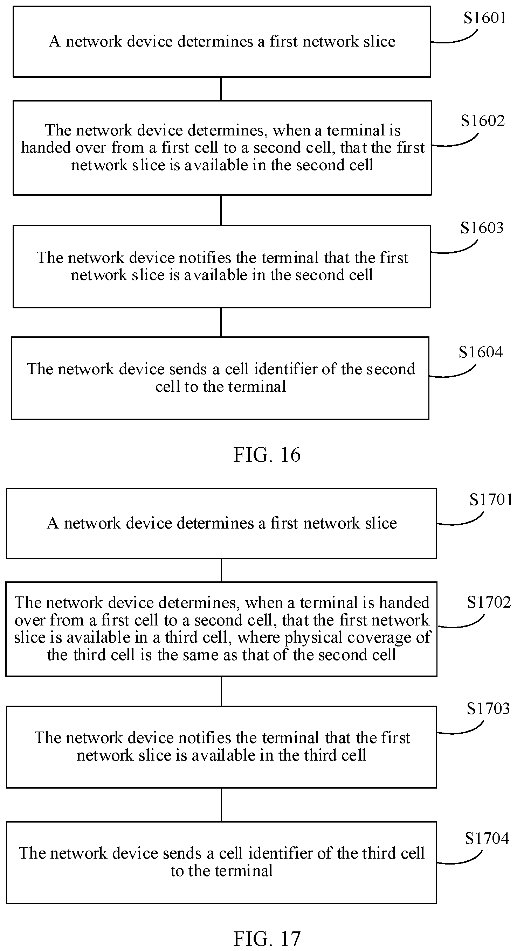

In addition to the methods shown in FIG. 14 and FIG. 15, this application further provides a network slice-based communication method applicable to the following scenario: a method in a scenario in which a terminal accesses a first cell, and a neighboring cell of the first cell includes a second cell. The first cell and the second cell may belong to a same access network device; or the first cell and the second cell may belong to different access network devices. For example, the method shown in FIG. 16 is applicable to the scenario shown in FIG. 8b or FIG. 8c. As shown in FIG. 16, the method includes the following steps:
S1601: A network device determines a first network slice.

Step S1601 is similar to step S1401. For details, refer to the related description in step S1401. Details are not described herein again.

S1602: The network device determines that the first network slice is available in the second cell. In some embodiments, a reason why the network device determines that the first network slice is available in the second cell may be that the second TA in which the second cell is located supports the first network slice.

In some embodiments, a reason why the network device determines that the first network slice is available in the second cell may be that the second TA in which the second cell is located supports the first network slice, cell signal quality of the second cell is greater than a first threshold, and the terminal may access the second cell.

In some embodiments, the network device may determine that the first network slice is available in the second cell before the terminal is handed over from the first cell to the second cell.

S1603: The network device notifies the terminal that the first network slice is available in the second cell.

Step S1603 is similar to step S1403. For details, refer to the related description in step S1403.

Details are not described herein again.

A difference between step S1603 and step S1403 lies in that step S1403 is triggered by handover. In other words, in a handover scenario, the network device notifies the terminal that the first network slice is available in the second cell. However, step S1603 does not depend on handover. For example, before a handover procedure occurs, the network device may notify the terminal that the first network slice is available in the second cell.

S1604: The network device sends a cell identifier of the second cell to the terminal.

In some embodiments, the cell identifier of the second cell may be used by the terminal to access the second cell, so as to access the first network slice available in the second cell.

In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the second cell, because of initiating no registration procedure in the second cell, the terminal still cannot access the first network slice in the second cell. Based on the solution of this application, when the terminal is handed over from the first cell to the second cell, and it is determined that the first network slice is available in the second cell, the terminal is notified that the first network slice is available in the second cell, and the cell identifier of the second cell is sent, so that when still intending to access the first network slice, the terminal may access the second cell, and initiate a registration procedure to request to access the first network slice, thereby improving a success rate of accessing the first network slice, and using a service provided by the first network slice.

In addition to the method shown in FIG. 16, refer to FIG. 17. This application further provides a network slice-based communication method applicable to the following scenario: A terminal accesses a first cell, a neighboring cell of the first cell includes a second cell, and a third cell whose physical coverage is the same as that of the second cell exists. The first cell and the second cell may belong to a same access network device; or the first cell and the second cell may belong to different access network devices. For example, the method shown in FIG. 17 is applicable to the scenario shown in FIG. 8a. As shown in FIG. 17, the method includes the following steps:
S1701: A network device determines a first network slice.

Step S1701 is similar to step S1501. For details, refer to the related description in step S1501. Details are not described herein again.

S1702: The network device determines that the first network slice is available in the third cell.

In some embodiments, a reason why the network device determines that the first network slice is available in the third cell may be that the third TA in which the third cell is located supports the first network slice.

In some embodiments, the network device may determine that the first network slice is available in the third cell before the terminal is handed over from the first cell to the second cell.

S1703: The network device notifies the terminal that the first network slice is available in the third cell.

For a notification manner, refer to the manner in which the network device notifies the terminal that the first network slice is available in the second cell in step S1403. Details are not described herein again.

S1704: The network device sends a cell identifier of the third cell to the terminal.

In some embodiments, the cell identifier of the third cell may be used by the terminal to access the third cell, so as to access the first network slice available in the third cell.

In the current technology, the first network slice does not belong to the network slice that the terminal is allowed to access in the first cell, that is, when initiating a registration procedure in the first cell, the terminal cannot access the first network slice. Because the registration area of the terminal includes the first cell and the second cell, when the terminal is handed over from the first cell to the second cell, the terminal is not triggered to perform a re-registration procedure. Even if the first network slice is available in the third cell whose physical coverage is the same as that of the second cell, because of initiating no registration procedure again in the second cell, the terminal still cannot access the first network slice in a location of the second cell. Based on the solution of this application, when the neighboring cell of the first cell accessed by the terminal includes the second cell, the third cell whose physical coverage is the same as that of the second cell exists, and it is determined that the first network slice is available in the third cell, the terminal is notified that the first network slice is available in the third cell, and the cell identifier of the third cell is sent, so that when still intending to access the first network slice, the terminal may access the third cell and request to access the first network slice, thereby improving a success rate of accessing the first network slice, and using a service provided by the first network slice.

FIG. 11 to FIG. 17 describe the network slice-based communication method provided in this application from a perspective of a network device, and the following describes the method from a perspective of a terminal.

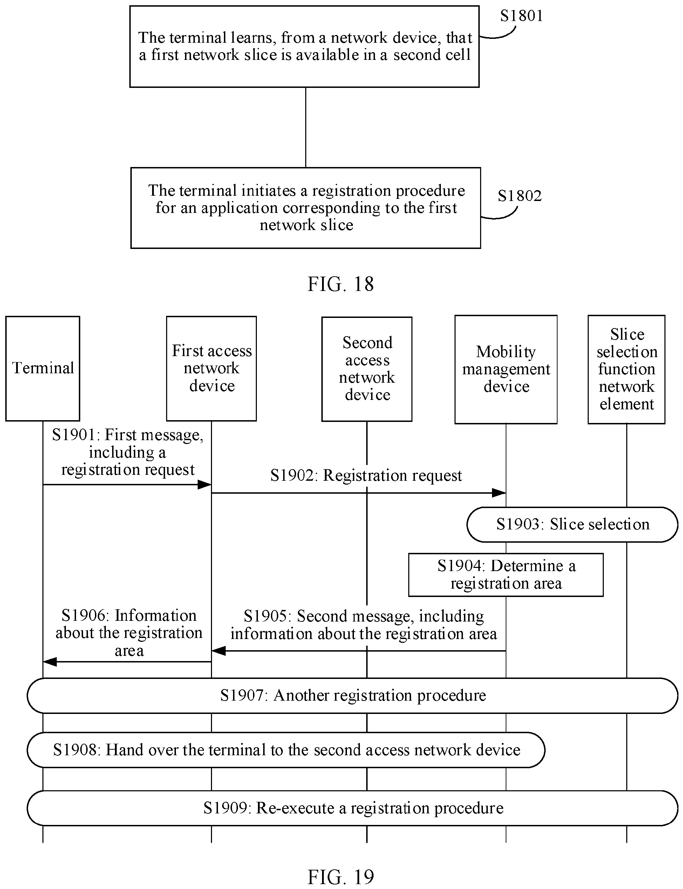

FIG. 18 shows a network slice-based communication method applied to a terminal according to this application. The method may be applied to the foregoing process in which the network device notifies the terminal that the first network slice is available in the second cell. In other words, the method may be considered as implementation of the terminal after the network device notifies the terminal that the first network slice is available in the second cell in FIG. 14 or FIG. 16. The method includes the following steps:
S1801: The terminal learns, from a network device, that a first network slice is available in a second cell.

The first network slice does not belong to a network slice that the terminal is allowed to access in a first cell, and a registration area of the terminal includes the first cell and the second cell. For details, refer to the related description in step S1401. Details are not described herein again. S1802: The terminal initiates a registration procedure for an application corresponding to the first network slice.

In some embodiments, that the terminal initiates the registration procedure for the application corresponding to the first network slice may include: The terminal determines whether the first network slice is a network slice corresponding to the application in response to that a context of the terminal does not include a session used for the application and does not include a route selection policy used for the application; and the terminal initiates the registration procedure for the application when the first network slice is the network slice corresponding to the application. In some embodiments, the terminal further receives a cell identifier from the network device, where the cell identifier is used for the second cell. In other words, the terminal receives the cell identifier of the second cell from the network device. In this scenario, that the terminal initiates the registration procedure for the application corresponding to the first network slice may include: The terminal accesses the second cell, and initiates a registration procedure for the application corresponding to the first network slice via the second cell.

In the current technology, because the first network slice does not belong to the network slice that the terminal is allowed to access in the first cell, the terminal cannot access the first network slice in the first cell. Because the registration area of the terminal includes the first cell and the second cell, even if the terminal moves from the first cell to coverage of the second cell, the terminal still does not re-initiate a registration procedure, and therefore cannot access the first network slice. Based on the solution of this application, the terminal may learn, from the network device, that the first network slice is available in the second cell, and therefore may initiate, when an application of the terminal corresponds to the first network slice, a registration procedure for the application to request to access the first network slice, thereby improving a success rate of accessing the first network slice.

In other words, compared with several scenarios in which the terminal is triggered to initiate a registration procedure in the current technology, a scenario in which the terminal is triggered to initiate a registration procedure is added in this application: After the network device notifies the terminal that the first network slice is available in the second cell, the terminal may initiate a registration procedure based on an initiated application.

It may be understood that when the terminal learns, from the network device, that the first network slice is available in the third cell, implementation of the terminal is similar to that of the method shown in FIG. 18, and the second cell may be replaced with the third cell for understanding. For details, refer to the foregoing related description. Details are not described herein again.

The foregoing describes the network slice-based communication method provided in this application from a perspective of each single device. The following describes how the foregoing method is applied to a specific procedure from a perspective of interaction between devices. FIG. 19 is a schematic flowchart of a method for applying the methods shown in FIG. 11 to FIG. 13 to a specific procedure according to this application through an example in which a network device is a mobility management device. The method shown in FIG. 19 is applicable to the scenario in FIG. 8a or FIG. 8b. The method includes the following steps:
S1901: A terminal sends a first message to a first access network device. Correspondingly, the first access network device receives the first message from the terminal.

The first access network device is an access network device in a first network. For the first network, refer to related descriptions in step S1101. Details are not described herein again.

In some embodiments, the first message may be an RRC message.

The first message includes a registration request, the registration request includes information (for example, requested NSSAI) about a network slice that the terminal requests to access, and the information about the network slice that the terminal requests to access includes identification information of a first network slice and identification information of a second network slice.

In this application, a description is made through an example in which the terminal accesses the first network in a first TA of the first access network device and sends the first message to the first access network device. For example, in the scenario in FIG. 8a, the first TA is the TA 1 in FIG. 8a; and in the scenario in FIG. 8b, the first TA is the TA 1 in FIG. 8b.

S1902: The first access network device sends a registration request to a mobility management device. Correspondingly, the mobility management device receives the registration request from the first access network device.

The registration request is received by the first access network device from the terminal in step S1901. Therefore, step S1901 and step S1902 may be understood as that the mobility management device receives, via a first access network device in a first network, information about a network slice that a terminal requests to access.

In some embodiments, the mobility management device may determine a network slice supported by a TA of the first access network device. The network slice supported by the TA of the first access network device may be reported to the mobility management device by the first access network device when establishing or updating an N2 connection to the mobility management device. In this application, a description is made through an example in which the mobility management device determines that the first TA of the first access network device does not support the first network slice but supports the second network slice.

S1903: The mobility management device performs slice selection.

For example, the mobility management device may perform slice selection by interacting with a network slice selection function network element.

In step S1903, the mobility management device may determine a network slice that the terminal is allowed to access, and specifically may determine a network slice that the terminal is allowed to access in the first TA. In this application, a description is made through an example in which the network slice that the terminal is allowed to access includes the second network slice and the first network slice does not belong to the network slice that the terminal is allowed to access.

As described above, a network slice that the terminal is rejected to access may be referred to as a target network slice, and there may be one or more target network slices. For example, the network slice that the terminal requests to access further includes a third network slice, and the third network slice is a network slice that is allowed to be accessed in the second network. Therefore, in the first TA of the first network, the third network slice does not belong to the network slice that the terminal is allowed to access. In this scenario, target network slices include the first network slice and the third network slice. Alternatively, a target network slice may be a network slice that the terminal is rejected to access. For example, the target network slice includes the first network slice.

In some embodiments, the mobility management device may store information about the target network slice, and may send, when the mobility management device serving the terminal is subsequently handed over, the information about the target network slice to a mobility management device to which the handover is made.

In some embodiments, in step S1903, the mobility management device may further determine a network slice that the terminal is rejected to access, and specifically may determine a network slice that the terminal is rejected to access in the first TA. In this application, a description is made through an example in which the network slice that the terminal is rejected to access includes the first network slice. Further, the network slice that the terminal is rejected to access may further include the third network slice.

In some embodiments, in step S1903, the mobility management device may further determine a network slice that the terminal is allowed to access in the first network. In this application, a description is made through an example in which the network slice that the terminal is allowed to access in the first network includes the first network slice or the first network slice is a network slice that the terminal is allowed to access in the first network. Further, an example in which the second TA in the first network supports the first network slice is used for description.

In other words, the first network slice is a network slice that the terminal is allowed to access in the first network but does not belong to a network slice that the terminal is allowed to access in the first TA.

In some embodiments, in step S1903, the mobility management device may further determine network slices that the terminal is allowed to access by subscription. In this application, a description is made through an example in which the network slices that the terminal is allowed to access by subscription include: the first network slice, the second network slice, the third network slice, and a fourth network slice. The fourth network slice is also a network slice that the terminal is allowed to access in the first network.

S1904: The mobility management device determines a registration area.

For a feature of the registration area, refer to the description in the method shown in FIG. 11, FIG. 12, or FIG. 13. Details are not described herein again.

In some embodiments, the mobility management device may determine the registration area based on the network slice that the terminal is allowed to access and the network slice that the terminal is rejected to access. Alternatively, the mobility management device may further determine the registration area with reference to one or more of a network slice support capability of the access network device managed by the mobility management device, a network slice that the terminal is allowed to access in the first network, and a network slice that the terminal is allowed to access by subscription. Alternatively, it may be understood that the mobility management device may determine the registration area based on the network slice that the terminal is allowed to access and the target network slice. A method for determining a registration area by the mobility management device is not specifically limited in this application.

S1905: The mobility management network element sends a second message to the first access network device. Correspondingly, the first access network device receives the second message from the mobility management network element.

The second message includes information about the registration area. Further, the second message further includes information about the network slice that the terminal is allowed to access.

In some embodiments, the second message may be an N2 message.

S1906: The first access network device sends information about the registration area to the terminal. Correspondingly, the terminal receives the information about the registration area from the first access network device.

In some embodiments, the first access network device further sends, to the terminal, the information about the network slice that the terminal is allowed to access.

S1907: Another registration procedure.

After step S1907, the registration procedure is completed, and the terminal accesses the second network slice.

S1908: Hand over the terminal to a second access network device due to movement.

For example, the TA of the second access network device includes the second TA. As described in step S1903, the second TA supports the first network slice. For example, in the scenario in FIG. 8a, the second TA is the TA 2 in FIG. 8a; and in the scenario in FIG. 8b, the second TA is the TA 2 in FIG. 8b. Because the registration area excludes a tracking area that supports the first network slice and the second network slice, or excludes a tracking area of an access network device that supports the first network slice and the second network slice, the second TA is outside the registration area. In this case, the terminal may perform step S1909 because of moving out of the RA.

S1909: Re-initiate a registration procedure.

In some embodiments, the re-initiated registration procedure is initiated by the terminal, and in the re-initiated registration procedure, a network slice that the terminal requests to access may include the first network slice. Certainly, the network slice that the terminal requests to access may alternatively not include the first network slice. For example, after being handed over to the second access network device, the terminal no longer needs to access the first network slice. This is not specifically limited in this application.

Based on this solution, when determining the registration area, the mobility management device excludes the tracking area that supports the network slice that the terminal is allowed to access and the target network slice, or excludes the tracking area of the access network device that supports the network slice that the terminal is allowed to access and the target network slice. Therefore, when the terminal moves within the excluded tracking area, because the registration area of the terminal does not include the tracking area, and the tracking area supports the target network slice, the terminal may re-initiate a registration procedure to request to access the target network slice, to increase a success rate of accessing the target network slice.

FIG. 20 and FIG. 21 are schematic flowcharts of methods for applying the method shown in FIG. 14 to a specific procedure when a network device is a mobility management device according to this application. The method shown in FIG. 20 or FIG. 21 is applicable to the scenario in FIG. 8b or FIG. 8c. The method includes the following steps:
S2001: A terminal sends a first message to a first access network device. Correspondingly, the first access network device receives the first message from the terminal.

The terminal sends the first message to the first access network device via a first cell of the first access network device. That is to say, the terminal accesses a network in the first cell. The first cell is a cell in a first TA of the first access network device.

The first message includes a registration request, the registration request includes information (for example, requested NSSAI) about a network slice that the terminal requests to access, and the information about the network slice that the terminal requests to access includes identification information of a first network slice. That is to say, the first network slice is included in a network slice that the terminal requests to access in the first cell. Further, the information about the network slice that the terminal requests to access may further include identification information of the second network slice.

In some embodiments, the first access network device may be an access network device in a first network. For the first network, refer to the foregoing related description. Details are not described herein again.

S2002: The first access network device sends a registration request to a mobility management device. Correspondingly, the mobility management device receives the registration request from the first access network device.

The registration request is received by the first access network device from the terminal in step S2001. Therefore, step S2001 and step S2002 may be understood as that the mobility management device receives, via the first cell, the information about the network slice that the terminal requests to access.

S2003: The mobility management device performs slice selection.

For example, the mobility management device may perform slice selection by interacting with a network slice selection function network element.

In step S2003, the mobility management device may determine a network slice that the terminal is allowed to access, and specifically may determine a network slice that the terminal is allowed to access in the first cell. In this application, a description is made through an example in which the network slice that the terminal is allowed to access in the first cell includes the second network slice.

In some embodiments, after the mobility management device determines the network slice that the terminal is allowed to access in the first cell, the mobility management device may determine whether the first network slice belongs to the network slice that the terminal is allowed to access in the first cell. In this application, a description is made through an example in which the mobility management device can learn that the first network slice does not belong to the network slice that the terminal is allowed to access in the first cell.

So far, the mobility management device may determine the first network slice. Therefore, S2001 to S2003 may be understood as specific implementation of determining the first network slice by the mobility management device.

As described above, a network slice that the terminal is rejected to access in the first cell may be referred to as a target network slice, and there may be one or more target network slices. For example, the network slice that the terminal requests to access in the first cell further includes a third network slice, and the third network slice is a network slice that is allowed to be accessed in the second network. Therefore, in the first cell of the first network, the third network slice does not belong to the network slice that the terminal is allowed to access. Alternatively, a target network slice may be a network slice that the terminal is rejected to access. For example, the target network slice includes the first network slice.

In some embodiments, in step S2003, the mobility management device may further determine a network slice configured for the terminal in the first network. In this application, a description is made through an example in which the network slice configured for the terminal in the first network includes the first network slice or the first network slice is included in the network slice configured for the terminal in the first network.

The mobility management device further determines a registration area of the terminal. In this application, a description is made through an example in which the registration area of the terminal includes the first cell and the second cell. The second cell may belong to the first access network device, that is, the first cell and the second cell belong to a same access network device; or the second cell may belong to the second access network device, that is, the first cell and the second cell belong to different access network devices.

S2004: The mobility management device stores identification information of a target network slice, where the target network slice includes a first network slice.

In some embodiments, the mobility management device serving the terminal may send, when being subsequently handed over, the identification information of the target network slice to a mobility management device to which the handover is made. When the mobility management device serving the terminal is handed over, the mobility management network element after step S2004 may be considered as the mobility management network element to which the handover is made.

S2005: The mobility management network element sends a second message to the first access network device. Correspondingly, the first access network device receives the second message from the mobility management network element.

The second message includes information about the network slice that the terminal is allowed to access.

In some embodiments, the second message may be an N2 message.

It should be noted that step S2005 and step S2004 are not performed in a necessary sequence. Step S2004 may be performed first, and then step S2005 is performed. Alternatively, step S2005 may be performed first, and then step S2004 is performed. Alternatively, step S2004 and step S2005 may be simultaneously performed. This is not specifically limited in this application.

S2006: The first access network device sends, to the terminal, information about a network slice that the terminal is allowed to access. Correspondingly, the terminal receives, from the first access network device, the information about the network slice that the terminal is allowed to access. S2007: Another registration procedure.

After step S2007, the registration procedure is completed, and the terminal accesses the second network slice.

S2008: Perform handover, to hand over the terminal from a first cell to a second cell.

The second cell is a cell in the second TA.

In some embodiments, when the second cell belongs to the second access network device, and the handover type is Xn handover, after step S2008, handover of the terminal in the access network is completed, and step S2009a continues to be performed.

In some embodiments, when the second cell belongs to the second access network device, and the handover type is N2 handover, after step S2008, the first access network device determines to trigger N2 handover, and step S2009b continues to be performed.

It may be understood that when the second cell belongs to the first access network device, steps S2009a and S2009b are not performed.

S2009a: The second access network device sends a path switch request message to the mobility management device. Correspondingly, the mobility management device receives the path switch request message from the second access network device.

After the mobility management device receives the path switch request message from the second access network device, step S2011 may be performed.

S2009b: The first access network device sends a handover required message to the mobility management device. Correspondingly, the mobility management device receives the handover required message from the first access network device.

The handover required message includes the identifier of the second access network device, so that the mobility management device can learn the second access network device to which the handover is made.

After the mobility management device receives the handover required message from the first access network device, step S2011 may be performed.

S2010: Remaining handover procedure.

For details, refer to the method procedure shown in FIG. 5 or FIG. 6, or refer to the handover procedure defined in the protocol. Details are not described herein again.

It should be noted that S2010 may be performed in parallel with step S2011 to step S2014 and certainly may alternatively be performed in another sequence. This is not specifically limited in this application.

S2011: The mobility management network element determines a target network slice available in the second cell.

It may be understood that the target network slice available in the second cell in step S2011 may be a subset of the target network slice in step S2004. For example, the target network slice in step S2004 includes the first network slice and the third network slice, and the target network slice available in the second cell in step S2011 is the first network slice. That is to say, in this application, a description is made through an example in which the mobility management network element determines that the first network slice is available in the second cell or determines that the target network slice available in the second cell includes the first network slice.

In other words, when the second cell belongs to the second access network device, and the handover type is Xn handover, that the mobility management device determines that the first network slice is available in the second cell may include: The mobility management network element determines, when receiving a path switch request message from the second access network device, that the first network slice is available in the second cell.

When the second cell belongs to the second access network device, and the handover type is N2 handover, that the mobility management network element determines that the first network slice is available in the second cell may include: The mobility management network element determines, when receiving the handover required message from the first access network device, that the first network slice is available in the second cell.

In other words, when the second cell belongs to the second access network device, the path switch request message or the handover required message may be used as a trigger condition for the mobility management device to determine that the first network slice is available in the second cell.

In different embodiments of this application, manners in which the mobility management device determines a target network slice available in the second cell may also be different. For example: In some embodiments, that the mobility management device determines a target network slice available in the second cell includes: The mobility management device queries the context of the target access network device, and determines whether the network slice supported by the tracking area of the target access network device includes the target network slice.

When the second cell belongs to the second access network device, a target access network device is the second access network device; or when the second cell belongs to the first access network device, a target access network device is the first access network device.

In this application, a description is made through an example in which the context of the target access network device indicates that the network slice supported by the tracking area of the target access network device includes the first network slice or the context of the target access network device indicates that the tracking area of the target access network device supports the first network slice. In this scenario, the second cell is a cell in the tracking area of the target access network device. For example, the second cell is a cell in the second TA of the target access network device. In some other embodiments, refer to FIG. 21. For example, the target access network device is a second access network device. That the mobility management device determines a target network slice available in the second cell includes:
S2011a: The mobility management device sends, to a target access network device, identification information of a target network slice supported by a tracking area of the target access network device. Correspondingly, the target access network device receives, from the mobility management device, the identification information of the target network slice supported by the tracking area of the target access network device.

It is assumed that the target network slice in step S2004 includes the first network slice and the third network slice. In this application, a description is made through an example in which the tracking area of the target access network device supports the first network slice but does not support the third network slice and the identification information of the first network slice is sent by the mobility management device in step S2011a.

S2011b: The target access network device determines, based on a measurement report reported by the terminal, whether the terminal can access the first network slice in the second cell.

In some embodiments, the target access network device first determines whether the second TA in which the second cell is located supports the first network slice. In this application, an example in which the second TA supports the first network slice is used for description. Then, the target access network device may determine, based on cell signal quality in the measurement report, whether the terminal can access the first network slice in the second cell.

In an example, the cell signal quality may be measured through one or more of received signal code power (RSCP), reference signal received power (RSRP), reference signal received quality (RSRQ), a signal to noise ratio (SNR), a signal to interference plus noise ratio (SINR), and a reference signal strength indicator (RSSI). This is not specifically limited in this application.

In an example, when cell signal quality corresponding to the second cell is greater than the first threshold, the target access network device determines that the terminal can access the first network slice in the second cell.

In an example, the target access network device may perform step S2011b immediately after S2011a; or may perform step S2011b at any time after S2011a, so that step S2011c is performed after step S2011b is performed at any time.

S2011c: The target access network device sends notification information to the mobility management device. Correspondingly, the mobility management device receives the notification information from the target access network device.

The notification information is for notifying that the terminal can access the first network slice in the second cell. Therefore, the mobility management device learns, from the target access network device, that the terminal can access the first network slice in the second cell.

In an example, when the target network slice supported by the tracking area of the target access network device in step S2011a includes only the first network slice, the notification information may be information of 1 bit. For example, when a value of the bit is "1", the terminal is notified that the terminal can access the first network slice in the second cell; or when a value of the bit is "0", the terminal is notified that the terminal can access the first network slice in the second cell. In another example, when the target network slice supported by the tracking area of the target access network device in step S2011a includes a plurality of network slices, the notification information may include identification information of the first network slice.

In still another example, when the target network slice supported by the tracking area of the target access network device in step S2011a includes a plurality of network slices, the notification information may include a bitmap. A quantity of bits included in the bitmap is equal to a quantity of target network slices supported by the tracking area of the target access network device, different bits correspond to different target network slices, and a value of a bit is used to notify, to the terminal, whether the terminal can access a corresponding target network slice in the second cell. For example, the target network slices supported by the tracking area of the target access network device in step S2011a include a network slice 1 and a network slice 2. The target access network device determines that the terminal can access the network slice 1 but cannot access the network slice 2 in the second cell. In this case, the bitmap may include two bits. The first bit corresponds to the network slice 1, and the second bit corresponds to the network slice 2. For example, the bitmap may be "10", to notify the terminal that the terminal can access the network slice 1 but cannot access the network slice 2 in the second cell.

It may be understood that step S2011a to step S2011c are also applicable to a scenario in which the target access network device is the first access network device.

That is to say, that the mobility management device determines that the first network slice is available in the second cell includes: The mobility management device sends the identification information of the first network slice to the target access network device, and learns, from the target access network device, that the terminal can access the first network slice in the second cell. Based on this solution, after determining the first network slice supported by the tracking area of the target access network device, the mobility management device further confirms, to the target access network device, whether the terminal can access the first network slice supported by the tracking area of the target access network device, to prevent the mobility management device from notifying, when the target access network device supports the first network slice but the terminal cannot access the first network slice in the second cell, the terminal that the first network slice is available in the second cell, thereby improving a success rate of accessing the first network slice by the terminal in the second cell.

S2012: The mobility management device notifies the terminal that the first network slice is available in the second cell.

In some embodiments, the mobility management device may send a NAS message to the terminal, and notify the terminal via the NAS message that the first network slice is available in the second cell. For a notification manner, refer to step S2011c. Details are not described herein again. Optionally, after step S2012, the network slice-based communication method may further include steps S2013 and S2014:
S2013: The terminal sends indication information to the mobility management device. Correspondingly, the mobility management device receives the indication information from the terminal.

In some embodiments, the indication information indicates that the terminal no longer requests to access the first network slice.

S2014: The mobility management device deletes the identification information of the first network slice based on the indication information.

In some embodiments, when the indication information indicates that the terminal no longer requests to access the first network slice, the mobility management device deletes the identification information of the first network slice. When subsequently serving the terminal, the mobility management device may no longer notify the terminal of a cell that can access the first network slice, thereby reducing signaling overheads and reducing resource waste.

Based on this solution, when the terminal is handed over from the first cell to the second cell, and the mobility management device determines that the first network slice is available in the second cell, the terminal is notified that the first network slice is available in the second cell, so that when still intending to access the first network slice, the terminal may initiate a registration procedure to request to access the first network slice, thereby improving a success rate of accessing the first network slice, and using a service provided by the first network slice.

FIG. 22 is a schematic flowchart of a method for applying the method shown in FIG. 14 to a specific procedure when a second cell belongs to a first access network device and a network device is the first access network device according to this application. The method shown in FIG. 22 is applicable to the scenario in FIG. 8c. The method includes the following steps:
S2201 to S2207: They are the same as steps S2001 to S2007 shown in FIG. 20. For details, refer to the foregoing related description. Details are not described herein again.
S2208: Perform handover, to hand over the terminal from a first cell to a second cell.

The second cell is a cell in the second TA, and the second cell belongs to the first access network device. After S2208 ends, it may be considered that the terminal completes the handover from the first cell to the second cell.

S2209: The mobility management device sends, to the first access network device, the identification information that is of the target network slice and that is stored in step S2204. Correspondingly, the first access network device receives the identification information of the target network slice from the mobility management device.

For example, the target network slice stored in S2204 includes the first network slice and the third network slice. In S2209, the mobility management device sends the identification information of the first network slice and the identification information of the third network slice to the first access network device.

It should be noted that step S2209 and step S2208 are not performed in a necessary sequence. Step S2208 may be performed first, and then step S2209 is performed. Alternatively, step S2209 may be performed first, and then step S2208 is performed. Alternatively, step S2208 and step S2209 may be simultaneously performed. This is not specifically limited in this application.

For example, when step S2209 is performed before step S2208 is performed, in step S2209, the first access network device may determine the first network slice. With reference to steps S2201 to S2209, that the first access network device determines the first network slice includes: The first access network device sends, to the mobility management network element, information about a network slice that the terminal requests to access, where the information about the network slice that the terminal requests to access includes identification information of the first network slice; and then the first access network device learns, from the mobility management device, that the first network slice does not belong to the network slice that the terminal is allowed to access in the first cell. In other words, the first access network device may learn, from the mobility management device in the foregoing registration procedure, that the first network slice does not belong to the network slice that the terminal is allowed to access in the first cell.

It may be understood that a feature of the first network slice and/or an operation performed on the first network slice is also applicable to the third network slice. For details, refer to the related description of the first network slice. Details are not described herein again.

S2210: The first access network device determines a target network slice supported by a tracking area of the first access network device.

In some embodiments, the first access network device may determine, based on a network slice support capability that is recorded by the first access network device, the target network slice supported by the tracking area of the first access network device.

In an example, when the target network slice in step S2209 includes the first network slice and the third network slice, it is assumed that the tracking area of the first access network device supports the first network slice but does not support the third network slice. In this case, the target network slice that is supported by the tracking area of the first access network device and that is determined by the first access network device in step S2210 is the first network slice.

S2211: The first access network device determines that the first network slice is available in the second cell.

In some embodiments, that the first access network device determines that the first network slice is available in the second cell includes: The first access network device determines that the terminal can access the first network slice in the second cell. For a method for determining, by the first access network device, that the terminal can access the first network slice in the second cell, refer to related descriptions in step S2011b. Details are not described herein again.

S2212: The first access network device notifies the terminal that the first network slice is available in the second cell.

In some embodiments, that the first access network device notifies the terminal that the first network slice is available in the second cell includes: The first access network device notifies, via the mobility management device, the terminal that the first network slice is available in the second cell. For example, step S2212 may include S2212a and S2212b:
S2212a: The first access network device sends notification information to the mobility management device. Correspondingly, the mobility management device receives the notification information from the target access network device.

For step S2212a, refer to the related description in step S2011c. Details are not described herein again.

S2212b: The mobility management device notifies the terminal that the first network slice is available in the second cell.

For step S2212b, refer to the related description in step S2012. Details are not described herein again.

In some other embodiments, the first access network device may notify, via an RRC message, the terminal that the first network slice is available in the second cell.

Optionally, after step S2212, the network slice-based communication method may further include steps S2213 and S2214. Steps S2213 and S2214 are the same as steps S2013 and S2014. For details, refer to related descriptions of steps S2013 and S2014. Details are not described herein again. By using the method in FIG. 22, when determining that the first network slice is available in the second cell, the first access network device notifies the terminal that the first network slice is available in the second cell. For a technical effect brought by the method shown in FIG. 22, refer to the technical effect brought by the method shown in FIG. 20. Details are not described herein again.

FIG. 23 is a schematic flowchart of a method for applying the method shown in FIG. 14 to a specific procedure when a second cell belongs to a second access network device and a network device is the second access network device according to this application. The method shown in FIG. 23 is applicable to the scenario in FIG. 8b. The method includes the following steps:
S2301 to S2310: They are the same as steps S2001 to S2010 shown in FIG. 20. For details, refer to the related description in FIG. 20. Details are not described herein again.
S2311: The mobility management device sends, to the second access network device, the identification information that is of the target network slice and that is stored in step S2304. Correspondingly, the second access network device receives the identification information of the target network slice from the mobility management device.

A manner in which the mobility management device sends the identification information of the target network slice to the second access network device is similar to the manner in which the mobility management device sends the identification information of the target network slice to the first access network device in step S2209 in FIG. 22. For details, refer to related descriptions in step S2209. Details are not described herein again. A difference from FIG. 22 lies in that in an inter-eNodeB handover scenario, the mobility management device may send the identification information of the target network slice to the second access network device after receiving the path switch request message or the handover required message.

S2312: The second access network device determines a target network slice supported by a tracking area of the second access network device.

In some embodiments, the second access network device may determine, based on a network slice support capability that is locally recorded by the second access network device, the target network slice supported by the tracking area of the second access network device.

In an example, when the target network slice in step S2311 includes the first network slice and the third network slice, it is assumed that the tracking area of the second access network device supports the first network slice but does not support the third network slice. In this case, the target network slice that is supported by the tracking area of the second access network device and that is determined by the second access network device in step S2312 is the first network slice. S2313: The second access network device determines that the first network slice is available in the second cell.

In some embodiments, that the second access network device determines that the first network slice is available in the second cell includes: The second access network device determines that the terminal can access the first network slice in the second cell. For a method for determining, by the second access network device, that the terminal can access the first network slice in the second cell, refer to related descriptions in step S2011b. Details are not described herein again.

S2314: The second access network device notifies the terminal that the first network slice is available in the second cell.

A manner in which the second access network device notifies the terminal that the first network slice is available in the second cell is similar to the manner in which the first access network device notifies the terminal that the first network slice is available in the second cell in step S2212 in FIG. 22. For details, refer to related descriptions in step S2212. Details are not described herein again. Optionally, after step S2314, the network slice-based communication method may further include steps S2315 and S2316. Steps S2315 and S2316 are the same as steps S2013 and S2014. For details, refer to related descriptions of steps S2013 and S2014. Details are not described herein again. By using the method in FIG. 23, when determining that the first network slice is available in the second cell, the second access network device notifies the terminal that the first network slice is available in the second cell. For a technical effect brought by the method shown in FIG. 23, refer to the technical effect brought by the method shown in FIG. 20. Details are not described herein again.

FIG. 24 is a schematic flowchart of a method for applying the method in FIG. 15 to a specific procedure when a network device is a mobility management device according to this application. The method shown in FIG. 24 is applicable to the scenario in FIG. 8a. The method includes the following steps:
S2401 to S2407: They are the same as steps S2001 to S2007 shown in FIG. 20. For details, refer to the related descriptions of steps S2001 to S2007. Details are not described herein again. S2408: Perform handover, to hand over the terminal from a first cell to a second cell.

The second cell is a cell in the second TA. A third cell whose physical coverage is the same as that of the second cell exists under the access network device to which the second cell belongs, and the third cell is a cell in the third TA.

In some embodiments, when the second cell belongs to the second access network device, and the handover type is Xn handover, after step S2408, handover of the terminal in the access network is completed, and step S2409a continues to be performed.

In some embodiments, when the second cell belongs to the second access network device, and the handover type is N2 handover, after step S2408, the first access network device determines to trigger N2 handover, and step S2409b continues to be performed.

It may be understood that when the second cell belongs to the first access network device, steps S2409a and S2409b are not performed.

S2409a: It is similar to step S2009a shown in FIG. 20. For details, refer to related descriptions of step S2009a. Details are not described herein again. After the mobility management device receives the path switch request message from the second access network device, step S2411 is performed.

S2409b: It is similar to step S2009b shown in FIG. 20. For details, refer to related descriptions of step S2009b. Details are not described herein again. After the mobility management device receives the handover required message from the first access network device, step S2411 is performed.

S2410: It is the same as step S2010 shown in FIG. 20. For details, refer to related descriptions of step S2010. Details are not described herein again.

S2411: The mobility management network element determines a target network slice available in the third cell.

For the description of the target network slice available in the third cell, refer to the description of the target network slice available in the second cell in step S2011. Details are not described herein again.

In different embodiments of this application, manners in which the mobility management device determines a target network slice available in the third cell may also be different. For example:
In some embodiments, that the mobility management device determines a target network slice available in the third cell includes: The mobility management device queries the context of the target access network device, and determines whether the network slice supported by the tracking area of the target access network device includes the target network slice.

When the second cell belongs to the second access network device, a target access network device is the second access network device; or when the second cell belongs to the first access network device, a target access network device is the first access network device.

In this application, a description is made through an example in which the context of the target access network device indicates that a tracking area (that is, the third TA) in which the third cell is located supports the first network slice but a tracking area (that is, the second TA) in which the second cell is located does not support the first network slice. The second TA and the third TA are TAs of the target access network device, and the second cell and the third cell are cells of the target access network device.

In some other embodiments, that the mobility management device determines a target network slice available in the third cell includes:
S2411a: The mobility management device sends, to a target access network device, identification information of a target network slice supported by a tracking area of the target access network device. Correspondingly, the target access network device receives, from the mobility management device, the identification information of the target network slice supported by the tracking area of the target access network device.

For details, refer to the related description in step S2011a. Details are not described herein again. S2411b: The target access network device determines, based on a measurement report reported by the terminal, whether the terminal can access the first network slice in the third cell.

In some embodiments, the target access network device first determines whether the third TA in which the third cell is located supports the first network slice. In this application, an example in which the third TA supports the first network slice is used for description. Then, the target access network device may determine, based on cell signal quality in the measurement report, whether the terminal can access the first network slice in the third cell. For details, refer to the related description in step S2011b. Details are not described herein again.

S2411c: The target access network device sends notification information to the mobility management device. Correspondingly, the mobility management device receives the notification information from the target access network device.

The notification information is for notifying that the terminal can access the first network slice in the third cell. For a notification manner, refer to step S2011c. Details are not described herein again. That is to say, that the mobility management device determines that the first network slice is available in the third cell includes: The mobility management device sends the identification information of the first network slice to the target access network device, and learns, from the target access network device, that the terminal can access the first network slice in the third cell. S2412: The mobility management device notifies the terminal that the first network slice is available in the third cell.

In some embodiments, the mobility management device may send a NAS message to the terminal, and notify the terminal via the NAS message that the first network slice is available in the third cell. For a notification manner, refer to step S2012. Details are not described herein again.

In some embodiments, after the mobility management device notifies the terminal that the first network slice is available in the third cell, the terminal learns that the first network slice is available in the third cell. In this scenario, the terminal may perform cell reselection by itself, to access the third cell, and access the first network slice via the third cell; or the terminal may initiate a registration request in the second cell to request to access the first network slice. Then, the target access network device redirects the terminal to the third cell via an RRC connection release message, so that the terminal accesses the first network slice via the third cell. For details, refer to the procedure shown in FIG. 5. Details are not described herein again.

Optionally, after step S2412, the network slice-based communication method may further include steps S2413 and S2414. Steps S2413 and S2414 are the same as steps S2013 and S2014. For details, refer to the foregoing related descriptions. Details are not described herein again.

Based on this solution, when the terminal is handed over from the first cell to the second cell, and the mobility management device determines that the first network slice is available in the third cell, the terminal is notified that the first network slice is available in the third cell, so that when still intending to access the first network slice, the terminal may access the first network slice in the third cell, thereby improving a success rate of accessing the first network slice, and using a service provided by the first network slice.

FIG. 25 is a schematic flowchart of a method for applying the method shown in FIG. 15 to a specific procedure when a second cell belongs to a first access network device and a network device is the first access network device according to this application. The method includes the following steps:
S2501 to S2507: They are the same as steps S2201 to S2207 shown in FIG. 22. For details, refer to the related descriptions of steps S2201 to S2207. Details are not described herein again. S2508: Perform handover, to hand over the terminal from a first cell to a second cell.

The second cell is a cell in the second TA. A third cell whose physical coverage is the same as that of the second cell exists under the first access network device to which the second cell belongs, and the third cell is a cell in the third TA.

After S2508 ends, it may be considered that the terminal completes the handover from the first cell to the second cell.

S2509: The mobility management device sends, to the first access network device, the identification information that is of the target network slice and that is stored in step S2504. Correspondingly, the first access network device receives the identification information of the target network slice from the mobility management device.

For details, refer to the related description in step S2209. Details are not described herein again. S2510: The first access network device determines a target network slice supported by a tracking area of the first access network device.

For details, refer to the related description in step S2210. Details are not described herein again. S2511: The first access network device determines that the first network slice is available in the third cell.

In some embodiments, that the first access network device determines that the first network slice is available in the third cell includes: The first access network device determines that the terminal can access the first network slice in the third cell. For a method for determining, by the first access network device, that the terminal can access the first network slice in the third cell, refer to related descriptions in step S2411b. Details are not described herein again.

S2512: The first access network device notifies the terminal that the first network slice is available in the third cell.

For a notification manner, refer to the manner in which the first access network device notifies the terminal that the first network slice is available in the second cell in step S2212. Details are not described herein again.

In some embodiments, after the first access network device notifies the terminal that the first network slice is available in the third cell, the terminal learns that the first network slice is available in the third cell. In this scenario, the terminal may perform cell reselection by itself, to access the third cell, and access the first network slice via the third cell; or the terminal may initiate a registration request in the second cell to request to access the first network slice. Then, the target access network device redirects the terminal to the third cell via an RRC connection release message, so that the terminal accesses the first network slice via the third cell. For details, refer to the procedure shown in FIG. 5. Details are not described herein again.

Optionally, after step S2512, the network slice-based communication method may further include steps S2513 and S2514. Steps S2513 and S2514 are the same as steps S2013 and S2014. For details, refer to related descriptions of steps S2013 and S2014. Details are not described herein again. By using the method in FIG. 25, when determining that the first network slice is available in the third cell, the first access network device notifies the terminal that the first network slice is available in the third cell. For a technical effect brought by the method shown in FIG. 25, refer to the technical effect brought by the method shown in FIG. 24. Details are not described herein again. FIG. 26 is a schematic flowchart of a method for applying the method shown in FIG. 15 to a specific procedure when a second cell belongs to a second access network device and a network device is the second access network device according to this application. The method shown in FIG. 26 is applicable to the scenario in FIG. 8a. The method includes the following steps: S2601 to S2607: They are the same as steps S2001 to S2007 shown in FIG. 20. For details, refer to the related descriptions of steps S2001 to S2007. Details are not described herein again. S2608: Perform handover, to hand over the terminal from a first cell to a second cell.

The second cell is a cell in the second TA. A third cell whose physical coverage is the same as that of the second cell exists under the access network device to which the second cell belongs, and the third cell is a cell in the third TA.

In some embodiments, when the second cell belongs to the second access network device, and the handover type is Xn handover, after step S2608, handover of the terminal in the access network is completed, and step S2609a continues to be performed.

In some embodiments, when the second cell belongs to the second access network device, and the handover type is N2 handover, after step S2608, the first access network device determines to trigger N2 handover, and step S2609b continues to be performed.

S2609a: It is similar to step S2009a shown in FIG. 20. For details, refer to related descriptions of step S2009a. Details are not described herein again. After the mobility management device receives the path switch request message from the second access network device, step S2411 is performed.

S2609b: It is similar to step S2009b shown in FIG. 20. For details, refer to related descriptions of step S2009b. Details are not described herein again. After the mobility management device receives the handover required message from the first access network device, step S2411 is performed.

S2610: It is the same as step S2010 shown in FIG. 20. For details, refer to related descriptions of step S2010. Details are not described herein again.

S2611: The mobility management device sends, to the second access network device, the identification information that is of the target network slice and that is stored in step S2604. Correspondingly, the second access network device receives the identification information of the target network slice from the mobility management device.

S2612: The second access network device determines a target network slice supported by a tracking area of the second access network device.

For details, refer to the related description in steps S2311 and S2312. Details are not described herein again.

S2613: The second access network device determines that the first network slice is available in the third cell.

In some embodiments, that the second access network device determines that the first network slice is available in the third cell includes: The second access network device determines that the terminal can access the first network slice in the third cell. For a method for determining, by the second access network device, that the terminal can access the first network slice in the third cell, refer to related descriptions in step S2411b. Details are not described herein again.

S2614: The second access network device notifies the terminal that the first network slice is available in the third cell.

For a notification manner, refer to the manner in which the first access network device notifies the terminal that the first network slice is available in the second cell in step S2212. Details are not described herein again.

In some embodiments, after the second access network device notifies the terminal that the first network slice is available in the third cell, the terminal learns that the first network slice is available in the third cell. In this scenario, the terminal may perform cell reselection by itself, to access the third cell, and access the first network slice via the third cell; or the terminal may initiate a registration request in the second cell to request to access the first network slice. Then, the target access network device redirects the terminal to the third cell via an RRC connection release message, so that the terminal accesses the first network slice via the third cell. For details, refer to the procedure shown in FIG. 5. Details are not described herein again.

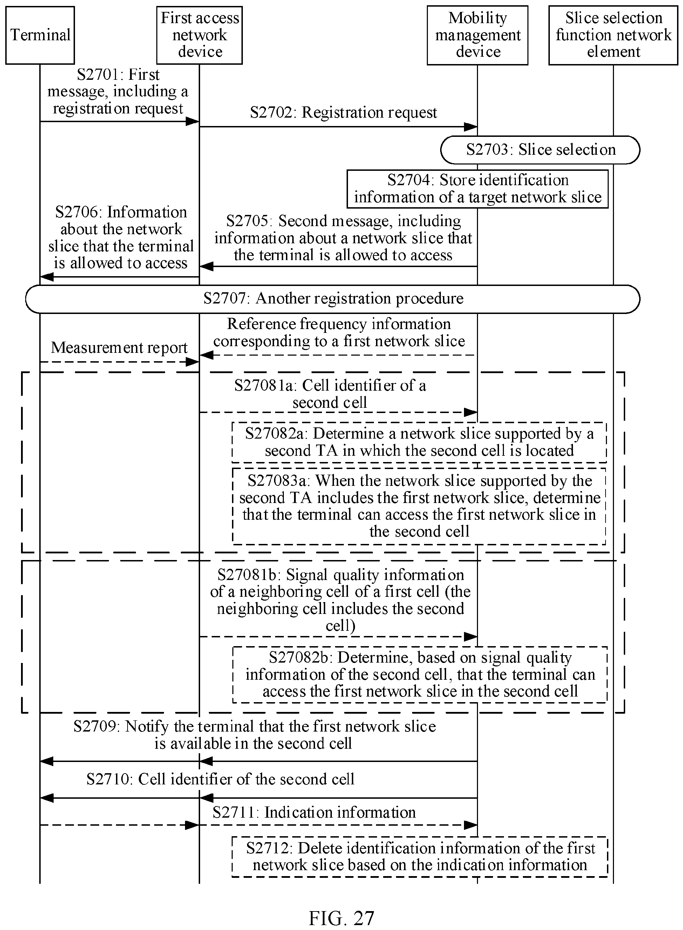

Optionally, after step S2614, the network slice-based communication method may further include steps S2615 and S2616. Steps S2615 and S2616 are the same as steps S2013 and S2014. For details, refer to related descriptions of steps S2013 and S2014. Details are not described herein again. By using the method in FIG. 26, when determining that the first network slice is available in the third cell, the second access network device notifies the terminal that the first network slice is available in the third cell. For a technical effect brought by the method shown in FIG. 26, refer to the technical effect brought by the method shown in FIG. 24. Details are not described herein again. FIG. 27 is a schematic flowchart of a method for applying the method in FIG. 16 to a specific procedure when a network device is a mobility management device according to this application. The method includes the following steps:
S2701: A terminal sends a first message to a first access network device. Correspondingly, the first access network device receives the first message from the terminal.

The terminal sends the first message to the first access network device via a first cell of the first access network device. That is to say, the terminal accesses a network in the first cell. The first cell is a cell in a first TA of the first access network device.

The first message includes a registration request, the registration request includes information (for example, requested NSSAI) about a network slice that the terminal requests to access, and the information about the network slice that the terminal requests to access includes identification information of a first network slice. That is to say, the first network slice is included in a network slice that the terminal requests to access in the first cell. Further, the information about the network slice that the terminal requests to access may further include identification information of the second network slice.

In some embodiments, the first access network device may be an access network device in a first network. For the first network, refer to the foregoing related description. Details are not described herein again.

S2702: The first access network device sends a registration request to a mobility management device. Correspondingly, the mobility management device receives the registration request from the first access network device.

The registration request is received by the first access network device from the terminal in step S2701. Therefore, step S2701 and step S2702 may be understood as that the mobility management device receives, via the first cell, the information about the network slice that the terminal requests to access.

S2703: The mobility management device performs slice selection.

For example, the mobility management device may perform slice selection by interacting with a network slice selection function network element.

In step S2703, the mobility management device may determine the first network slice, and the first network slice does not belong to the network slice that the terminal is allowed to access in the first cell. Therefore, S2701 to S2703 may be understood as specific implementation of determining the first network slice by the mobility management device.

In step S2703, the mobility management device further determines a registration area of the terminal. In this application, a description is made through an example in which the registration area of the terminal includes the first cell and the second cell. The second cell is a neighboring cell of the first cell, and may belong to the first access network device, that is, the first cell and the second cell belong to a same access network device; or may belong to the second access network device, that is, the first cell and the second cell belong to different access network devices. S2704: The mobility management device stores identification information of a target network slice, where the target network slice includes a first network slice.

For example, in this application, a description is made through an example in which the stored target network slice includes the first network slice and the third network slice. To be specific, the terminal requests to access the first network slice, the second network slice, and the third network slice in the first cell, a network slice that the terminal is allowed to access in the first cell is the second network slice, and a network slice that the terminal is rejected to access includes the first network slice and the third network slice.

In some embodiments, the mobility management device serving the terminal may send, when being subsequently handed over, the identification information of the target network slice to a mobility management device to which the handover is made. When the mobility management device serving the terminal is handed over, the mobility management network element after step S2704 may be considered as the mobility management network element to which the handover is made.

S2705: The mobility management network element sends a second message to the first access network device. Correspondingly, the first access network device receives the second message from the mobility management network element.

The second message includes information about the network slice that the terminal is allowed to access.

In some embodiments, the second message may be an N2 message.

It should be noted that step S2705 and step S2704 are not performed in a necessary sequence. Step S2704 may be performed first, and then step S2705 is performed. Alternatively, step S2705 may be performed first, and then step S2704 is performed. Alternatively, step S2704 and step S2705 may be simultaneously performed. This is not specifically limited in this application.

S2706: The first access network device sends, to the terminal, information about a network slice that the terminal is allowed to access. Correspondingly, the terminal receives, from the first access network device, the information about the network slice that the terminal is allowed to access. S2707: Another registration procedure.

After step S2007, the registration procedure is completed, and the terminal accesses the second network slice.

S2708: The mobility management device determines that the first network slice is available in the second cell.

In different embodiments of this application, methods for determining, by the mobility management device, that the first network slice is available in the second cell may be different. For example, in some embodiments, that the mobility management device determines that the first network slice is available in the second cell may include:
S27081a: The first access network device sends a cell identifier of the second cell to the mobility management device. Correspondingly, the mobility management device receives the cell identifier of the second cell from the first access network device.

In a possible implementation, because the second cell is a neighboring cell of the first cell, the terminal may measure the neighboring cell of the first cell, and report a measurement report to the first access network device. The measurement report may include an identifier of the neighboring cell of the first cell and quality of the neighboring cell. After receiving the measurement report from the terminal, the first access network device may perform step S27081a when the measurement report includes the cell identifier of the second cell.

In an example, the first access network device may determine, through the following method, the cell identifier of the second cell that is reported to the mobility management device:
Before step S27081a, the mobility management device may send, to the first access network device, reference frequency information corresponding to the first network slice. After receiving the measurement report reported by the terminal, the first access network device may determine the second cell based on the reference frequency information, and therefore report the cell identifier of the second cell to the mobility management device. For example, the second cell is a cell on a frequency indicated by the reference frequency information. When a plurality of cells exist on the frequency indicated by the reference frequency information, the second cell may be a cell whose signal quality is greater than a second threshold in the plurality of cells.

In addition, after receiving the reference frequency information corresponding to the first network slice, the first access network device may configure the frequency indicated by the reference frequency information as a measurement object and send the measurement object to the terminal, so that the terminal can measure the frequency.

S27082a: The mobility management device determines a network slice supported by a second TA. The second TA is a TA in which the second cell is located.

In a possible implementation, the mobility management device may determine the network slice supported by the second TA through information about the network slice that is reported by the first access network device when establishing or updating an N2 connection.

S27083a: When the network slice supported by the second TA includes the first network slice, the mobility management device determines that the terminal can access the first network slice in the second cell.

In some embodiments, that the mobility management device determines that the first network slice is available in the second cell may include:
S27081b: The first access network device sends signal quality information of the neighboring cell of the first cell to the mobility management device. Correspondingly, the mobility management device receives the signal quality information of the neighboring cell of the first cell from the first access network device.

The neighboring cell of the first cell includes the second cell, that is, the signal quality information of the neighboring cell includes signal quality information of the second cell.

In a possible implementation, the first access network device sends, to the mobility management device, signal quality information that is of all neighboring cells of the first cell and that is reported by the terminal.

In another possible implementation, the signal quality information that is of the neighboring cell of the first cell and that is sent by the first access network device to the mobility management device may be signal quality of the cell on the frequency indicated by the reference frequency information corresponding to the first network slice. The reference frequency information corresponding to the first network slice may be sent by the mobility management device to the first access network device before step S27081b.

S27082b: The mobility management device determines, based on the signal quality information of the second cell, that the terminal can access the first network slice in the second cell.

In a possible implementation, the mobility management device may first determine whether the second TAin which the second cell is located supports the first network slice; and further determine, when the second TA supports the first network slice, whether the cell signal quality indicated by the signal quality information of the second cell is greater than the second threshold, and determine, when the cell signal quality of the second cell is greater than the second threshold, that the terminal can access the first network slice in the second cell.

Regardless of the manner of steps S27081a to S27083a or the manner of steps S27082a and S27082b, the mobility management device may determine that the first network slice is available in the second cell before the handover procedure occurs.

It may be understood that the mobility management device may also determine whether the third network slice is available in the second cell. An example in which the third network slice is unavailable in the second cell is used for description in this application.

S2709: The network device notifies the terminal that the first network slice is available in the second cell.

For a notification manner, refer to the manner in which the first access network device notifies the terminal that the first network slice is available in the second cell in step S2012. Details are not described herein again.

S2710: The mobility management device sends the cell identifier of the second cell to the terminal.

Correspondingly, the terminal receives the cell identifier of the second cell from the mobility management device.

In some embodiments, the cell identifier of the second cell may be used to hand over the terminal from the first cell to the second cell, so as to access the first network slice in the second cell.

In some embodiments, the cell identifier of the second cell and information for notifying the terminal that the first network slice is available in the second cell may be carried in one message; or may be carried in different messages. This is not specifically limited in this application. Optionally, after step S2710, the network slice-based communication method may further include steps S2711 and S2712. Steps S2711 and S2712 are the same as steps S2013 and S2014. For details, refer to related descriptions of steps S2013 and S2014. Details are not described herein again. Based on the solution of this application, when determining that the first network slice is available in the second cell, the mobility management device notifies the terminal that the first network slice is available in the second cell, and sends the cell identifier of the second cell, so that when still intending to access the first network slice, the terminal may access the second cell, and initiate a registration procedure to request to access the first network slice, thereby improving a success rate of accessing the first network slice, and using a service provided by the first network slice.

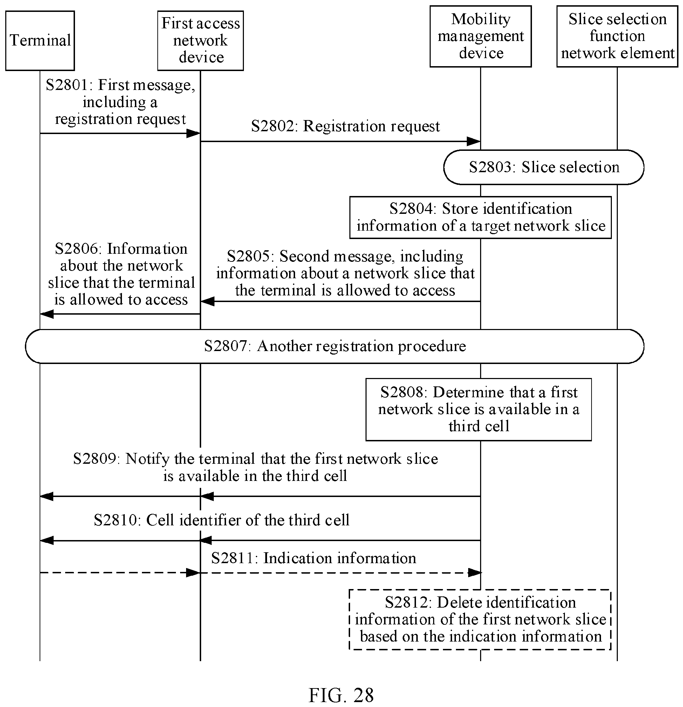

FIG. 28 is a schematic flowchart of a method for applying the method in FIG. 17 to a specific procedure when a network device is a mobility management device according to this application. The method includes the following steps:
S2801 to S2807: They are the same as steps S2701 to S2707 shown in FIG. 27. For details, refer to the related descriptions of steps S2701 to S2707. Details are not described herein again. S2808: The mobility management device determines that the first network slice is available in the third cell.

Physical coverage of the third cell completely or partially overlaps physical coverage of the second cell.

In some embodiments, the third cell may be referred to as a cell whose physical coverage is the same as that of the second cell.

For a method for determining, by the mobility management device, that the first network slice is available in the third cell, refer to the method for determining, by the mobility management device, that the first network slice is available in the second cell in step S2708. Details are not described herein again.

It may be understood that when the first network slice is available in the third cell, cells on the frequency indicated by the reference frequency information corresponding to the first network slice include the third cell, but do not include the second cell.

S2809: The network device notifies the terminal that the first network slice is available in the third cell.

For a notification manner, refer to the manner in which the first access network device notifies the terminal that the first network slice is available in the second cell in step S2012. Details are not described herein again.

S2810: The mobility management device sends the cell identifier of the third cell to the terminal. Correspondingly, the terminal receives the cell identifier of the third cell from the mobility management device.

In some embodiments, the cell identifier of the third cell may be used to hand over the terminal from the second cell to the third cell, so as to access the first network slice in the third cell. Optionally, after step S2810, the network slice-based communication method may further include steps S2811 and S2812. Steps S2811 and S2812 are the same as steps S2013 and S2014. For details, refer to related descriptions of steps S2013 and S2014. Details are not described herein again. Based on this solution, when the neighboring cell of the first cell accessed by the terminal includes the second cell, the third cell whose physical coverage is the same as that of the second cell exists, and the mobility management device determines that the first network slice is available in the third cell, the terminal is notified that the first network slice is available in the third cell, and the cell identifier of the third cell is sent, so that when still intending to access the first network slice, the terminal may access the third cell and request to access the first network slice.

The foregoing describes application of the method implemented by the network device in a specific procedure. The following describes in detail the method implemented by the terminal shown in FIG. 18. The method may be applied to the foregoing process in which the network device notifies the terminal that the first network slice is available in the second cell. In other words, the method may be considered as implementation of the terminal after the network device notifies the terminal that the first network slice is available in the second cell in FIG. 20 to FIG. 23 or FIG. 27.

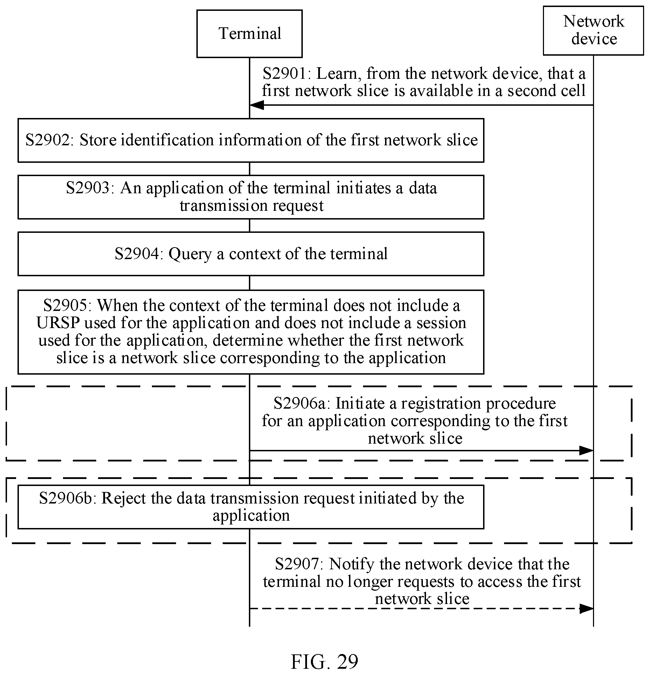

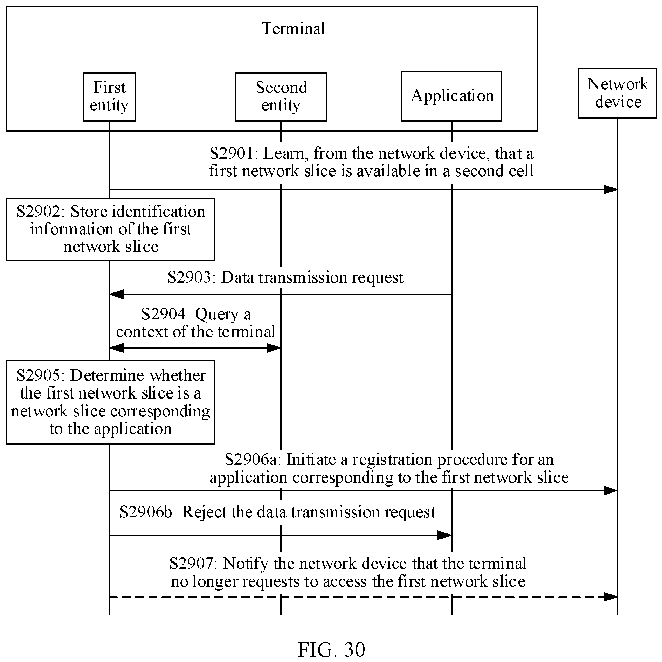

FIG. 29 and FIG. 30 shows a network slice-based communication method for a terminal according to this application. The method includes:
S2901: The terminal learns, from a network device, that a first network slice is available in a second cell.

The first network slice does not belong to a network slice that the terminal is allowed to access in a first cell, and a registration area of the terminal includes the first cell and the second cell. For details, refer to the foregoing related descriptions. Details are not described herein again.

In some embodiments, refer to FIG. 30. Step S2901 may be: A first entity of the terminal learns, from a network device, that a first network slice is available in a second cell.

In an example, the first entity may be a hardware structure of the terminal.

S2902: The terminal stores identification information of the first network slice.

In some embodiments, refer to FIG. 30. Step S2902 may be: The first entity of the terminal stores identification information of the first network slice.

S2903: An application of the terminal initiates a data transmission request.

In some embodiments, refer to FIG. 30. Step S2903 may be: The application of the terminal initiates a data transmission request to the first entity of the terminal.

S2904: The terminal queries a context of the terminal.

The context of the terminal includes a URSP and information about a session available to the terminal. When the context of the terminal does not include the URSP used for the application and does not include the session used for the application, it indicates that a network slice corresponding to the data transmission request does not belong to the network slice that the terminal is allowed to access in the first cell, and therefore step S2905 is performed.

In some embodiments, refer to FIG. 30. Step S2904 may be: The first entity of the terminal interacts with a second entity of the terminal to complete query of the context of the terminal.

In an example, the second entity may be a component that is included in the terminal and that is configured to store the context of the terminal.

S2905: The terminal determines whether the first network slice is a network slice corresponding to the application.

In other words, the terminal determines whether the first network slice is the network slice corresponding to the application in response to that the context of the terminal does not include the session used for the application and does not include the URSP used for the application. When the first network slice is the network slice corresponding to the application, the application is an application corresponding to the first network slice, and the terminal further performs step S2906a.

Alternatively, when the first network slice is not the network slice corresponding to the application, step S2906b is performed.

In some embodiments, refer to FIG. 30. Step S2905 may be: The first entity of the terminal determines whether the first network slice is a network slice corresponding to the application. S2906a: The terminal initiates a registration procedure for an application corresponding to the first network slice.

In some embodiments, refer to FIG. 30. Step S2906a may be: The first entity of the terminal initiates a registration procedure for an application corresponding to the first network slice.

In some embodiments, for example, when implementation of the terminal shown in FIG. 29 is applied to the scenario shown in FIG. 27, the terminal further receives a cell identifier from the network device, where the cell identifier is used for the second cell. In other words, the terminal further receives the cell identifier of the second cell from the network device.

In this scenario, that the terminal initiates the registration procedure for the application corresponding to the first network slice may include: The terminal accesses the second cell, and initiates a registration procedure for the application via the second cell.

In some embodiments, the terminal requests to access the first network slice in the registration procedure initiated for the application.

S2906b: The terminal rejects the data transmission request initiated by the application.

In some embodiments, refer to FIG. 30. Step S2906b may be: The first entity of the terminal rejects the data transmission request initiated by the application.

Optionally, the network slice-based communication method provided in this application further includes step S2907:
S2907: The terminal notifies the network device that the terminal no longer requests to access the first network slice. Correspondingly, the network device learns, from the terminal, that the terminal no longer requests to access the first network slice.

In some embodiments, refer to FIG. 30. Step S2907 may be: The first entity of the terminal notifies the network device that the terminal no longer requests to access the first network slice.

In some embodiments, the terminal may send indication information to the network device, where the indication information indicates that the terminal no longer requests to access the first network slice.

In some embodiments, after receiving the indication information, the network device may delete, based on the indication information, the identification information of the first network slice stored in the network device. For details, refer to the foregoing related descriptions. Details are not described herein again.

In some embodiments, after first duration starting from a first moment, the terminal notifies the network device that the terminal no longer requests to access the first network slice, where the first moment is a moment at which the terminal learns, from the network device, that the first network slice is available in the second cell. In other words, if the application of the terminal does not request to use the first network slice available in the second cell over a period of time, the terminal may notify the network device that the terminal no longer requests to access the first network slice. Optionally, in some embodiments, when the terminal is handed over after learning, from the network device, that the first network slice is available in the second cell, and does not learn a new available network slice from the network device after the handover, the terminal may delete the identification information of the first network slice stored in the terminal.

Based on this solution, the terminal may learn, from the network device, that the first network slice is available in the second cell, and therefore may initiate, when an application of the terminal corresponds to the first network slice, a registration procedure for the application to request to access the first network slice, thereby improving a success rate of accessing the first network slice. It may be understood that when the terminal learns, from the network device, that the first network slice is available in the third cell, implementation of the terminal is similar to that of the method shown in FIG. 29 or FIG. 30, and the second cell may be replaced with the third cell for understanding. For details, refer to the foregoing related description. Details are not described herein again.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that in the foregoing embodiments, method and/or a step implemented by each device may alternatively be implemented by a component (for example, a chip or a circuit) that can be used for the device.

The foregoing mainly describes the solutions provided in this application from the perspective of interaction between devices. Correspondingly, this application further provides a communication apparatus, and the communication apparatus is configured to implement the foregoing methods. The communication apparatus may be the network device in the foregoing method embodiments, an apparatus including the foregoing network device, or a component that can be used for the network device. Alternatively, the communication apparatus may be the terminal in the foregoing method embodiments, an apparatus including the foregoing terminal, or a component that can be used for the terminal.

It may be understood that to implement the foregoing functions, the communication apparatus includes a hardware structure and/or a software module for performing a corresponding function. A person skilled in the art should be easily aware that, based on the units and the algorithm steps in the examples described in embodiments disclosed in this specification, this application can be implemented through hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software function module. It should be noted that the module division in embodiments of this application is an example, and is merely logical function division. There may be another division manner in an actual implementation.

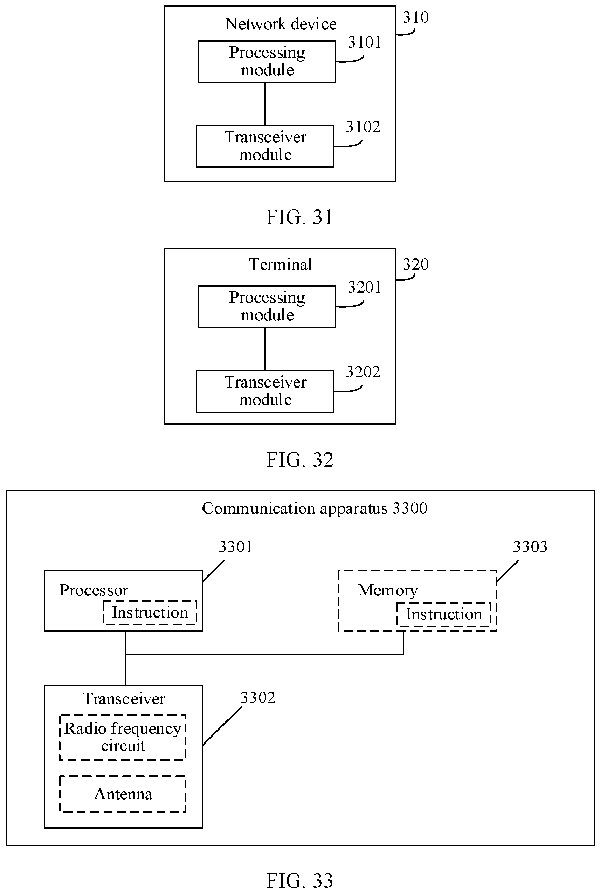

For example, the communication apparatus is the network device in the foregoing method embodiments. FIG. 31 is a schematic diagram of a structure of a network device 310. The network device 310 includes a processing module 3101 and a transceiver module 3102.

In some embodiments, the network device 310 may further include a storage module (not shown in FIG. 31), configured to store program instructions and data.

In some embodiments, the transceiver module 3102 may also be referred to as a transceiver unit, and is configured to implement a sending function and/or a receiving function. The transceiver module 3102 may include a transceiver circuit, a transceiver machine, a transceiver, or a communication interface.

In some embodiments, the transceiver module 3102 may include a receiving module and a sending module, respectively configured to perform receiving-type steps and sending-type steps performed by the network device in the foregoing method embodiments, and/or configured to support another process of the technology described in this specification; and the processing module 3101 may be configured to perform processing-type (for example, determining and obtaining) steps performed by the network device in the foregoing method embodiments, and/or configured to support another process of the technology described in this specification.

In some implementation scenarios, the transceiver module 3102 is configured to receive, via a first access network device in a first network, information about a network slice that a terminal requests to access, where the information about the network slice that the terminal requests to access includes identification information of a first network slice not supported by a first tracking area and includes identification information of a second network slice, the first tracking area is a tracking area of the first access network device, and a second tracking area in the first network supports the first network slice; the processing module 3101 is configured to determine a network slice that the terminal is allowed to access, where the network slice that the terminal is allowed to access includes the second network slice; the processing module 3101 is further configured to determine a registration area, where the registration area excludes a tracking area that supports the first network slice and the second network slice, or the registration area excludes a tracking area of an access network device that supports the first network slice and the second network slice; and the transceiver module 3102 is further configured to send information about the registration area to the terminal.

In a possible implementation, the processing module 3101 is further configured to determine a network slice that the terminal is rejected to access, where the network slice that the terminal is rejected to access includes the first network slice.

In a possible implementation, the processing module 3101 is further configured to determine a network slice supported by the tracking area of the first access network device.

In some implementation scenarios, the processing module 3101 is configured to determine a network slice that a terminal is allowed to access and a network slice that the terminal is rejected to access; the processing module 3101 is further configured to determine a registration area of the terminal based on the network slice that the terminal is allowed to access and the network slice that the terminal is rejected to access; and the transceiver module 3102 is configured to send information about the registration area to the terminal.

In a possible implementation, the transceiver module 3102 is further configured to receive, via a first access network device in a first network, information about a network slice that the terminal requests to access, where the information about the network slice that the terminal requests to access includes identification information of a first network slice not supported by a first tracking area and includes identification information of a second network slice supported by the first tracking area, and the first tracking area is a tracking area of the first access network device. The network slice that the terminal is allowed to access includes the second network slice, and the network slice that the terminal is rejected to access includes the first network slice; and the registration area excludes a tracking area that supports the first network slice and the second network slice, or the registration area excludes a tracking area of an access network device that supports the first network slice and the second network slice.

In a possible implementation, the processing module 3101 is further configured to determine a network slice supported by the tracking area of the first access network device.

In some implementation scenarios, the processing module 3101 is configured to determine a first network slice, where the first network slice does not belong to a network slice that the terminal is allowed to access in a first cell, and a registration area of the terminal includes the first cell and a second cell; the processing module 3101 is further configured to determine, when the terminal is handed over from the first cell to the second cell, that the first network slice is available in the second cell; and the transceiver module 3102 is further configured to notify the terminal that the first network slice is available in the second cell.

In a possible implementation, that the processing module 3101 is configured to determine the first network slice includes: The processing module 3101 is configured to control the transceiver module 3102 to receive, via the first cell, information about a network slice that the terminal requests to access, where the information about the network slice that the terminal requests to access includes identification information of the first network slice; the processing module 3101 is further configured to determine a network slice that the terminal is allowed to access; and the processing module 3101 is further configured to learn that the first network slice does not belong to the network slice that the terminal is allowed to access in the first cell.

In a possible implementation, that the processing module 3101 is configured to determine that the first network slice is available in the second cell includes: The processing module 3101 is configured to query a context of the target access network device, where the context of the target access network device indicates that a tracking area of the target access network device supports the first network slice, where the second cell is a cell in the tracking area of the target access network device.

In a possible implementation, that the processing module 3101 is configured to determine that the first network slice is available in the second cell includes: The processing module 3101 is configured to control the transceiver module 3102 to send identification information of the first network slice to the target access network device; and the processing module 3101 is further configured to learn, from the target access network device, that the terminal can access the first network slice in the second cell.

In a possible implementation, that the processing module 3101 is configured to determine that the first network slice is available in the second cell includes: The processing module 3101 is configured to determine, when the transceiver module 3102 receives a path switch request message from the second access network device, that the first network slice is available in the second cell; or the processing module 3101 is configured to determine, when the transceiver module 3102 receives a handover required message from the first access network device, that the first network slice is available in the second cell, where the handover required message includes an identifier of the second access network device.

In a possible implementation, the processing module 3101 is further configured to store identification information of the first network slice; the transceiver module 3102 is further configured to receive indication information from the terminal; and the processing module 3101 is further configured to delete the identification information of the first network slice based on the indication information.

In a possible implementation, that the processing module 3101 is configured to determine the first network slice includes: The processing module 3101 is configured to control the transceiver module 3102 to send, to a mobility management device, information about a network slice that the terminal requests to access, where the information about the network slice that the terminal requests to access includes identification information of the first network slice; and the processing module 3101 is further configured to learn, from the mobility management device, that the first network slice does not belong to a network slice that the terminal is allowed to access in the first cell.

In a possible implementation, that the processing module 3101 is configured to determine the first network slice includes: When the terminal is handed over from the first access network device to the second access network device, the processing module 3101 is configured to learn, from the mobility management device, that the first network slice does not belong to the network slice that the terminal is allowed to access in the first cell.

In a possible implementation, that the processing module 3101 is configured to determine that the first network slice is available in the second cell includes: The processing module 3101 is configured to determine that the terminal can access the first network slice in the second cell.

In some implementation scenarios, the processing module 3101 is configured to determine a first network slice, where the first network slice does not belong to a network slice that the terminal is allowed to access in a first cell, and a registration area of the terminal includes the first cell and a second cell; the processing module 3101 is further configured to determine, when the terminal is handed over from the first cell to the second cell, that the first network slice is available in the third cell, where physical coverage of the third cell partially or completely overlaps physical coverage of the second cell; and the transceiver module 3102 is further configured to notify the terminal that the first network slice is available in the third cell.

In some implementation scenarios, the processing module 3101 is configured to determine a first network slice, where the first network slice does not belong to a network slice that the terminal is allowed to access in a first cell, and a registration area of the terminal includes the first cell and a second cell; the processing module 3101 is further configured to determine that the first network slice is available in the second cell; the transceiver module 3102 is configured to notify the terminal that the first network slice is available in the second cell; and the transceiver module 3102 is further configured to send a cell identifier of the second cell to the terminal.

In a possible implementation, that the processing module 3101 is configured to determine the first network slice includes: The processing module 3101 is configured to control the transceiver module 3102 to receive, via the first cell, information about a network slice that the terminal requests to access, where the information about the network slice that the terminal requests to access includes identification information of the first network slice; the processing module 3101 is further configured to determine a network slice that the terminal is allowed to access; and the processing module 3101 is further configured to learn that the first network slice does not belong to the network slice that the terminal is allowed to access in the first cell.

In a possible implementation, that the processing module 3101 is configured to determine that the first network slice is available in the second cell includes: The processing module 3101 is configured to control the transceiver module 3102 to receive the cell identifier of the second cell from a first access network device, where the second cell is a neighboring cell of the first cell, and the network device determines that the terminal can access the first network slice in the second cell.

In a possible implementation, that the processing module 3101 is configured to determine that the first network slice is available in the second cell includes: The processing module 3101 is configured to control the transceiver module 3102 to receive signal quality information of a neighboring cell of the first cell from a first access network device, where the neighboring cell of the first cell includes the second cell; and the processing module 3101 is further configured to determine, based on the signal quality information of the second cell, that the terminal can access the first network slice in the second cell.

In a possible implementation, the transceiver module 3102 is further configured to send reference frequency information corresponding to the first network slice to the first access network device. In a possible implementation, the processing module 3101 is further configured to store identification information of the first network slice; the transceiver module 3102 is further configured to receive indication information from the terminal; and the processing module 3101 is further configured to delete the identification information of the first network slice based on the indication information.

In some implementation scenarios, the processing module 3101 is configured to determine a first network slice, where the first network slice does not belong to a network slice that the terminal is allowed to access in a first cell, and a registration area of the terminal includes the first cell and a second cell; the processing module 3101 is further configured to determine that the first network slice is available in the third cell, where physical coverage of the third cell partially or completely overlaps physical coverage of the second cell; the transceiver module 3102 is configured to notify the terminal that the first network slice is available in the third cell; and the transceiver module 3102 is further configured to send a cell identifier of the third cell to the terminal.

All related content of the steps in the foregoing method embodiments may be cited in function descriptions of a corresponding functional module. Details are not described herein again.

In this application, the network device 310 is presented in a form of dividing functional modules in an integrated manner. The "module" herein may be an application-specific integrated circuit (ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the network device 310 may be in a form of the communication device 1000 shown in FIG. 10.

In an example, a function/implementation process of the processing module 3101 in FIG. 31 may be implemented by the processor 1001 in the communication device 1000 shown in FIG. 10 by invoking the computer-executable instructions stored in the memory 1003. A function/implementation process of the transceiver module 3102 in FIG. 31 may be implemented via the communication interface 1004 in the communication device 1000 shown in FIG. 10.

In some embodiments, when the network device 310 in FIG. 31 is a chip or a chip system, a function/implementation process of the transceiver module 3102 may be implemented via an input/output interface (or a communication interface) of the chip or the chip system, and a function/implementation process of the processing module 3101 may be implemented through a processor (or a processing circuit) of the chip or the chip system.

The network device 310 provided in this embodiment may perform the foregoing network slice-based communication method. Therefore, for technical effects that can be achieved by the network device, refer to the foregoing method embodiments. Details are not described herein again.

For example, the communication apparatus is the terminal in the foregoing method embodiments.

FIG. 32 is a schematic diagram of a structure of a terminal 320. The terminal 320 includes a processing module 3201 and a transceiver module 3202.

In some embodiments, the terminal 320 may further include a storage module (not shown in FIG. 32), configured to store program instructions and data.

In some embodiments, the transceiver module 3202 may also be referred to as a transceiver unit, and is configured to implement a sending function and/or a receiving function. The transceiver module 3202 may include a transceiver circuit, a transceiver machine, a transceiver, or a communication interface.

In some embodiments, the transceiver module 3202 may include a receiving module and a sending module, respectively configured to perform receiving-type steps and sending-type steps performed by the terminal in the foregoing method embodiments, and/or configured to support another process of the technology described in this specification; and the processing module 3201 may be configured to perform processing-type (for example, determining and obtaining) steps performed by the terminal in the foregoing method embodiments, and/or configured to support another process of the technology described in this specification.

Specifically, the transceiver module 3202 is configured to learn, from a network device, that a first network slice is available in a second cell, where the first network slice does not belong to a network slice that the terminal is allowed to access in a first cell, and a registration area of the terminal includes the first cell and the second cell; and the processing module 3201 is configured to initiate a registration procedure for an application corresponding to the first network slice.

In a possible implementation, the transceiver module 3202 is further configured to receive a cell identifier from the network device, where the cell identifier is used for the second cell.

In a possible implementation, that the processing module 3201 is configured to initiate the registration procedure for the application corresponding to the first network slice includes: The processing module 3201 is configured to access a second cell; and the processing module 3201 is further configured to initiate the registration procedure for the application via the second cell.

In a possible implementation, that the processing module 3201 is configured to initiate the registration procedure for the application corresponding to the first network slice includes: In response to that a context of the terminal does not include a session used for the application and does not include a route selection policy used for the application, in a possible implementation, the processing module 3201 is configured to determine whether the first network slice is a network slice corresponding to the application; and the processing module 3201 is configured to initiate the registration procedure for the application when the first network slice is the network slice corresponding to the application.

In a possible implementation, the transceiver module 3202 is further configured to notify the network device that the terminal no longer requests to access the first network slice.

All related content of the steps in the foregoing method embodiments may be cited in function descriptions of a corresponding functional module. Details are not described herein again.

In this application, the terminal 320 is presented in a form of dividing functional modules in an integrated manner. The "module" herein may be an application-specific integrated circuit (ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the terminal 320 may be in a form of the communication device 1000 shown in FIG. 10. In an example, a function/implementation process of the processing module 3201 in FIG. 32 may be implemented by the processor 1001 in the communication device 1000 shown in FIG. 10 by invoking the computer-executable instructions stored in the memory 1003. A function/implementation process of the transceiver module 3202 in FIG. 32 may be implemented via the communication interface 1004 in the communication device 1000 shown in FIG. 10.

In some embodiments, when the terminal 320 in FIG. 32 is a chip or a chip system, a function/implementation process of the transceiver module 3202 may be implemented through an input/output interface (or a communication interface) of the chip or the chip system, and a function/implementation process of the processing module 3201 may be implemented through a processor (or a processing circuit) of the chip or the chip system.

The terminal 320 provided in this embodiment may perform the foregoing network slice-based communication method. Therefore, for technical effects that can be achieved by the terminal, refer to the foregoing method embodiments. Details are not described herein again.

In a possible product form, the network device and the terminal in embodiments of this application may be further implemented through the following: one or more field programmable gate arrays (FPGAs), programmable logic devices (PLDs), controllers, state machines, gate logic, discrete hardware components, any other suitable circuitry, or any combination of circuits capable of performing various functions described throughout this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

In some embodiments, an embodiment of this application further provides a communication apparatus (for example, the communication apparatus may be a chip or a chip system). The communication apparatus includes an interface circuit and a logic circuit. The interface circuit is configured to obtain input information and/or output output information; and the logic circuit is configured to perform the method in any one of the foregoing method embodiments, to perform processing based on input information and/or generate output information.

When the communication apparatus is configured to implement a function of the network device in the foregoing method embodiments:
In some implementation scenarios, in a possible implementation, the input information may be information about a network slice that the terminal requests to access, where the information about the network slice that the terminal requests to access includes identification information of a first network slice not supported by a first tracking area and includes identification information of a second network slice. The performing processing based on input information may be: determining a network slice that the terminal is allowed to access, or determining a registration area.

In a possible implementation, the output information may be information about a registration area, where the registration area excludes a tracking area that supports the first network slice and the second network slice, or the registration area excludes a tracking area of an access network device that supports the first network slice and the second network slice.

In some implementation scenarios, in a possible implementation, the output information may be information for notifying the terminal that the first network slice is available in the second cell.

In a possible implementation, the input information may be information about a network slice that the terminal requests to access, where the information about the network slice that the terminal requests to access includes identification information of the first network slice. The performing processing based on input information may be: determining a network slice that the terminal is allowed to access, or determining that the first network slice does not belong to a network slice that the terminal is allowed to access in the first cell.

In a possible implementation, the output information may be: identification information of the first network slice.

In a possible implementation, the input information may be information used by the network device to learn that the terminal can access the first network slice in the second cell. The performing processing based on input information may be: learning that the terminal can access the first network slice in the second cell.

In a possible implementation, the input information may be: a path switch request message. The performing processing based on input information may be: determining that the first network slice is available in the second cell.

In a possible implementation, the input information may be: a handover required message. The performing processing based on input information may be: determining that the first network slice is available in the second cell.

In a possible implementation, the input information may be: indication information. The performing processing based on input information may be: deleting the identification information of the first network slice based on the indication information.

In some implementation scenarios, in a possible implementation, the output information may be information for notifying the terminal that the first network slice is available in the second cell, and a cell identifier of the second cell.

In a possible implementation, the input information may be information about a network slice that the terminal requests to access, where the information that the terminal requests to access includes identification information of the first network slice. The performing processing based on input information may be: determining a network slice that the terminal is allowed to access, and learning that the first network slice does not belong to a network slice that the terminal is allowed to access in the first cell.

In a possible implementation, the input information may be: a cell identifier of the second cell.

The performing processing based on input information may be: determining that the first network slice is available in the second cell.

In a possible implementation, the input information may be: signal quality information of a neighboring cell of the first cell, where the neighboring cell of the first cell includes the second cell. The performing processing based on input information may be: determining, based on the signal quality information of the second cell, that the terminal can access the first network slice in the second cell.

In a possible implementation, the output information may be: reference frequency information corresponding to the first network slice.

In a possible implementation, the input information may be: indication information. The performing processing based on input information may be: deleting the identification information of the first network slice based on the indication information.

When the communication apparatus is configured to implement a function of the terminal in the foregoing method embodiments:
In a possible implementation, the input information may be information for learning that the first network slice is available in the second cell. The performing processing based on input information may be: initiating a registration procedure for an application corresponding to the first network slice.

In a possible implementation, the input information may be: a cell identifier, where the cell identifier is used for the second cell. The performing processing based on input information may be: accessing the second cell.

In a possible implementation, the output information may be information for notifying that the terminal no longer requests to access the first network slice.

The communication apparatus provided in this embodiment may perform the method in the foregoing method embodiments. Therefore, for technical effects that can be achieved by the communication apparatus, refer to the foregoing method embodiments. Details are not described herein again.

In a possible product form, the network device and the terminal in embodiments of this application may be implemented through a general bus architecture.

For ease of description, refer to FIG. 33. FIG. 33 is a schematic diagram of a structure of a communication apparatus 3300 according to an embodiment of this application. The communication apparatus 3300 includes a processor 3301 and a transceiver 3302. The communication apparatus 3300 may be a network device, a terminal, or a chip in a network device or a terminal. FIG. 33 shows only main components of the communication apparatus 3300. In addition to the processor 3301 and the transceiver 3302, the communication apparatus may further include a memory 3303 and an input/output apparatus (not shown in the figure).

The processor 3301 is mainly configured to: process a communication protocol and communication data, control the entire communication apparatus, execute a software program, and process data of the software program. The memory 3303 is mainly configured to store the software program and data. The transceiver 3302 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus is, for example, a touchscreen, a display, or a keyboard, and is mainly configured to: receive data entered by a user and output data to the user.

The processor 3301, the transceiver 3302, and the memory 3303 may be connected through a communication bus.

After the communication apparatus is powered on, the processor 3301 may read the software program in the memory 3303, interpret and execute instructions of the software program, and process the data of the software program. When data needs to be sent wirelessly, the processor 3301 performs baseband processing on the data to be sent, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 3301. The processor 3301 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Steps in a method in embodiments of this application may be adjusted in terms of sequence, combined, or deleted based on an actual requirement.

Modules in an apparatus in embodiments of this application may be combined, divided, or deleted based on an actual requirement.

All or some of the foregoing embodiments may be implemented through software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on the computer, the processes or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like. In embodiments of this application, the computer may include the apparatus described above.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the term "comprising" does not exclude another component or another step, and "a" or "one" does not exclude a case of plurality. A single processor or another unit may implement several functions enumerated in the claims. Some measures are recorded in dependent claims that are different from each other, but this does not indicate that these measures cannot be combined to produce a better effect.

Although this application has been described with reference to specific features and embodiments thereof, it is obvious that various modifications and combinations may be made to this application without departing from the spirit and scope of this application. Correspondingly, the specification and the accompanying drawings are merely example descriptions of this application defined in the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A network slice-based communication method, wherein the method comprises:
determining, by a network device, a network slice that a terminal is allowed to access and a network slice that the terminal is rejected to access;
determining, by the network device, a registration area of the terminal based on the network slice that the terminal is allowed to access and the network slice that the terminal is rejected to access; and
sending, by the network device, information about the registration area to the terminal.

2. The method according to claim 1, wherein the method further comprises:
receiving, by the network device via a first access network device in a first network, information about a network slice that the terminal requests to access, wherein the information about the network slice that the terminal requests to access comprises identification information of a first network slice not supported by a first tracking area and comprises identification information of a second network slice supported by the first tracking area, and the first tracking area is a tracking area of the first access network device;
the network slice that the terminal is allowed to access comprises the second network slice, and the network slice that the terminal is rejected to access comprises the first network slice; and
the registration area excludes a tracking area that supports the first network slice and the second network slice, or the registration area excludes a tracking area of an access network device that supports the first network slice and the second network slice.

3. The method according to claim 2, wherein the first network slice is a network slice that the terminal is allowed to access in the first network.

4. The method according to claim 2 or 3, wherein the method further comprises:
determining, by the network device, a network slice supported by the tracking area of the first access network device.

5. A network slice-based communication method, wherein the method comprises:
receiving, by a network device via a first access network device in a first network, information about a network slice that a terminal requests to access, wherein the information about the network slice that the terminal requests to access comprises identification information of a first network slice not supported by a first tracking area and comprises identification information of a second network slice, the first tracking area is a tracking area of the first access network device, and a second tracking area in the first network supports the first network slice;
determining, by the network device, a network slice that the terminal is allowed to access, wherein the network slice that the terminal is allowed to access comprises the second network slice;
determining, by the network device, a registration area, wherein the registration area excludes a tracking area that supports the first network slice and the second network slice, or the registration area excludes a tracking area of an access network device that supports the first network slice and the second network slice; and
sending, by the network device, information about the registration area to the terminal.

6. A network slice-based communication method, wherein the method comprises:
learning, by a terminal from a network device, that a first network slice is available in a second cell, wherein the first network slice does not belong to a network slice that the terminal is allowed to access in a first cell, and a registration area of the terminal comprises the first cell and the second cell; and
initiating, by the terminal, a registration procedure for an application corresponding to the first network slice.

7. The method according to claim 6, wherein the first network slice is comprised in a network slice configured for the terminal in a first network.

8. The method according to claim 6 or 7, wherein the first network slice is comprised in a network slice that the terminal requests to access in the first cell.

9. The method according to any one of claims 6 to 8, wherein the method further comprises:
receiving, by the terminal, a cell identifier from the network device, wherein the cell identifier is used for the second cell.

10. The method according to claim 9, wherein the initiating, by the terminal, a registration procedure for an application corresponding to the first network slice comprises:
accessing, by the terminal, the second cell; and
initiating, by the terminal, the registration procedure for the application via the second cell.

11. The method according to any one of claims 6 to 10, wherein the initiating, by the terminal, a registration procedure for an application corresponding to the first network slice comprises:
determining, by the terminal, whether the first network slice is a network slice corresponding to the application in response to that a context of the terminal does not comprise a session used for the application and does not comprise a route selection policy used for the application; and
initiating, by the terminal, the registration procedure for the application when the first network slice is the network slice corresponding to the application.

12. The method according to any one of claims 6 to 11, wherein the method further comprises:
notifying, by the terminal, the network device that the terminal no longer requests to access the first network slice.

13. A network slice-based communication method, comprising:
determining, by a network device, a first network slice, wherein the first network slice does not belong to a network slice that a terminal is allowed to access in a first cell, and a registration area of the terminal comprises the first cell and a second cell;
determining, by the network device when the terminal is handed over from the first cell to the second cell, that the first network slice is available in the second cell; and
notifying, by the network device, the terminal that the first network slice is available in the second cell.

14. The method according to claim 13, wherein the first network slice is comprised in a network slice configured for the terminal in a first network.

15. The method according to claim 13 or 14, wherein the first network slice is comprised in a network slice that the terminal requests to access in the first cell.

16. The method according to any one of claims 13 to 15, wherein the first cell belongs to a first access network device, and the second cell belongs to a second access network device; or
the first cell and the second cell belong to a first access network device.

17. The method according to claim 16, wherein the network device is a mobility management device.

18. The method according to claim 17, wherein the determining, by a network device, a first network slice comprises:
receiving, by the network device via the first cell, information about a network slice that the terminal requests to access, wherein the information about the network slice that the terminal requests to access comprises identification information of the first network slice;
determining, by the network device, a network slice that the terminal is allowed to access; and
learning, by the network device, that the first network slice does not belong to the network slice that the terminal is allowed to access in the first cell.

19. The method according to claim 16 or 17, wherein when the second cell belongs to the second access network device, a target access network device is the second access network device; or when the second cell belongs to the first access network device, a target access network device is the first access network device.

20. The method according to claim 19, wherein the determining, by the network device, that the first network slice is available in the second cell comprises:
querying, by the network device, a context of the target access network device, wherein the context of the target access network device indicates that a tracking area of the target access network device supports the first network slice, wherein the second cell is a cell in the tracking area of the target access network device.

21. The method according to claim 19 or 20, wherein the determining, by the network device, that the first network slice is available in the second cell comprises:
sending, by the network device, identification information of the first network slice to the target access network device; and
learning, by the network device from the target access network device, that the first network slice can access the terminal in the second cell.

22. The method according to any one of claims 19 to 21, wherein when the second cell belongs to the second access network device, the determining, by the network device, that the first network slice is available in the second cell comprises:
determining, by the network device when receiving a path switch request message from the second access network device, that the first network slice is available in the second cell; or
determining, by the network device when receiving a handover required message from the first access network device, that the first network slice is available in the second cell, wherein the handover required message comprises an identifier of the second access network device.

23. The method according to any one of claims 17 to 22, wherein the method further comprises:
storing, by the network device, the identification information of the first network slice;
receiving, by the network device, indication information from the terminal after the network device notifies the terminal that the first network slice is available in the second cell; and
deleting, by the network device, the identification information of the first network slice based on the indication information.

24. The method according to claim 23, wherein the indication information indicates that the terminal no longer requests to access the first network slice.

25. The method according to claim 16, wherein when the second cell belongs to the second access network device, the network device is the second access network device; or
when the second cell belongs to the first access network device, the network device is the first access network device.

26. The method according to claim 25, wherein when the second cell belongs to the first access network device, the determining, by a network device, a first network slice comprises:
sending, by the network device to a mobility management device, information about a network slice that the terminal requests to access, wherein the information about the network slice that the terminal requests to access comprises identification information of the first network slice; and
learning, by the network device from the mobility management device, that the first network slice does not belong to a network slice that the terminal is allowed to access in the first cell.

27. A communication apparatus, comprising: a processor, wherein
the processor is configured to read a program from a memory and run the program, to implement the method according to any one of claims 1 to 4, implement the method according to claim 5, or implement the method according to any one of claims 13 to 26.

28. A communication apparatus, comprising: a processor, wherein
the processor is configured to read a program from a memory and run the program, to implement the method according to any one of claims 6 to 12.

29. A computer program product comprising instructions, wherein when the instructions are run on a computer, the computer is enabled to perform the method according to any one of claims 1 to 26.

30. A computer-readable storage medium, wherein the computer-readable storage medium stores instructions, and when the instructions are run on a computer, a processor is enabled to perform the method according to any one of claims 1 to 26.

31. A computer program, wherein when the computer program runs on a communication apparatus, the method according to any one of claims 1 to 26 is performed.

32. A communication apparatus, wherein the communication apparatus comprises: a logic circuit and an interface circuit;
the interface circuit is configured to obtain input information and/or output output information; and
the logic circuit is configured to perform the method according to any one of claims 1 to 4, configured to perform the method according to claim 5, or configured to perform the method according to any one of claims 13 to 26, to process the information input through the interface circuit and/or generate the information output through the interface circuit.

33. A communication apparatus, wherein the communication apparatus comprises: a logic circuit and an interface circuit;
the interface circuit is configured to obtain input information and/or output output information; and
the logic circuit is configured to perform the method according to any one of claims 6 to 12, to process the information input through the interface circuit and/or generate the information output through the interface circuit.

## Amended claims

### Amended claims under Art. 19.1 PCT

1. A network slice-based communication method, wherein the method comprises:
determining, by a network device, a network slice that a terminal is allowed to access and a network slice that the terminal is rejected to access;
determining, by the network device, a registration area of the terminal based on the network slice that the terminal is allowed to access and the network slice that the terminal is rejected to access; and
sending, by the network device, information about the registration area to the terminal.

2. The method according to claim 1, wherein the network slice that the terminal is rejected to access comprises a first network slice, the network slice that the terminal is allowed to access comprises a second network slice, and the registration area excludes a tracking area that supports both the first network slice and the second network slice, or the registration area excludes a tracking area of an access network device that supports both the first network slice and the second network slice.

3. The method according to claim 2, wherein the first network slice is a network slice not supported by the current tracking area.

4. The method according to claim 1, wherein the method further comprises:
receiving, by the network device via a first access network device in a first network, information about a network slice that the terminal requests to access, wherein the information about the network slice that the terminal requests to access comprises identification information of a first network slice not supported by a first tracking area and comprises identification information of a second network slice supported by the first tracking area, and the first tracking area is a tracking area of the first access network device;
the network slice that the terminal is allowed to access comprises the second network slice, and the network slice that the terminal is rejected to access comprises the first network slice; and
the registration area excludes a tracking area that supports the first network slice and the second network slice, or the registration area excludes a tracking area of an access network device that supports the first network slice and the second network slice.

5. The method according to claim 4, wherein the first network slice is a network slice that the terminal is allowed to access in the first network.

6. The method according to claim 4 or 5, wherein the method further comprises:
determining, by the network device, a network slice supported by the tracking area of the first access network device.

7. A network slice-based communication method, wherein the method comprises:
learning, by a terminal from a network device, that a first network slice is available in a second cell or a tracking area in which a second cell is located, wherein the first network slice does not belong to a network slice that the terminal is allowed to access in a tracking area in which a first cell is located, and a registration area of the terminal comprises the first cell and the second cell; and
initiating, by the terminal, a registration procedure for an application corresponding to the first network slice.

8. The method according to claim 7, wherein the first network slice is comprised in a network slice configured for the terminal in a first network.

9. The method according to claim 7 or 8, wherein the first network slice is comprised in a network slice that the terminal requests to access in the first cell.

10. The method according to any one of claims 7 to 9, wherein the method further comprises:
receiving, by the terminal, a cell identifier from the network device, wherein the cell identifier is used for the second cell.

11. The method according to claim 10, wherein the initiating, by the terminal, a registration procedure for an application corresponding to the first network slice comprises:
accessing, by the terminal, the second cell; and
initiating, by the terminal, the registration procedure for the application via the second cell.

12. The method according to any one of claims 7 to 11, wherein the initiating, by the terminal, a registration procedure for an application corresponding to the first network slice comprises:
determining, by the terminal, whether the first network slice is a network slice corresponding to the application in response to that a context of the terminal does not comprise a session used for the application and does not comprise a route selection policy used for the application; and
initiating, by the terminal, the registration procedure for the application when the first network slice is the network slice corresponding to the application.

13. The method according to any one of claims 7 to 12, wherein the method further comprises:
notifying, by the terminal, the network device that the terminal no longer requests to access the first network slice.

14. A network slice-based communication method, comprising:
determining, by a network device, a first network slice, wherein the first network slice does not belong to a network slice that a terminal is allowed to access in a tracking area in which a first cell is located, and a registration area of the terminal comprises the first cell and a second cell;
determining, by the network device when the terminal is handed over from the first cell to the second cell, that the first network slice is available in the second cell or a tracking area in which the second cell is located; and
notifying, by the network device, the terminal that the first network slice is available in the second cell or the tracking area in which the second cell is located.

15. The method according to claim 14, wherein the notifying, by the network device, the terminal that the first network slice is available in the second cell or the tracking area in which the second cell is located comprises:
sending, by the network device, identification information of the first network slice to the terminal.

16. The method according to claim 15, wherein the notifying, by the network device, the terminal that the first network slice is available in the second cell or the tracking area in which the second cell is located further comprises:
sending, by the network device, a cell identifier to the terminal, wherein the cell identifier is used for the second cell.

17. The method according to any one of claims 14 to 16, wherein the first network slice is comprised in a network slice configured for the terminal in a first network.

18. The method according to any one of claims 14 to 17, wherein the first network slice is comprised in a network slice that the terminal requests to access in the first cell.

19. The method according to any one of claims 14 to 18, wherein the first cell belongs to a first access network device, and the second cell belongs to a second access network device; or
the first cell and the second cell belong to a first access network device.

20. The method according to claim 19, wherein the network device is a mobility management device.

21. The method according to claim 20, wherein the determining, by a network device, a first network slice comprises:
receiving, by the network device via the first cell, information about a network slice that the terminal requests to access, wherein the information about the network slice that the terminal requests to access comprises identification information of the first network slice;
determining, by the network device, a network slice that the terminal is allowed to access; and
learning, by the network device, that the first network slice does not belong to the network slice that the terminal is allowed to access in the first cell.

22. The method according to claim 19 or 20, wherein when the second cell belongs to the second access network device, a target access network device is the second access network device; or when the second cell belongs to the first access network device, a target access network device is the first access network device.

23. The method according to claim 22, wherein the determining, by the network device, that the first network slice is available in the second cell or the tracking area in which the second cell is located comprises:
querying, by the network device, a context of the target access network device, wherein the context of the target access network device indicates that a tracking area of the target access network device supports the first network slice, wherein the second cell is a cell in the tracking area of the target access network device.

24. The method according to claim 22 or 23, wherein the determining, by the network device, that the first network slice is available in the second cell or the tracking area in which the second cell is located comprises:
sending, by the network device, identification information of the first network slice to the target access network device; and
learning, by the network device from the target access network device, that the first network slice can access the terminal in the second cell.

25. The method according to any one of claims 22 to 24, wherein when the second cell belongs to the second access network device, the determining, by the network device, that the first network slice is available in the second cell or the tracking area in which the second cell is located comprises:
determining, by the network device when receiving a path switch request message from the second access network device, that the first network slice is available in the second cell; or
determining, by the network device when receiving a handover required message from the first access network device, that the first network slice is available in the second cell, wherein the handover required message comprises an identifier of the second access network device.

26. The method according to any one of claims 20 to 25, wherein the method further comprises:
storing, by the network device, the identification information of the first network slice;
receiving, by the network device, indication information from the terminal after the network device notifies the terminal that the first network slice is available in the second cell; and
deleting, by the network device, the identification information of the first network slice based on the indication information.

27. The method according to claim 26, wherein the indication information indicates that the terminal no longer requests to access the first network slice.

28. The method according to claim 19, wherein when the second cell belongs to the second access network device, the network device is the second access network device; or
when the second cell belongs to the first access network device, the network device is the first access network device.

29. The method according to claim 28, wherein when the second cell belongs to the first access network device, the determining, by a network device, a first network slice comprises:
sending, by the network device to a mobility management device, information about a network slice that the terminal requests to access, wherein the information about the network slice that the terminal requests to access comprises identification information of the first network slice; and
learning, by the network device from the mobility management device, that the first network slice does not belong to a network slice that the terminal is allowed to access in the first cell.

30. A network slice-based communication method, wherein the method comprises:
receiving, by a terminal, information about a registration area of the terminal from a network device, wherein a network slice that the terminal is rejected to access comprises a first network slice, a network slice that the terminal is allowed to access comprises a second network slice, and the registration area excludes a tracking area that supports both the first network slice and the second network slice, or the registration area excludes a tracking area of an access network device that supports both the first network slice and the second network slice; and
re-initiating, by the terminal when the terminal moves into an excluded tracking area, a registration procedure to request to access the first network slice, wherein the excluded tracking area supports the first network slice.

31. A communication apparatus, comprising: a processor, wherein
the processor is configured to read a program from a memory and run the program, to implement the method according to any one of claims 1 to 6 or implement the method according to any one of claims 14 to 29.

32. A communication apparatus, comprising: a processor, wherein
the processor is configured to read a program from a memory and run the program, to implement the method according to any one of claims 7 to 13 or implement the method according to claim 30.

33. A computer program product comprising instructions, wherein when the instructions are run on a computer, the computer is enabled to perform the method according to any one of claims 1 to 30.

34. A computer-readable storage medium, wherein the computer-readable storage medium stores instructions, and when the instructions are run on a computer, a processor is enabled to perform the method according to any one of claims 1 to 30.

35. A computer program, wherein when the computer program runs on a communication apparatus, the method according to any one of claims 1 to 30 is performed.

36. A communication apparatus, wherein the communication apparatus comprises: a logic circuit and an interface circuit;
the interface circuit is configured to obtain input information and/or output output information; and
the logic circuit is configured to perform the method according to any one of claims 1 to 6 or configured to perform the method according to any one of claims 14 to 29, to process the information input through the interface circuit and/or generate the information output through the interface circuit.

37. A communication apparatus, wherein the communication apparatus comprises: a logic circuit and an interface circuit;
the interface circuit is configured to obtain input information and/or output output information; and
the logic circuit is configured to perform the method according to any one of claims 7 to 13, to process the information input through the interface circuit and/or generate the information output through the interface circuit, or configured to perform the method according to claim 30.
